(19) Europäisches Patentamt
European Patent Office
Office européen des brevets

(11) EP 3 080 170 B1

(12) **EUROPEAN PATENT SPECIFICATION**

(45) Date of publication and mention of the grant of the patent:
**05.02.2020 Bulletin 2020/06**

(21) Application number: **14869856.6**

(22) Date of filing: **12.12.2014**

(51) Int Cl.:
***C08F 32/08*** *(2006.01)* ***C08G 59/40*** *(2006.01)*
***C08J 3/24*** *(2006.01)*

(86) International application number:
**PCT/CA2014/051201**

(87) International publication number:
**WO 2015/085428 (18.06.2015 Gazette 2015/24)**

(54) **INSERTION POLYNORBORNENE-BASED THERMOSET RESINS**

WÄRMEHÄRTBARE HARZE AUF INSERTIONSPOLYNORBORNENBASIS

RÉSINES THERMODURCIES À BASE DE POLYNORBORNÈNE D'INSERTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2013 US 201361915577 P**

(43) Date of publication of application:
**19.10.2016 Bulletin 2016/42**

(73) Proprietor: **Transfert Plus, S.E.C.**
**Montréal, Québec H3C 2G9 (CA)**

(72) Inventors:
- **CLAVERIE, Jérome**
  **Mont St-Hillaire, Québec J3G 4S6 (CA)**
- **COMMARIEU, Basile**
  **Montréal, Québec H2W 2M4 (CA)**

(74) Representative: **Brevalex**
**95, rue d'Amsterdam**
**75378 Paris Cedex 8 (FR)**

(56) References cited:
**CA-A1- 2 221 833**
**US-A1- 2004 039 153**
**US-A1- 2005 182 218**
**US-A1- 2006 041 093**
**US-A1- 2009 185 003**
**US-A1- 2011 070 543**

- **MARC D. WALTER ET AL: "Vinyl addition polymerization of norbornene with cationic (allyl)Ni catalysts: Mechanistic insights and characterization of first insertion products", JOURNAL OF POLYMER SCIENCE, PART A: POLYMER CHEMISTRY, vol. 47, no. 10, 15 May 2009 (2009-05-15), pages 2560-2573, XP055386059, ISSN: 0887-624X, DOI: 10.1002/pola.23340**
- **APRIL D. HENNIS ET AL: "Novel, Efficient, Palladium-Based System for the Polymerization of Norbornene Derivatives:? Scope and Mechanism", ORGANOMETALLICS, vol. 20, no. 13, 1 June 2001 (2001-06-01), pages 2802-2812, XP055386125, US ISSN: 0276-7333, DOI: 10.1021/om010232m**
- **Mehrsa Raeiszadeh: "PATTERNING AND CROSS-LINKING OF FUNCTIONALIZED POLYNORBORNENE POLYMERS", , 1 May 2012 (2012-05-01), XP055420978, ISBN: 978-1-267-77015-8 Retrieved from the Internet: URL:https://media.proquest.com/media/pq/classic/doc/2832587231/fmt/ai/rep/NPDF?hl=&cit:auth=Raeiszadeh,+Mehrsa&cit:title=Patterning+and+cross-linking+of+functionalized+polynorbornene+polymers&cit:pub=ProQuest+D issertations+and+Theses&cit:vol=&cit:iss=&cit:pg=&cit:date=2012&ic=true&cit:prod=ProQuest+Diss [retrieved on 2017-11-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 080 170 B1

- PUNIT CHINIWALLA ET AL: "Crosslinking and decomposition reactions of epoxide functionalized polynorbornene. Part I. FTIR and thermogravimetric analysis", JOURNAL OF APPLIED POLYMER SCIENCE, vol. 89, no. 2, 11 July 2003 (2003-07-11), pages 568-577, XP055420955, US ISSN: 0021-8995, DOI: 10.1002/app.12234
- BRENNEN K. MUELLER ET AL.: 'Chemically Amplified, Positive Tone, Polynorbnene Dielectric for Microelectronics Packaging' ECS JOURNAL OF SOLID STATE SCIENCE AND TECHNOLOGY vol. 4, no. 1, 2015, pages N3001 - N3007, XP055349737
- JOICE P. MATHEW ET AL.: 'eta3-Allyl)palladium(II) Nitrile Catalysts for the Addition Polymerization of Norbornene Derivatives with Functional Groups' MACROMOLECULES vol. 29, 1996, pages 2755 - 2763, XP000559653
- ABRAHAM CHEMTOB ET AL.: 'Catalytic Insertion Polymerization of Norbornene in Miniemulsion' MACROMOLECULES vol. 38, 2005, pages 6796 - 6805, XP055349740
- BINYUAN LIU ET AL.: 'Pd (II)-Catalyzed Vinyl Addition Polymerization of Novel Functionalized Norbornene Bearing Dimethyl Cabroxylate' JOURNAL OF POLYMER SCIENCE : PART A: POLYMER CHEMISTRY vol. 45, 2007, pages 3391 - 3399, XP055349743
- MEHRSA RAEIS-ZADEH ET AL.: 'Cross-linking of Aqueous Base-Developable, Photosensitive Polynorbornene' JOURNAL OF APPLIED POLYMER SCIENCE vol. 120, 2011, pages 1916 - 1925, XP055349745
- W. C. MCDOUGALL ET AL.: 'Avatrel? Dielectric Polymers for HDP Applications' PROCEEDINGS OF INTERNATIONAL CONFERENCE & EXHIBITION ON HIGH DENSITY INTERCONNECT AND SYSTEMS PACKAGING April 1999, DENVER , COLORADO, XP007903858

## Description

### CROSS REFERENCE TO RELATED APPLICATIONS

This application claims priority, under 35 U.S.C. § 119(e), of U.S. provisional application serial No. 61,915,577 filed on December 13, 2013.

### FIELD OF THE INVENTION

The present invention relates to insertion polynorbornenes-based thermoset resins. More specifically, the present invention is concerned with functional norbornene monomers, insertion homo- and co-polynorbornenes comprising these monomers, and thermoset resins based on these functional insertion polynorbornenes.

### BACKGROUND OF THE INVENTION

Industrial thermosets include melamine formaldehyde, urea formaldehyde, polyesters, phenolic resins, alkyds, polyurethanes, epoxy resins, and the like. These resins are widely used in a myriad applications such as adhesives, protective and decorative coatings, paints, inks, fibers, films, plastic composites, elastomers, and structural plastics.

Among the above-cited thermosets, epoxy resins occupy a preponderant position. They are widely used, *inter alia,* for example in appliances, automobiles, marine applications, industrial coatings, decorative coatings such as topcoats or primers, industrial tooling and composites, semiconductor encapsulation, 3D printing, printed circuit boards and aerospace components. They are used as adhesives, reinforcement materials, sealants, coatings, 3D printing and electronic encapsulation matrix. Numerous state-of-the-art or mundane technologies rely on epoxy resins. For example, all electronic components are surrounded (encapsulated) in a black structure made of epoxy (so called electronic epoxy). Composite piece in airplanes, trains or cars are glued to a metallic frame with an epoxy (so called structural epoxy). Currently, the best anti-corrosion coatings are epoxy coatings.

As with other polymeric resins, epoxy resins are often used as blends and/or formulated with various additives and fillers in order to achieve desired processing properties or final properties. Additives include, for example, antioxidants, viscosity modifiers, processing aids, releasing agents, flame-retardants, dyes, pigments, and UV-stabilizers. Epoxy resins can also be reinforced with fibers, such as glass fibers, carbon fibers, and more recently carbon nanotubes.

Epoxy thermoset resins comprise a reactive prepolymer or polymer containing epoxide functionalities (also called oxirane functionalities) and a crosslinker, which can react with the epoxide functionalities to lead to the formation of a 3D network. The crosslinker is also referred to as a hardener or curative agent. The cross-linking reaction is referred to as curing. Curing can be performed under the action of heat, in the presence of a catalyst or not, or under the action of light (referred as photocuring).

The most common and important class of epoxy resins is based on bisphenol A diglycidyl ether (BADGE), which is obtained by reacting bisphenol A (BPA) with epichlorhydrin (see Figure 1). Other bisphenols can also be used in making epoxy resins. Several of these bisphenols, and most notably BPA are endocrine disruptors and therefore are considered as potentially toxic by several public health organizations. In fact, in 2010, Canada became the first country to declare bisphenol A a toxic substance, which led to the ban of some polycarbonate products. Evidence is accumulating that BPA can leach out of epoxy resins, when exposed to humid aerobic environments for prolonged periods (such as in landfills).

Thus, in view of its perceived and potential toxicity, it is advantageous to prepare epoxy resins that are free of bisphenols.

Aliphatic epoxy resins are known to be free of bisphenols. Two main types of such aliphatic resins exist.

- First, glycidyl epoxy resins are formed by reaction of epichlorhydrin with aliphatic polyols or polycarboxylic acids to yield multivalent glycidyl ethers and glycidyl esters. Representative structures of this class of products are butanediol diglycidyl ether and trimethylolpropane triglycidyl ether.
- Secondly, cycloaliphatic epoxys can be formed by epoxydation of cyclic monomers, whereby the epoxide functionality is not necessarily introduced upon reaction with epichlorhydrin, thus offering a production route for an epoxy monomer that is chlorine free.

However, aliphatic epoxys often do not have mechanical and thermal resistances comparable to those offered by bisphenol based epoxys.

In general, high Tg resins are desired because a higher Tg is usually indicative of a higher chemical resistance and higher mechanical properties at elevated temperature. Although there is no exact delimitation between high and low Tg, the skilled artisan will recognize that an epoxy with a Tg higher than 200°C is an epoxy with a high Tg. The

molecular rigidity of the epoxy monomer before curing and that of the curing agent are factors influencing the Tg of the resin. Rigid-rod BPA monomers usually yielding resins with a higher Tg than flexible monomers. When a rigid-rod curing agent (such as 4,4'-diaminodiphenylsulfone (DDS)) is used, the physical properties of the cured epoxies are also improved compared to those of a comparable epoxy cured with a flexible curing agent.

Although extensive work has been done in improving the performance of epoxy resins as well as better understanding their structure-property relationships, the search for replacement feedstock to epoxy has been remarkably scarce in the last thirty years. Recently, it has been reported that epoxy resins free of bisphenol A can be prepared using a diglycidyl ether formed by reacting 2,2,4,4-tetramethyl-1,3-cyclobutanediol (CBDO) and epichlorohydrin. CBDO is an expensive chemical (around 20$ per gram), and therefore, this process would only apply to niche applications. Deriving from the pioneering work of Crivello, photocationic cured epoxys devoid of BPAs have also been developed, however, their use is also restricted to specialty markets (such as 3D printing) as the photocationic initiator is expensive, and it is impossible to photopolymerize objects of large dimensions.

On another subject, norbornene (NBE) is a bridged cyclic hydrocarbon of the following formula:

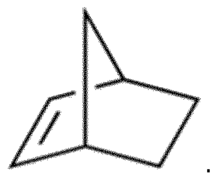

As can be seen above, this molecule consists of a cyclohexene ring with a methylene bridge between C-3 and C-6. The molecule carries a double bond (between C1 and C2), which induces significant ring strain and reactivity to this molecule.

Norbornene is an important monomer in ring-opening metathesis polymerizations (ROMP) with, for instance, the Grubbs' catalyst. This produces ROMP polynorbornene (ROMP-PNBE) of general formula:

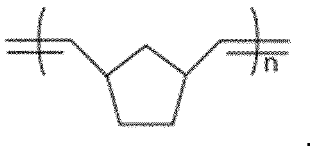

Norbornene can also be polymerized by vinyl polymerization to produce poly(bicyclo[2.2.1]hept-2-ene), which is commonly referred to as insertion polynorbornene, of general formula:

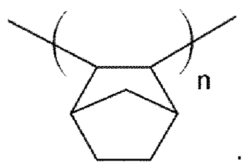

Insertion polynorbornene should not be mistaken with ROMP polynorbornene (even though the literature will often refer to either simply as "polynorbornene"). Whereas insertion polynorbornene is an aliphatic bicyclic polymer with a relatively high Tg and excellent thermal and oxidative stability, ROMP polynorbornene is monocyclic, comprises a reactive C=C double bond, and has a low stability and a low Tg. Insertion polynorbornene further has a rigid backbone that confers a tubular rigid conformation to this polymer.

In the article of Mehrsa Raeiszadeh (Patterning and Cross-linking of functionalized polynorbornene polylmers*),* the author reports having done the entirety of their research on Avatrel 8000P polymer. This polymer is described as being a copolymer of two norbornene *(NBE)* monomers: one containing $(CH_2)_n$-COOH *(R)* group, and the other containing fluorinated alkyl-OH (*RF*) group.

The vinyl polymerization of norbornene monomers with functional substituents, especially polar substituents, presents many challenges. Generally speaking, the functional group tend to poison the catalyst. The free electron pairs on the functional substituent (e.g., nitrogen and oxygen atoms in particular) can deactivate the catalyst by complexation with the active catalytic sites. Consequently, catalyst activity decreases and polymerization is inhibited. In addition, the stereoconfiguration of the substituents on the monomer plays a role in the conversion of monomer to polymer. It has been reported that the rate of polymerization of the *exo*·isomer of an ester functionalized norbornene produced substantially higher yields of polymer than the corresponding *endo*·isomer when polymerized in the presence of a transition

metal catalyst. This adds to the inherent difficulties of conventionally polymerizing functional norbornene monomers. Further, a relatively high catalyst loading (based on the Pd metal content) is necessary for the polymerization reaction to proceed efficiently. A higher catalyst loading in the monomer at the onset of the polymerization reaction, however, means that a higher residual metal content will be present in the polymer product. Residual metals can be difficult and expensive to remove. In fact, to the inventor's knowledge, there is currently no existing large-scale process allowing the homopolymerization of 100% endo functional norbornenes. Furthermore, the polymerization of monomers with high (but less than 100%) *endo* ratio always necessitates high catalyst loading.

## SUMMARY OF THE INVENTION

Herein below, unless otherwise indicated, polynorbornene refers to insertion polynorbornene, not to ROMP polynorbornene.

In accordance with the present invention, there is provided:

1. A thermoset resin comprising:

- at least one reactive compound bearing at least two functional groups F, identical or different from one another, per molecule,

- at least one hardener bearing at least two functional groups E, identical or different from one another, per molecule, said functional groups E being able to react with functional groups F to form a crosslink, and

- optionally a catalyst,

wherein the reactive compound is a small molecule or a polymer that is not an insertion polynorbornene and the hardener is an insertion polynorbornene comprising said at least two functional groups E, wherein the insertion polynorbornene is a homopolymer or a copolymer comprising repeat units of Formula 3 and/or Formula 4:

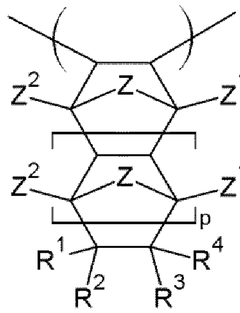

(3),

and

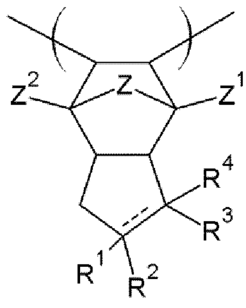

(4),

wherein:

- $Z^1$ and $Z^2$ are independently a hydrogen atom or a halogen atom, preferably a hydrogen atom;
- Z is $CR^5R^6$, O, NH, or $NR^7$, preferably $CR^5R^6$;
- $R^1$, $R^2$, $R^3$, and $R^4$ are independently a hydrogen atom or a functional substituent, with the proviso that at least one of $R^1$ to $R^4$ is a functional substituent;

◦ $R^5$ and $R^6$ are independently a hydrogen atom, an alkyl (preferably $C_{1-6}$ alkyl, such as methyl, ethyl, n-propyl, isopropyl, n-butyl, isobutyl, and pentyl), an halogen atom, or a (preferably $C_{1-6}$) alkyl group substituted with an OH group, preferably an hydrogen atom;
◦ $R^7$ is a hydrogen atom or an alkyl (preferably $C_{1-6}$ alkyl, such as methyl, ethyl, n-propyl, isopropyl, n-butyl, isobutyl, and pentyl), preferably an hydrogen atom; and

p varies from 0 to 10, preferably 0 or 1, more preferably 0,
wherein one or more of $R^1$ to $R^4$ is independently:

◦ $-R^8$,
◦ $-(CH_2)_n-YH$,
◦ $-(CH_2)_n-COOH$, wherein n is 0, provided that $Z_1$ and $Z_2$ are hydrogen atoms, Z is $CH_2$ and p is 0 or 1, preferably 0,
◦ $-(CH_2)_n-C(Y)-YR^8$,
◦ $-(CH_2)_n-YR^8$,
◦ $-(CH_2)_n-YC(Y)R^8$,
◦ $-(CH_2)_n-YC(Y)-YR^8$,
◦ $-(CH_2)_n-C(Y)R^8$,
◦ $-(CH_2)_n-Y-(CH_2)_n-YH$,
◦ $-(CH_2)_nYR^8$, or
◦ $-(CH_2)_n-NHR^8$,

wherein:
◦ Y is O, S or Se, preferably S or O, preferably O,
◦ n is an integer from 0 to 20, preferably 0 to 5, preferably 1 or 2, and
◦ $R^8$ is:

a linear and branched (preferably $C_{1-20}$, more preferably $C_{1-10}$) alkyl,

a (preferably $C_{7-15}$) aralkyl,

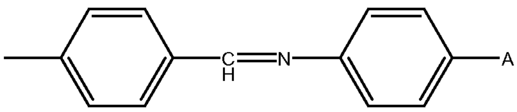
,

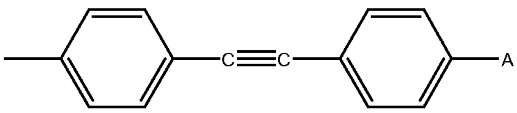
,

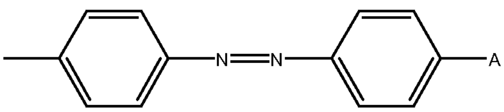
,

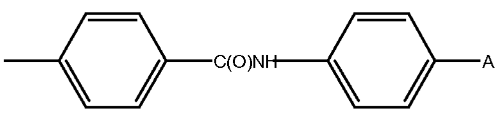
,

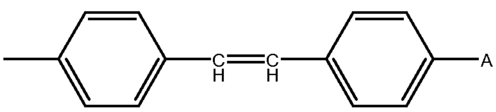
,

a (preferably $C_{6-12}$) aryl,

a linear and branched (preferably $C_{1-6}$) alkyl substituted with one or two -OH, preferably two -OH, preferably $-CH_2-CHOH-CH_2OH$

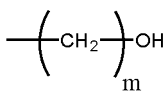
,

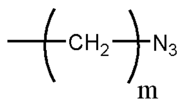
,

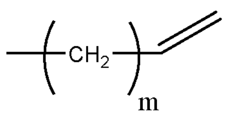
,

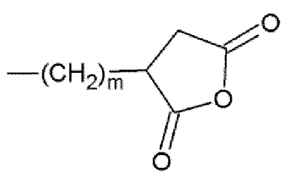
,

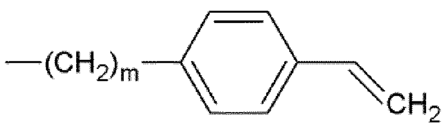
,

(continued)

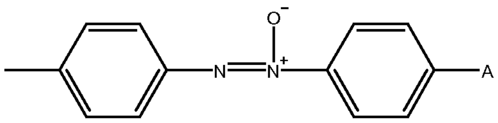,

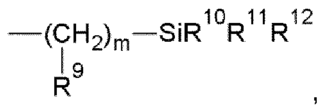,

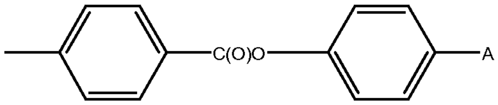,

$-(CH_2)_m-SiR^{10}R^{11}R^{12}$,

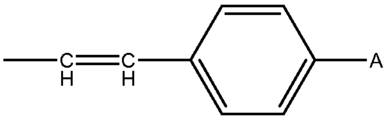,

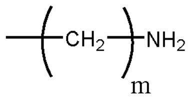,

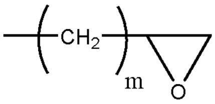,

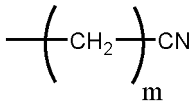,

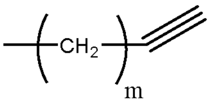,

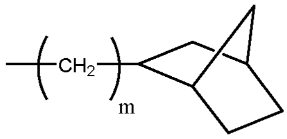,

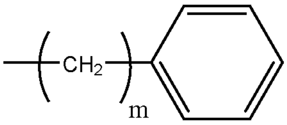,

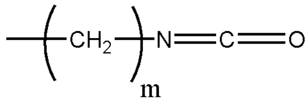, or

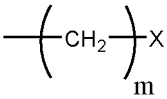,

wherein:

A is hydrogen, $C_{z'}H_{2z'+1}$, $C_{z'}H_{2z'+1}O$, $C_{z'}H_{2z'+1}OC(O)$, or -CN, wherein z' is an integer from 1 to 12;

X is F, Cl, or Br;

m is an integer from 0 to 10;

$R^9$ is hydrogen, methyl, or ethyl; and

$R^{10}$, $R^{11}$, and $R^{12}$ independently represent bromine, chlorine, fluorine, iodine, linear or branched (preferably $C_{1-20}$) alkyl, linear or branched (preferably $C_{1-20}$) alkoxy, linear or branched (preferably $C_{1-20}$) alkyl carbonyloxy (e.g. acetoxy), linear or branched (preferably $C_{1-20}$) alkyl peroxy (e.g. t-butyl peroxy), or substituted or unsubstituted (preferably $C_{6-20}$) aryloxy.

2. The thermoset resin of item 1, wherein $R^1$ and $R^2$ and/or $R^3$ and $R^4$ together form a (preferably $C_{1-10}$) alkylidenyl group.
3. The thermoset resin of item 1, wherein $R^1$ and $R^3$ together with the two carbon atoms to which they are attached form a saturated hydrocarbon ring of 4 to 8 carbon atoms or an oxirane ring.
4. The thermoset resin of item 1, wherein $R^1$ and $R^3$ together with the carbon atoms to which they are attached form a

cyclic anhydride or a cyclic dicarboxyimide.

5. The thermoset resin of any one of items 1 to 4, wherein one or more of $R^1$ to $R^4$ is independently hydroxy, hydroxyalkyl, alkoxy, alkoxyalkyl, carboxy, alkoxycarbonyl, alkycarbonyloxy, alkoxycarbonyloxy, alkylcarbonyl, or a methylene or linear polymethylene moiety terminated with an alkoxycarbonyl-, alkylcarbonyloxy-, alkoxycarbonyloxy-, alkylcarbonyl-, or hydroxyalkyloxy- group.

6. The thermoset resin of item 1, wherein:

- $Z^1$ and $Z^2$ are hydrogen atoms,
- Z is $CH_2$;
- p is 0 or 1, preferably 0, and
- $R^1$ and $R^3$ together with the carbon atoms to which they are attached form a 5-membered cyclic anhydride or cyclic dicarboxyimide, or
- one or two of $R^1$ to $R^4$ , preferably $R^1$, $R^3$, $R^1$ and $R^2$, or $R^1$ and $R^3$, are independently:

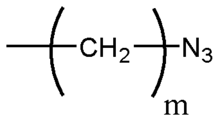

,

$-(CH_2)_n-YH$, wherein Y is S or O, preferably O, and n is preferably 0 or 1,

$-(CH_2)_n-COOR^8$ or $-(CH_2)_n-O-R^8$, wherein n is preferably 0 or 1, and $R^8$ is (preferably $C_{1-6}$) alkyl or $-CH_2-CHOH-CH_2OH$,

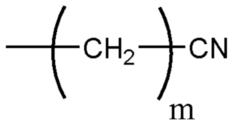

,

$-(CH_2)_n-NHR^8$, wherein $R^8$ is linear and branched (preferably $C_{1-20}$) alkyl, (preferably $C_{6-12}$) aryl, or (preferably $C_{7-15}$) aralkyl,

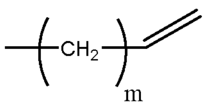

,

wherein m is preferably 1,

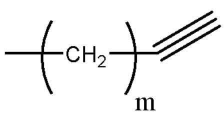

,

wherein m is preferably 1,

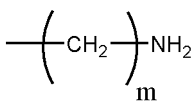

wherein m is preferably 1,

$-(CH_2)_n-COOH$, wherein n is preferably 0,

$-O-R^8$, wherein $R^8$ is (preferably $C_{1-6}$) alkyl, preferably methyl,

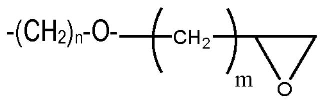,

wherein n is preferably 0 or 1, and m is preferably 1,

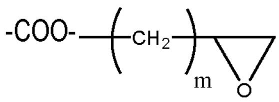,

wherein m is preferably 1, or

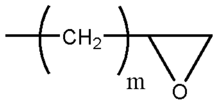,

wherein m is preferably 0.

7. The thermoset resin of any one of items 1 to 6, wherein said functional groups E and said functional groups F are as follows:

| **Functional Group F** | **Functional Group E** |
|---|---|
| Oxirane | -OH,<br>-SH,<br>$-NH_2$,<br>-NHR, and/or<br>-COOH |
| Anhydride | -OH,<br>-SH,<br>$-NH_2$,<br>-NHR, and/or<br>-COOH |
| $-NH_2$, and/or -NHR | Oxirane,<br>-COOH,<br>Isocyanate,<br>Unsaturated carbonyl group,<br>Ester, and/or<br>Anhydride |
| -COOH | -OH,<br>Oxirane,<br>-SH,<br>$-NH_2$, and/or<br>-NHR |
| -SH | -COOH,<br>Isocyanate,<br>Ester,<br>Anhydride, and/or<br>Double bond (C=C) |

(continued)

| Functional Group F | Functional Group E |
|---|---|
| Ester | -OH,<br>-SH,<br>$-NH_2$, and/or<br>-NHR |
| -OH | -COOH,<br>Oxirane,<br>Anhydride,<br>Isocyanate, and/or<br>Ester |
| Isocyanate | -OH,<br>Ester,<br>$-NH_2$, and/or<br>-NHR |
| Azide | Terminal alkyne |
| Halogen | -OH,<br>-SH,<br>$-NH_2$, and/or<br>-NHR |
| Double bond (C=C) | -SH,<br>Double bond (C=C) |
| Triple bond (C≡C) | Azide |

wherein R is a linear or branched alkyl.

8. The thermoset resin of any one of items 1 to 7, wherein one of the functional groups E and F is oxirane and the other is a functional group that react with oxirane functional groups, and
wherein the functional group that react with oxirane functional groups is -OH, -SH, $-NH_2$, -NHR, or -COOH.

9. The thermoset resin of any one of items 1 to 7, wherein the reactive compound comprises at least two oxirane functional groups per molecule and the hardener is an insertion polynorbornene comprising at least two functional groups that react with oxirane functional groups per chain.

10. The thermoset resin of item 9, wherein the functional groups that react with oxirane functional groups are -OH, -SH, $-NH_2$, -NHR, or-COOH.

11. The thermoset resin of item 9 or 10, wherein the insertion polynorbornene comprises one or more of the following repeat units:

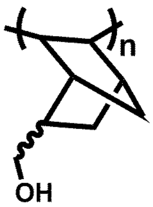 , 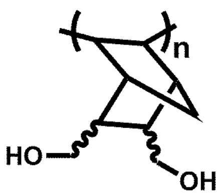 , 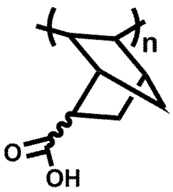 , 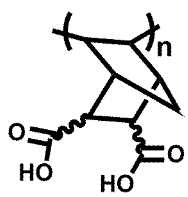 , 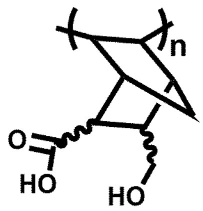 ,

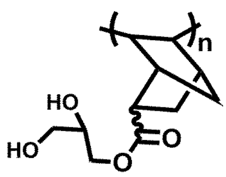 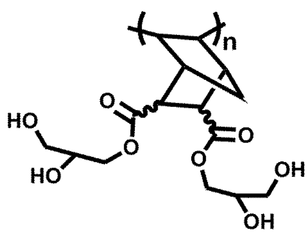 , 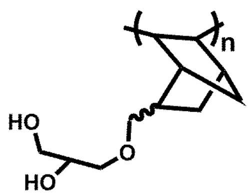 ,

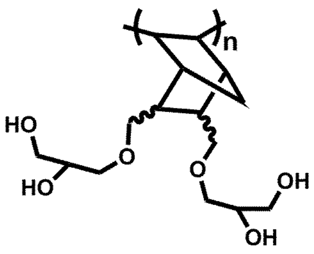, 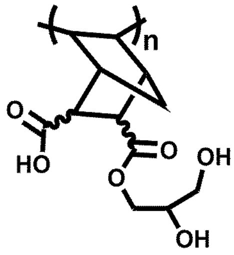, 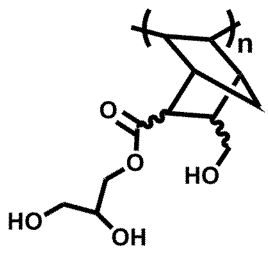, 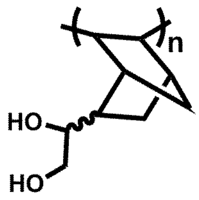,

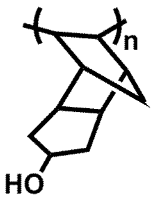, 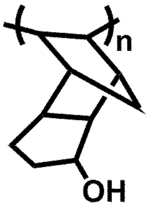, 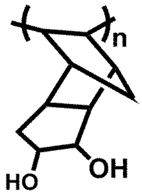, 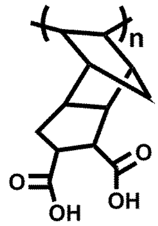, 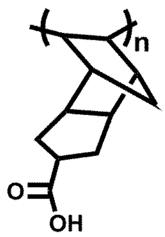, 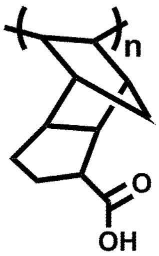,

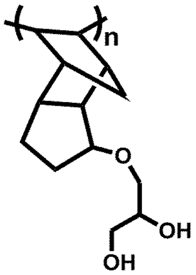, 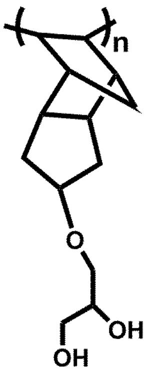, 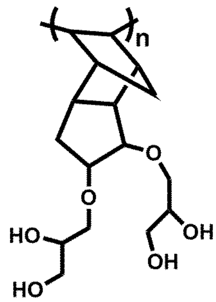, 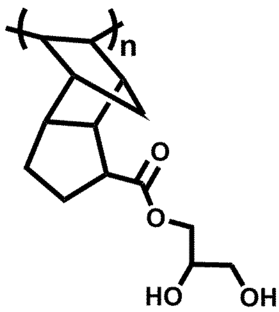, 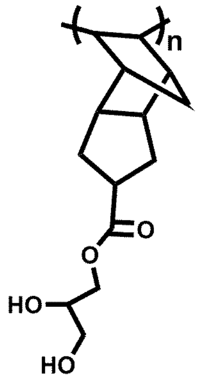,

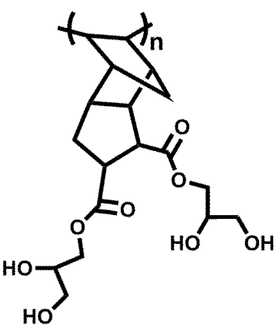, 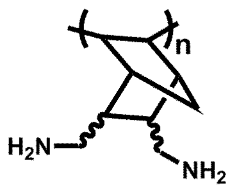, 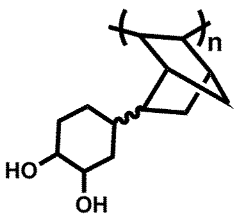, and 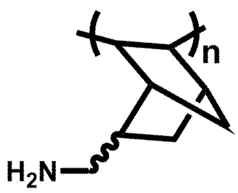

.

12. The thermoset resin of any one of items 9 to 11, wherein the reactive compound is:

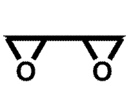, 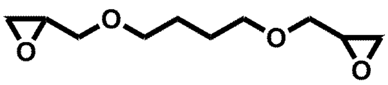, 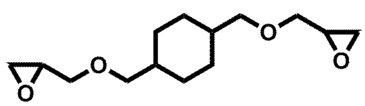,

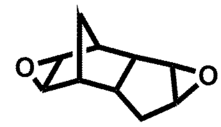 , 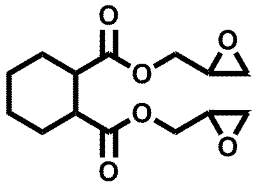 , 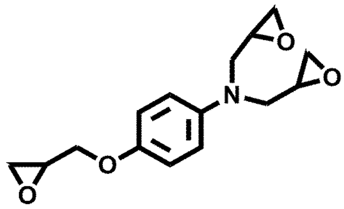 ,

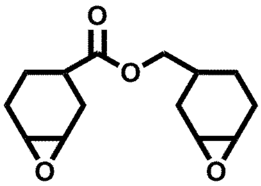 , 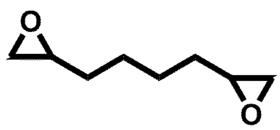 , 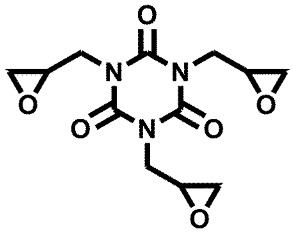 ,

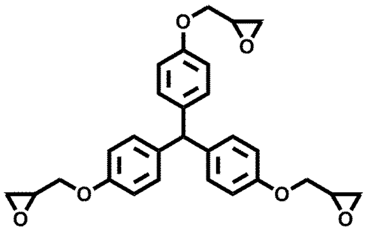 , 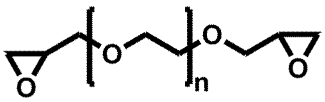 , 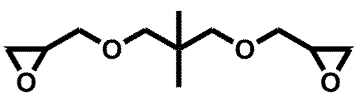 ,

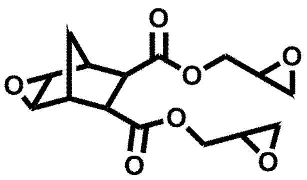 , 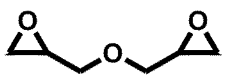 , 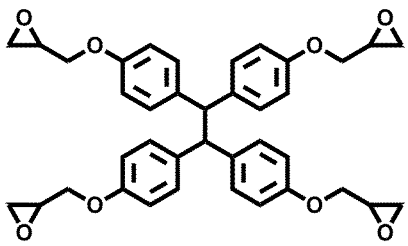 ,

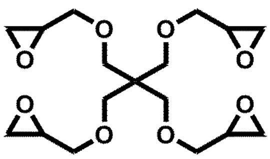 , 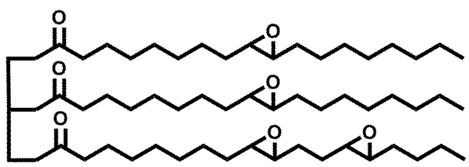 , 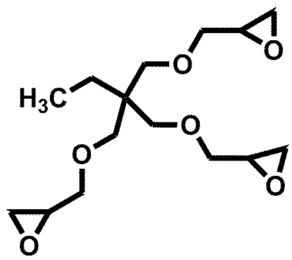 ,

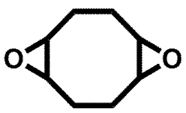 , 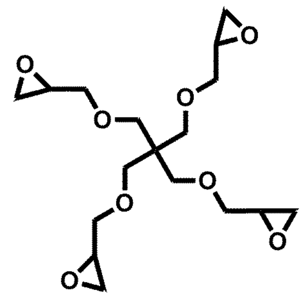 , 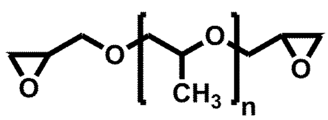 , 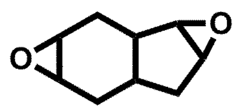 ,

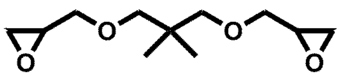,
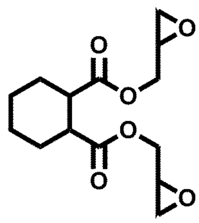,
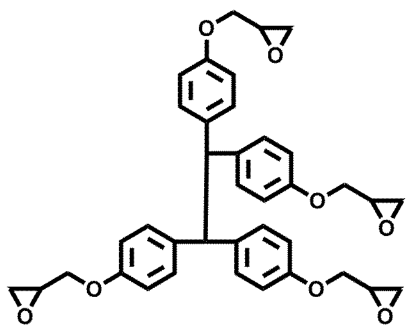,

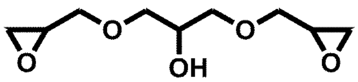,
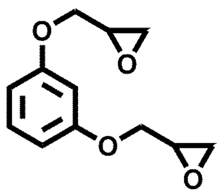,
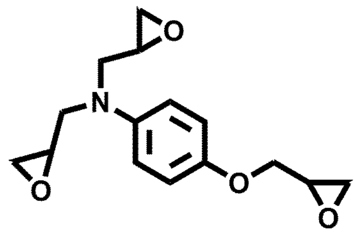,

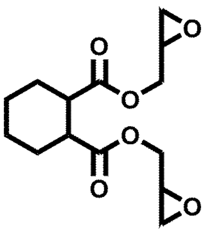,
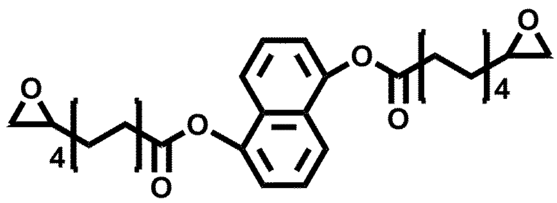

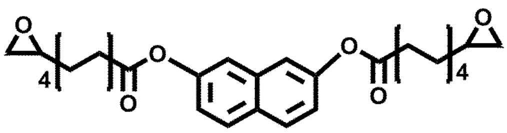,
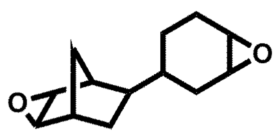,
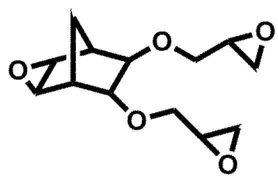,

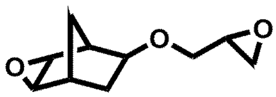, and
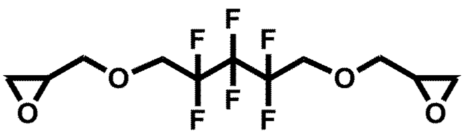.

13. The thermoset resin of any one of items 1 to 12, wherein the reactive compound and the hardener are provided as an uncured mixture.

14. The thermoset resin of any one of items 1 to 12, wherein the thermoset resin is cured and the reactive compound and the hardener are crosslinked together.

15. The thermoset resin of item 13 having a Tg ranging between about 100°C and about 400°C, preferably between about 150°C and about 350°C, and most preferably above about 200°C.

## BRIEF DESCRIPTION OF THE DRAWINGS

In the appended drawings:

Figure 1 shows the structure of BPA, BADGE and a typical epoxy resin obtained by crosslinking BADGE with a hardener to form a 3D network;

Figure 2 shows the manufacture of a norbornene monomer and an insertion polynorbornene according to an embodiment of the invention;

Figure 3 is a scheme of thermoset resins operating according to Mode A;

Figure 4 is a scheme of thermoset epoxy resins operating according to Mode A;

Figure 5 is a scheme of thermoset epoxy resins operating according to Mode B;

Figure 6 shows the chemical structure and synthesis scheme of an insertion polynorbornene according to an embodiment of the invention;

Figure 7 shows the chemical structure and synthesis scheme of an insertion polynorbornene according to another embodiment of the invention;

Figure 8 shows the chemical structure of poly B and poly C, and the synthetic scheme to prepare such polymers, according to another embodiment of the invention; and

Figure 9 shows the chemical structure and synthesis scheme of eight different polar insertion polynorbornene according to another embodiment of the invention.

## DETAILED DESCRIPTION OF THE INVENTION

Turning now to the invention in more details, there is provided norbornene monomers, insertion polynorbornenes based on these monomers, as well as thermoset resins based on these insertion polynorbornenes.

## Norbornene Monomers

Insertion polynorbornene is a saturated polymer devoid of functionality and is thus not useful in the manufacture of thermoset resins. Therefore, in a first aspect, the present invention provides norbornene monomers bearing one or more functional groups, polar or non-polar, which may then be vinyl polymerized, and then optionally further functionalized, to yield functional insertion polynorbornenes.

These norbornene monomers are of Formulas 1 and 2:

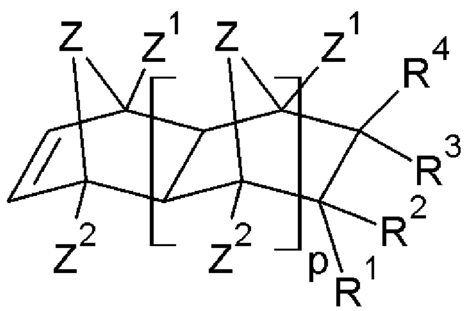

(1),

and

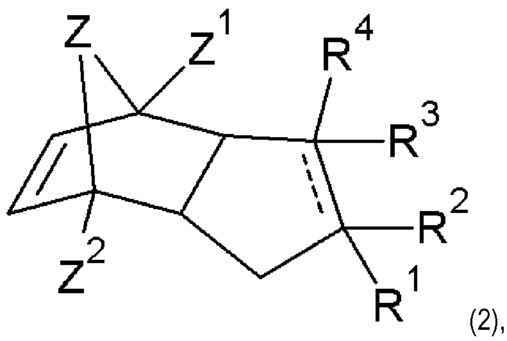

(2),

wherein:

- $Z^1$ and $Z^2$ are independently a hydrogen atom or a halogen atom, preferably a hydrogen atom;
- Z is a $CR^5R^6$, O, NH, or $NR^7$, preferably $CR^5R^6$;
- $R^1$, $R^2$, $R^3$, and $R^4$ are independently a hydrogen atom or a functional substituent, with the proviso that at least one of $R^1$ to $R^4$ is a functional substituent;
- $R^5$ and $R^6$ are independently a hydrogen atom, an alkyl (preferably $C_{1-6}$ alkyl, such as methyl, ethyl, n-propyl, isopropyl, n-butyl, isobutyl, and pentyl), an halogen atom, or an (preferably $C_{1-6}$) alkyl group substituted with an OH group, preferably an hydrogen atom;
- $R^7$ is an hydrogen atom or an alkyl (preferably $C_{1-6}$ alkyl, such as methyl, ethyl, n-propyl, isopropyl, n-butyl, isobutyl, and pentyl), preferably an hydrogen atom; and
- p varies from 0 to 10.

Monomers of Formulas 1 and 2 can exist as exo or endo isomers (see Figure 2). Formulas 1 and 2 cover both isomers as well as all mixtures thereof. In embodiments, the monomer used for vinyl polymerization is more than 50%, 60%, 70%, 80%, 90% or 95% endo, such as 100% endo.

The dashed bond in Formula 2 represents an optional double bond. In preferred embodiments, the double bond is present.

In preferred embodiments, the halogen atom is F, Cl or Br

In preferred embodiments, p is 0 or 1, more preferably 0.

In embodiments, the functional substituent in $R^1$ to $R^4$ is independently:

- $-R^8$,
- $-(CH_2)_n-YH$,
- $-(CH_2)_n-C(Y)-YH$,
- $-(CH_2)_n-C(Y)-YR^8$,
- $-(CH_2)_n-YR^8$,
- $-(CH_2)_n-YC(Y)R^8$,
- $-(CH_2)_n-YC(Y)-YR^8$,
- $-(CH_2)_n-C(Y)R^8$,
- $-(CH_2)_n-Y-(CH_2)_n-YH$,
- $-(CH_2)_nYR^8$, or
- $-(CH_2)_n-NHR^8$,

wherein:
- Y is O, S or Se, preferably S or O, preferably O,
- n is an integer from 0 to 20, preferably 0 to 5, preferably 1 or 2, and
- $R^8$ is:

a linear and branched (preferably $C_{1-20}$, more preferably $C_{1-10}$) alkyl,

a (preferably $C_{7-15}$) aralkyl,

a (preferably $C_{6-12}$) aryl,

a linear and branched (preferably $C_{1-6}$) alkyl substituted with one or two -OH, preferably two -OH, preferably $-CH_2-CHOH-CH_2OH$

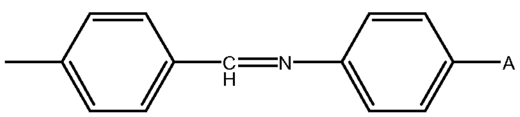
,
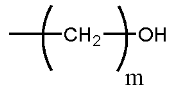
,
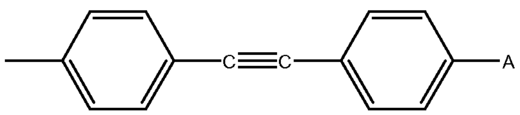
,
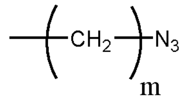
,
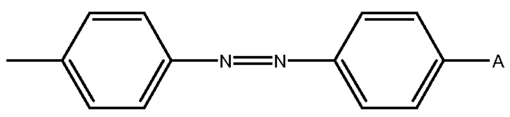
,
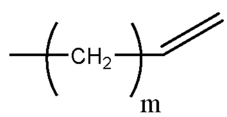
,

(continued)

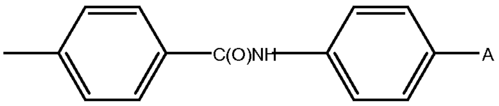 , 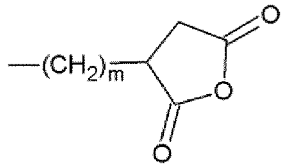 ,

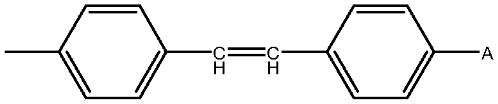 , 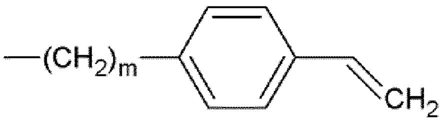 ,

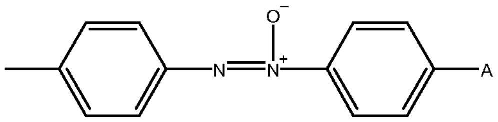 , 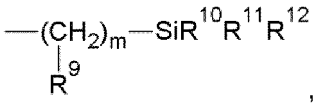 ,

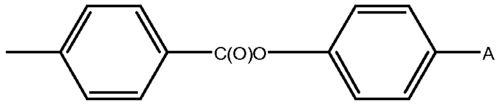 , $-(CH_2)_m-SiR^{10}R^{11}R^{12}$,

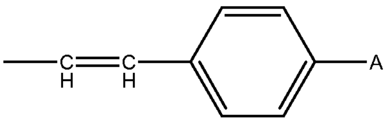 , 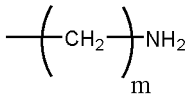 ,

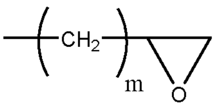 , 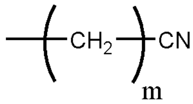 ,

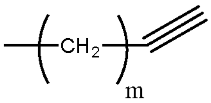 , 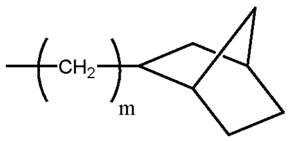 ,

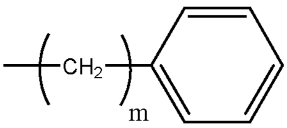 , 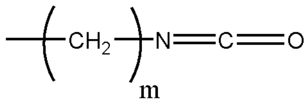 , or

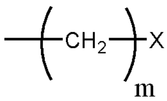 ,

wherein:

A is hydrogen, $C_{z'}H_{2z'+1}$, $C_{z'}H_{2z'+1}O$, $C_{z'}H_{2z'+1}OC(O)$ or -CN, wherein z' is an integer from 1 to 12;

X is F, Cl or Br;

m is an integer from 0 to 10;

$R^9$ is hydrogen, methyl, or ethyl; and

$R^{10}$, $R^{11}$, and $R^{12}$ independently represent bromine, chlorine, fluorine, iodine, linear or branched (preferably $C_{1-20}$) alkyl, linear or branched (preferably $C_{1-20}$) alkoxy, linear or branched (preferably $C_{1-20}$) alkyl carbonyloxy (e.g. acetoxy), linear or branched (preferably $C_{1-20}$) alkyl peroxy (e.g. t-butyl peroxy), or substituted or unsubstituted (preferably $C_{6-20}$) aryloxy.

Non-limiting examples aryloxy groups in $R^{10}$, $R^{11}$, and $R^{12}$ include $-OC_6H_5$, $-O-(2-CH_3)-C_6H_4$, $-O-(3-CH_3)-C_6H_4$, $-O-(5-CH_3)-C_6H_4$.

In embodiments, $R^1$ and $R^2$ and/or $R^3$ and $R^4$ together form a (preferably $C_{1-10}$) alkylidenyl group, e.g. $=CH_2$ or $=CH-CH_3$.

In embodiments, $R^1$ and $R^3$ together with the two carbon atoms to which they are attached form a saturated hydrocarbon ring of 4 to 8 carbon atoms or an oxirane ring (

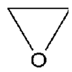

).

In embodiments, $R^1$ and $R^3$ together with the carbon atoms to which they are attached form a cyclic anhydride or a cyclic dicarboxyimide, preferably comprising 5 to 7 members, more preferably 5-membered. Monomers of Formula 1, where $R^1$ and $R^3$ form such cycles are show below:

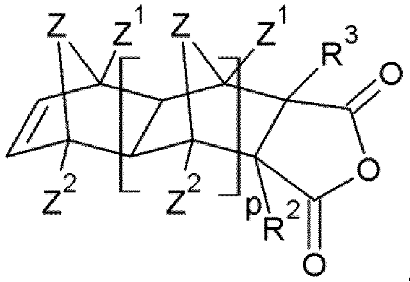

and

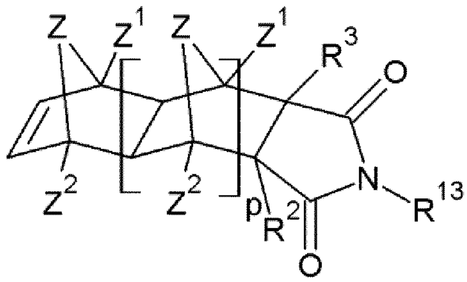

,

wherein $R^{13}$ is a linear and branched (preferably $C_{1-20}$) alkyl, a (preferably $C_{6-12}$) aryl, or a (preferably $C_{7-15}$) aralkyl, the alkyl, aryl and aralkyl being optionally substituted. Non-limiting examples of substituents include (preferably $C_{1-20}$) alkyl and (preferably $C_{6-12}$) aryl, for example methyl, ethyl, n-propyl, i-propyl, n-butyl, t-butyl, pentyl, hexyl decyl, phenyl, and benzyl.

In embodiments, the $R^1$ to $R^4$ groups are independently hydroxy, hydroxyalkyl, alkoxy, alkoxyalkyl, carboxy, carboxyalkyl, alkoxycarbonyl, alkycarbonyloxy, alkoxycarbonyloxy, alkylcarbonyl, or a methylene ($-CH_2-$) or linear polymethylene ($(-CH_2-)_m$, wherein m varies from 1 to 20) moiety terminated with an alkoxycarbonyl-, alkylcarbonyloxy-, alkoxycarbonyloxy-, alkylcarbonyl-, or hydroxyalkyloxy- group.

Preferred monomers of Formulas 1 and 2 are those in which $Z^1$ and $Z^2$ are hydrogen atoms, Z is $CH_2$; p is 0 or 1, preferably 0, and

- $R^1$ and $R^3$ together with the carbon atoms to which they are attached form a 5-membered cyclic anhydride or cyclic dicarboxyimide, or
- one or two of $R^1$ to $R^4$ , preferably $R^1$, $R^3$, $R^1$ and $R^2$, or $R^1$ and $R^3$, are independently:

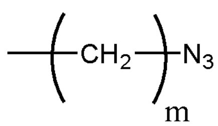

,

$-(CH_2)_n-YH$, wherein Y is S or O, preferably O, and n is preferably 0 or 1,

$-(CH_2)_n-COOR^8$ or $-(CH_2)_n-O-R^8$, wherein n is preferably 0 or 1, and $R^8$ is (preferably $C_{1-6}$) alkyl or $-CH_2-CHOH-$

$CH_2OH$,

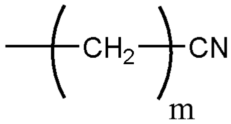

,

$-(CH_2)_n-NHR^8$, wherein $R^8$ is linear and branched (preferably $C_{1-20}$) alkyl, (preferably $C_{6-12}$) aryl, or (preferably $C_{7-15}$) aralkyl,

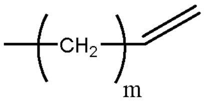

,

wherein m is preferably 1,

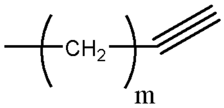

,

wherein m is preferably 1,

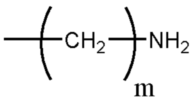

wherein m is preferably 1,
$-(CH_2)_n-COOH$, wherein n is preferably 0 or 1,
$-O-R^8$, wherein $R^8$ is (preferably $C_{1-6}$) alkyl, preferably methyl,

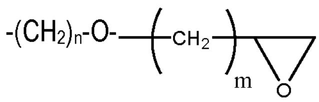

,

wherein n is preferably 0 or 1, and m is preferably 1,

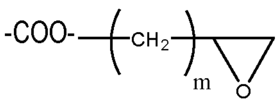

,

wherein m is preferably 1, or

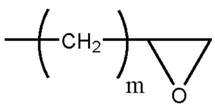

,

wherein m is preferably 0.

Representative monomers include 5-hydroxy-2-norbornene, 5-hydroxymethyl-2-norbornene, 5-methoxy-2-norbornene, 5-t-butoxycarbonyl-2-norbornene, 5-methoxy-carbonyl-2-norbornene, 5-carboxy-2-norbornene, 5-carboxymethyl-2-norbornene, decanoic acid ester of 5-norbornene-2-methanol, octanoic acid ester of 5-norbornene-2-methanol, n-butyric acid ester of 5-norbornene-2-methanol, phenylcinnaminic acid ester of 5-norbornene-2-methanol, N-phenylnorbornenedicarboximide, 5-norbornene-2,3-dicarboxylic anhydride,

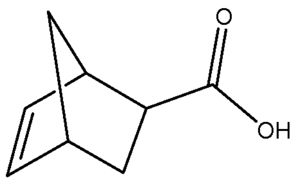
NBE-COOH ,

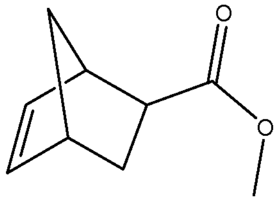
NBE-COOMe ,

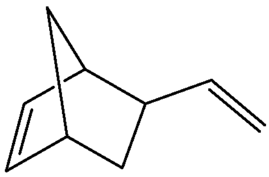
NBE-vinyl ,

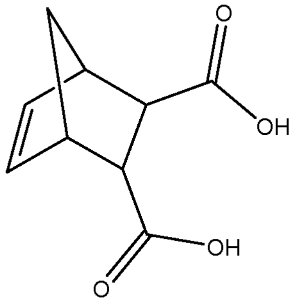
NBE-diCOOH ,

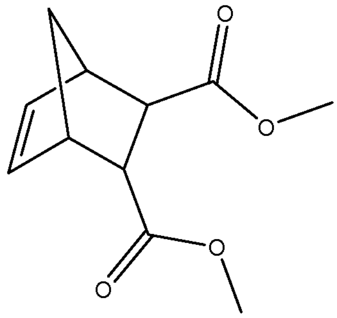
NBE-diCOOMe ,

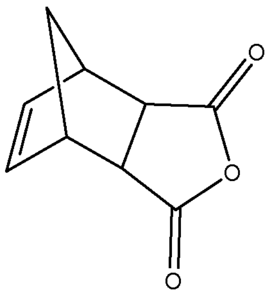
NBE-anhydride ,

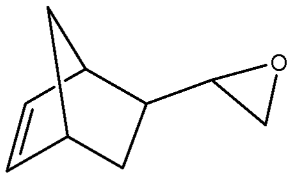
NBE-epoxy ,

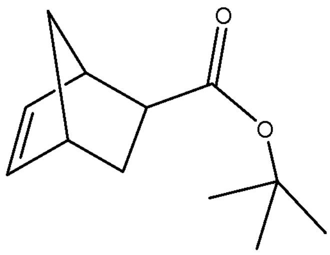
NBE-tBA ,

and

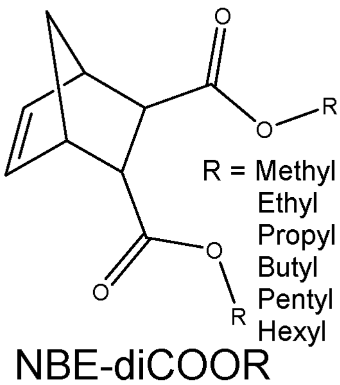
R = Methyl
Ethyl
Propyl
Butyl
Pentyl
Hexyl

NBE-diCOOR .

*Monomers Comprising Non-Polar Functional Groups*

In embodiments, preferred monomers are those bearing non-polar functional groups, which are easier to polymerize that monomers bearing polar functional group.

More preferred monomers are those comprising a functional substituent comprising a C=C double bond. Particularly preferred is NBE-vinyl and monomers of Formula 2 wherein the optional double bond is present, particularly dicyclopentadiene and NBE-vinyl. Advantageously, these can be transformed, before or after polymerization, into polar functional groups such as oxirane, alcohol, diol, amine, isocyanate, azide, aldehyde, and carboxylic acid functional groups, preferably into oxirane functional groups.

*Monomers Comprising Oxirane Functional Groups*

In embodiments, preferred monomers are those bearing one or more oxirane functional groups.

Thus, preferred monomers are those in Formulas 1 and 2 above, wherein at least one of $R^1$ to $R^4$ comprises an oxirane functional group.

Non-limiting examples of such monomers include those corresponding the following repeat unit:

PDCPD-Epoxy

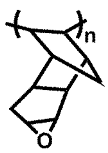,

PDCPD-monoglycidyl ether

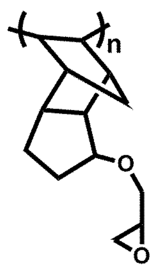,

PDCPD-monoglycidyl ether

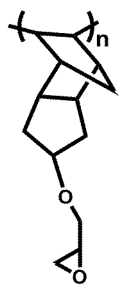,

PDCPD-diglycidyl ether

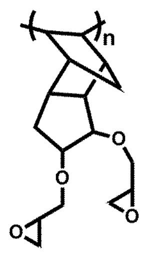,

PDCPD-monoGDA

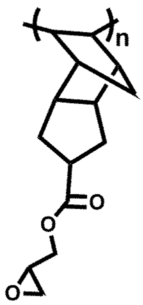,

PDCPD-diGDA

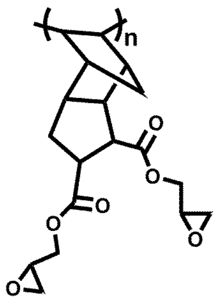,

PolyNBE-GDA

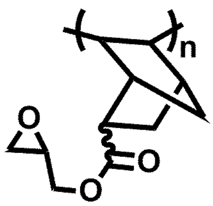,

PolyNBE-diGDA

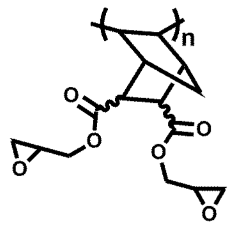,

PolyNBE-diglycidyl ether

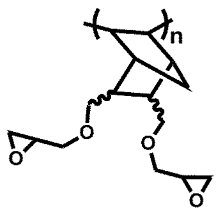,

PolyNBE-GDA acid

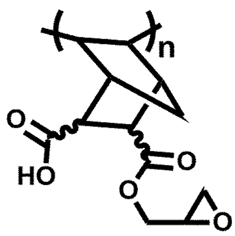,

PolyNBE-GDA acid

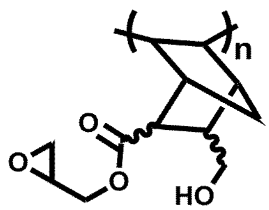,

PolyNBE-epoxy

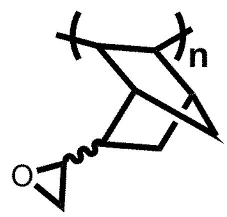,

| PDCPD-monoGDA | PolyNBE-gycidyl ether | PolyNBE-diepoxy | PolyNBE-cyclohexene 1,2-epoxide |
|---|---|---|---|
| 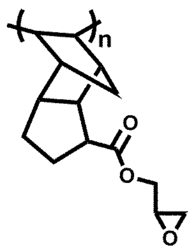 , | 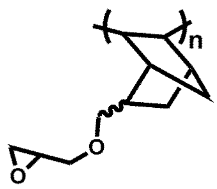 , | 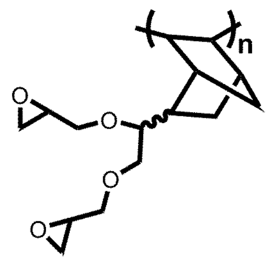 , | 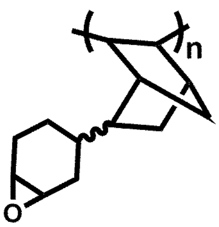 . |

or

*Monomers Comprising Functional Groups that React with Oxirane Functional Groups*

In embodiments, preferred monomers are those bearing one or more functional groups that react with oxirane functional groups. Examples of such functional group include -OH, -COOH, $-NH_2$, -NHR wherein R is a linear or branched (preferably $C_{1-20}$) alkyl, or -SH. Thus, preferred monomers are those in Formulas 1 and 2 above, wherein at least one of $R^1$ to $R^4$ comprises -OH, -COOH, $-NH_2$, -NHR, or -SH functional group.

Non-limiting examples of such monomers include those corresponding the following repeat unit:

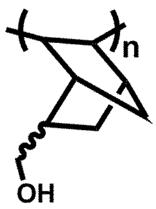 , 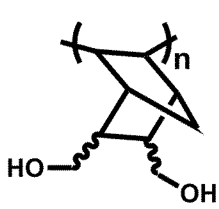 , 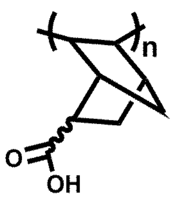 , 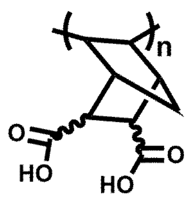 , 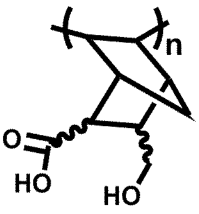 ,

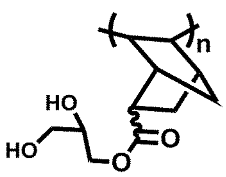 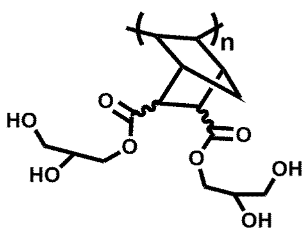 , 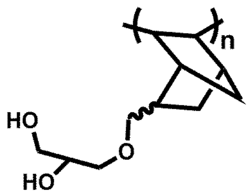 , 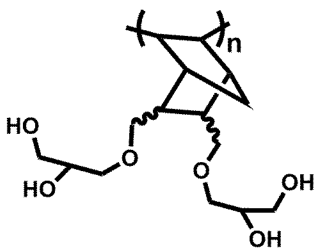 ,

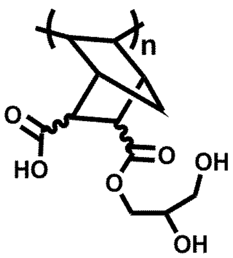 , 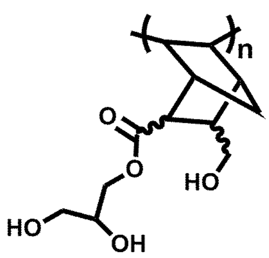 , 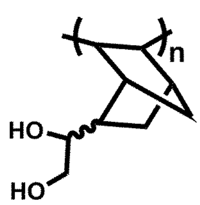 , 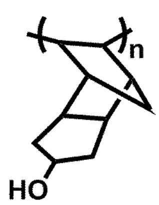 , 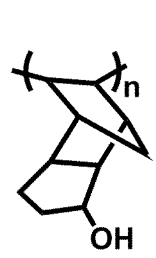 ,

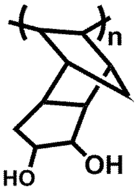, 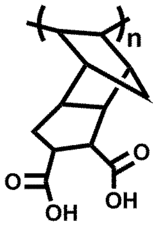, 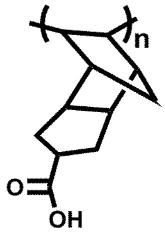, 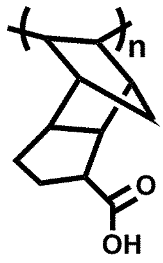, 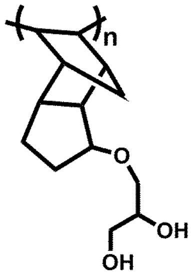, 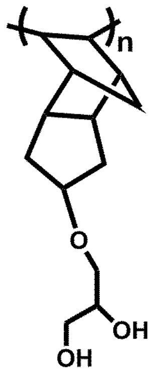,

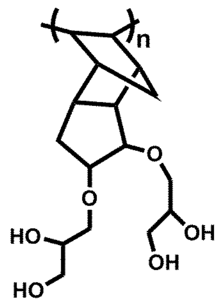, 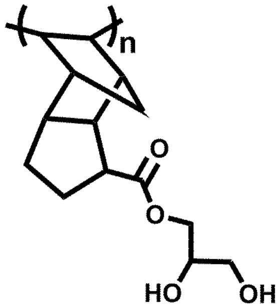, 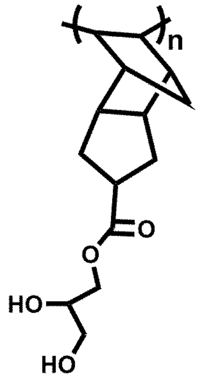, 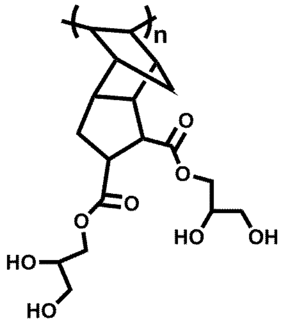,

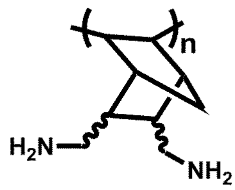, 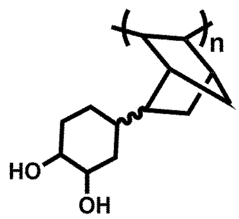, and 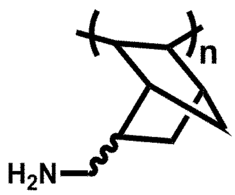.

*Monomers Comprising Functional Groups E or F*

In embodiments, preferred monomers are those bearing one or more functional groups E or F as described below. Non-limiting examples of such functional groups comprise anhydride, $-NH_2$, -NHR, wherein R is a linear or branched (preferably $C_{1-20}$) alkyl, -COOH, -SH, an ester, -OH, an isocyanate, an azide, a nitrile, an halogen, a double bond, or a triple bond. Preferred halogens include F, Cl, and Br. Thus, preferred monomers are those in Formulas 1 and 2 above, wherein at least one of $R^1$ to $R^4$ comprises at least one of these functional groups.

Non-limiting examples of such monomers include those corresponding the following repeat unit:

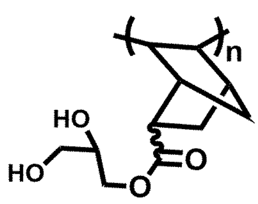, 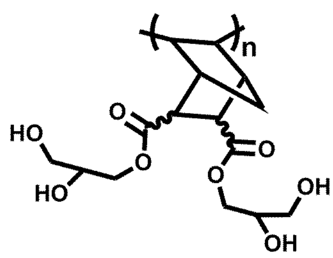, 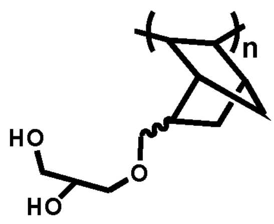, 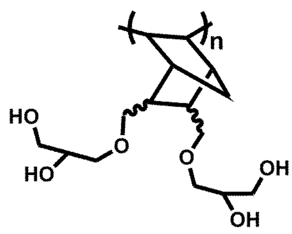,

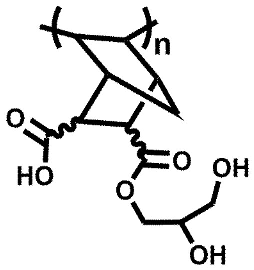, 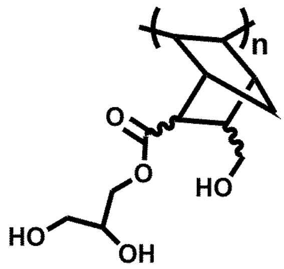, 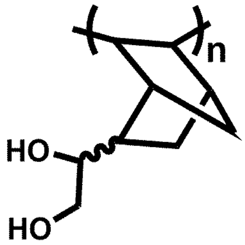, 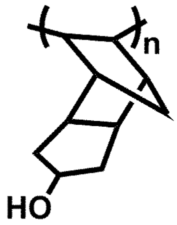, 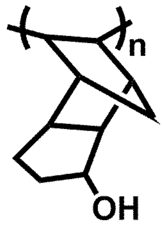,

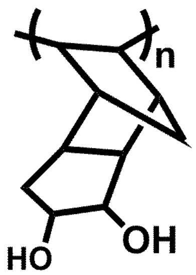, 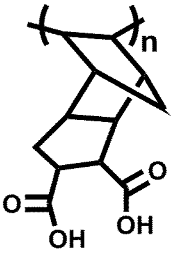, 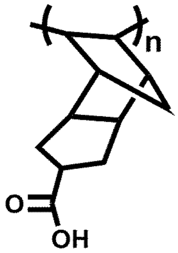, 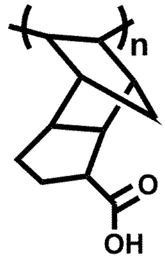, 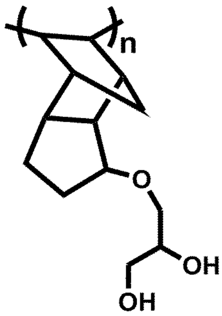, 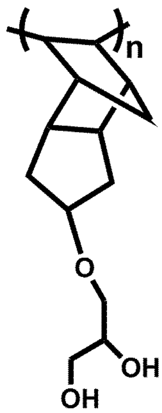,

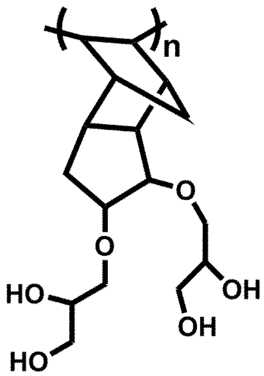, 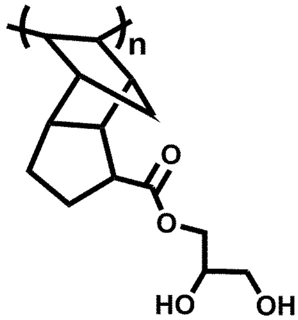, 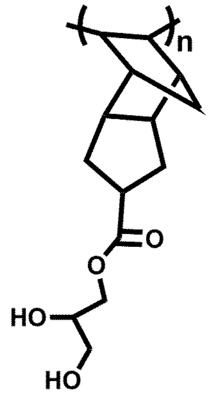, 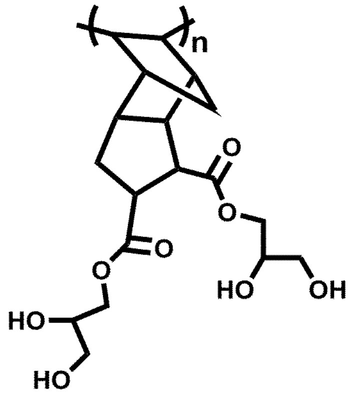,

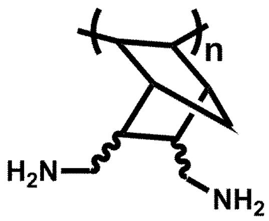, 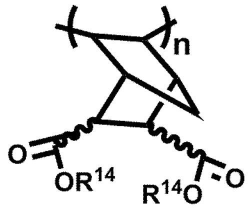, 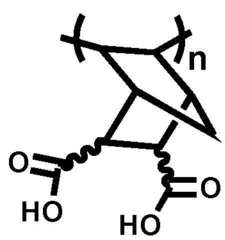, 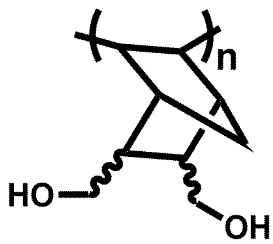,

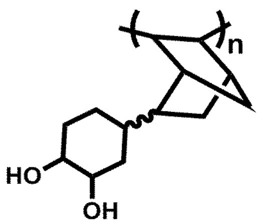, 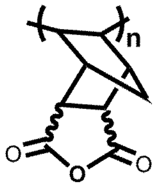

PolyNBE-anhydride, 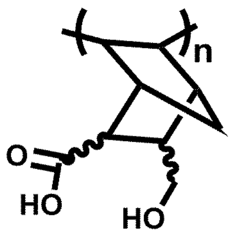, 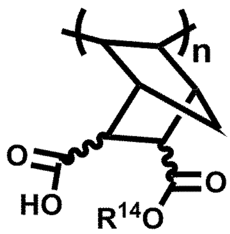, 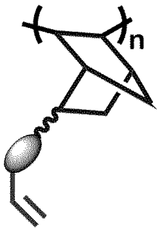,

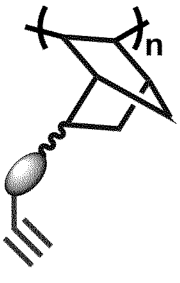, 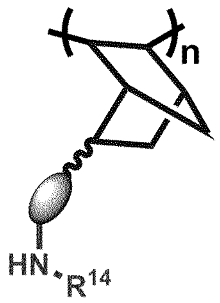, 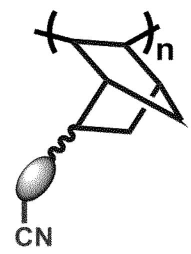, 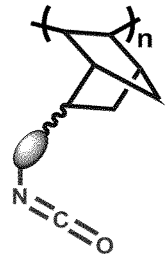, 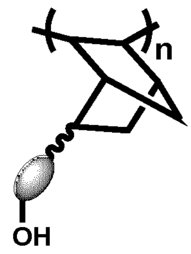, 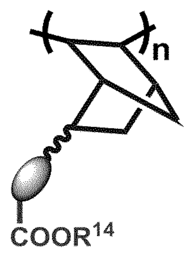,

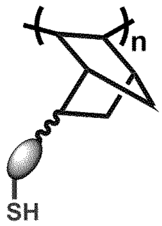, 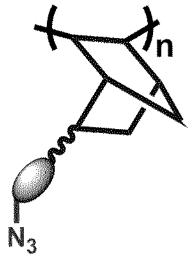, and 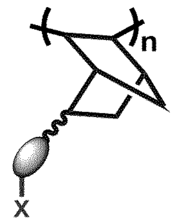,

wherein

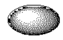

represents a bond or $-(CH_2)_{1-10}-$, $R^{14}$ is a linear and branched (preferably $C_{1-20}$) alkyl, (preferably $C_{6-12}$) aryl, or (preferably $C_{7-15}$) aralkyl, and X is as defined above. Non-limiting examples of $R^{14}$ include methyl, ethyl, n-propyl, i-propyl, n-butyl, t-butyl, pentyl, hexyl decyl, phenyl, and benzyl.

*Method of Making the Norbornenes*

*Monomers of Formula 1*

An economical, and thus preferred route, for the preparation of functional norbornene monomers relies on a Diels-Alder reaction at a temperature between -70°C and 100°C to form the functionally substituted norbornene monomers. One starting material of this reaction is cyclopentadiene (CPD), unsubstituted or substituted with the Z, $Z^1$ and $Z^2$ groups desired in the final norbornene monomer. The other starting material is a suitable dienophile, unsubstituted or substituted with the $R^1$ to $R^4$ groups desired in the final norbornene monomer. This reaction is generally shown (for unsubstituted CPD) in the following reaction scheme :

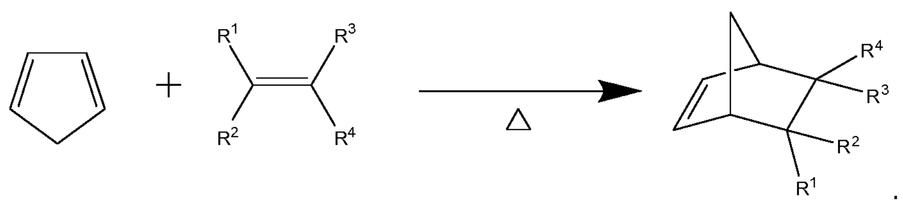

CPD dienophile norbornene monomer

Non-limiting examples of dienophiles for the Diels-Alder reaction include acrylic acid, methacrylic acid, methyl acrylate, methyl methacrylate, *tert*-butyl acrylate, *tert*-butyl methacrylate, acryloyl chloride, methacryloyl chloride, maleic anhydride, maleic acid, fumaric acid, 2-butene-1,4-diol, dimethyl maleate, dimethyl fumarate, butadiene, allyl alcohol, allyl amine, allyl bromide, allyl chloride, allyl bromide, allyl chloride, diallyl maleate, 3,4-epoxy-1-butene, allyl glycidyl ether, and 4-Vinyl-1-cyclohexene 1,2-epoxide.

Another route for the preparation of norbornene monomers of Formula 1 (where p is not 0) relies on the thermal pyrolysis of dicyclopentadiene (DCPD), again substituted or not according to the desired monomer) in the presence of

a suitable dienophile. The reaction proceeds by the initial pyrolysis of DCPD to CPD followed by the Diels-Alder addition of CPD and the dienophile to give the adduct as shown below:

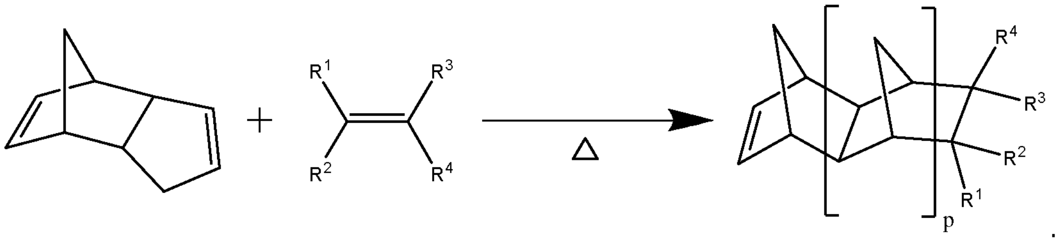

DCPD dienophile norbornene monomers

Non-limiting examples of dienophiles for this reaction include acrylic acid, methacrylic acid, methyl acrylate, methyl methacrylate, *tert*-butyl acrylate, *tert*-butyl methacrylate, acryloyl chloride, methacryloyl chloride, maleic anhydride, maleic acid, fumaric acid, and 2-butene-1,4-diol. In particular, norbornenes with polar substituents can be obtained using polar olefins such as methyl acrylate, acrylic acid, and maleic anhydride.

Further, the Diels-Alder reaction does not typically generate any by-product and can even be performed in the absence of solvent.

The Diels-Alder reaction leads to the formation of two isomers: one kinetic (*endo*) and one thermodynamic (*exo*). These isomers are shown in Figure 2 (top right). The ratio of these two isomers can be modulated during or after the synthesis, most notably by changing the reaction temperature. When high *endo* content is desired, the reaction can be performed at low temperature, whereas at high temperature, the reaction leads to higher amounts of exo monomers. Alternatively, a monomer with a high endo content can be turned into a highly exo monomer by heating for a prolonged period of time after synthesis. Lastly, *endo* and exo monomers can be separated using physical processes, such as spinning-band distillation or, in the case of NBE-COOH, by iodolactonization.

*Monomers of Formula 2*

Monomers of Formula 2 can be produced by Diels Alder reaction between cyclopentadiene and a functional cyclopentadiene in a similar fashion to monomers of Formula 1. See for example, Boland, Wilhelm; Jaenicke, Lothar, Chemische Berichte, 1978, 111 (9), 3262-75.

*Inserting Polar Functional Groups*

Monomers bearing polar functions groups can be produced directly as described above.

However, in embodiments, it can be advantageous to first produce a monomer bearing a non-polar functional group to then react it to insert a desired polar functional group. This can ease synthesis of the monomer.

Furthermore, as explained above, the presence of a polar functional group may render polymerization of the monomer more difficult. In such cases, it is advantageous to first polymerize a monomer and then insert the desired polar functional group on the resulting polymer. For example, polymers bearing carboxylic acid groups, such as poly B, can be transformed into a polymer bearing amide and alcohols groups upon reaction with diethanol amine such as poly C (see Example 4 below for a specific example of such a synthesis).

Reactions to convert non-polar functional groups into polar functional groups are advantageously carried out after polymerization, but they can also be carried out before polymerization if desired. For example, PolyNBEepoxy:

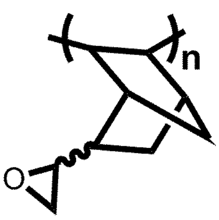

can be prepared either by direct polymerization of NBE-epoxy:

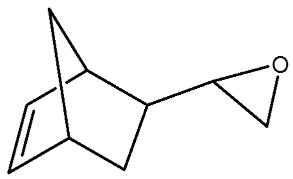

,

or, more conveniently, by polymerization of NBE-vinyl:

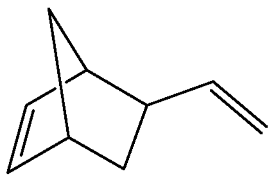

,

followed by post-functionalization of the resulting PolyNBE-vinyl:

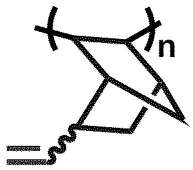

;

this latter reaction scheme being generally simple, economical and environmentally friendly.

Reactions to convert non-polar functional groups into polar functional groups are well known to the skilled person. Here, only epoxidation reactions (to insert oxirane functional groups) will be discussed. Preferred polymers for epoxidation are polydicyclopentadiene (PDCPD) and polyNBEvinyl (PNBEVinyl). Numerous epoxidation methods can be used to perform this epoxidation reaction. Such methods include reaction with meta-chloro perbenzoic acid (m-CPBA), reaction with $O_2$ and a metal catalyst, reaction with a peracid, reaction with sodium hypochlorite, etc. A preferred method is shown in the following shemes:

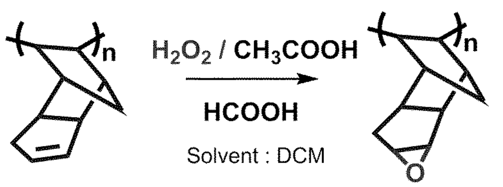


PDCPD PDCPD-Epoxy,

and

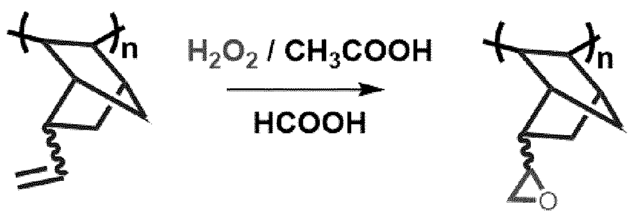


PolyNBE-vinyl PolyNBE-epoxy

*Inserting Oxirane Functional Groups*

Other methods to insert oxirane groups into monomers as well known to the skilled person. Again, these can

be carried out before or after polymerization, preferably after polymerization (as shown in the schemes below).

Such method include transformation of -COOH groups into oxirane groups using epichlorhydrin:

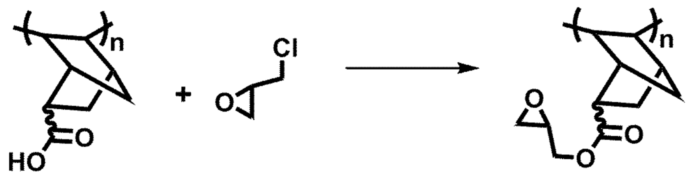

PolyNBE-COOH PolyNBE-GDA

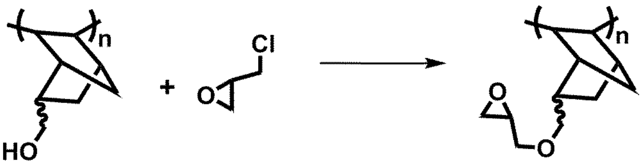

PolyNBE-COOH PolyNBE-glycidyl ether

as well as ring-opening of anhydrides:

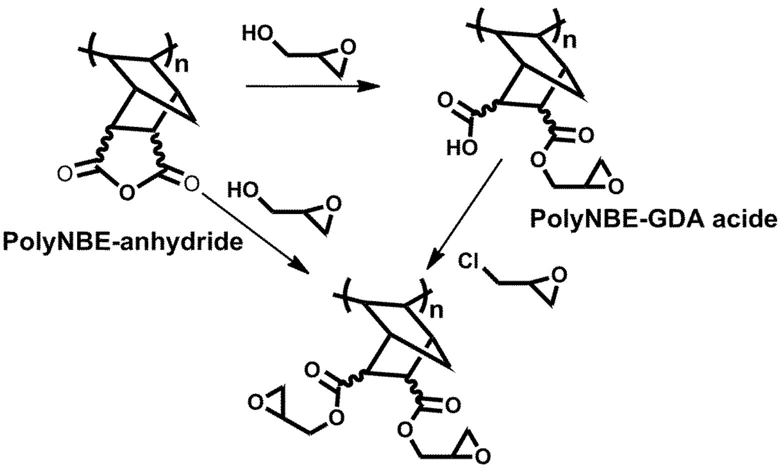

PolyNBE-anhydride

PolyNBE-GDA acide

PolyNBE-diGDA

These are generally considered simple and economically viable syntheses.

## Insertion Polynorbornenes

The above norbornene monomers of Formulas 1 and 2 can be vinyl polymerized to yield insertion polynorbornenes comprising repeat units of Formulas 3 or 4, respectively:

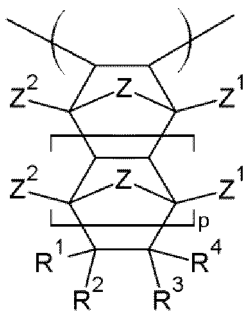

(3),

and

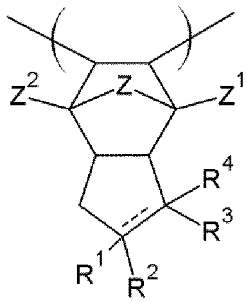

(4),

wherein Z, $Z^1$, $Z^2$, $R^1$, $R^2$, $R^3$, $R^4$ and p are as defined above.

The insertion polynorbornenes of the invention can be homopolymers (comprising only repeat units of Formula 3 or comprising only repeat units of Formula 4) as well as copolymers comprising:

- two or more different repeat units of Formula 3,
- two or more different repeat units of Formula 4, or
- at least one repeat unit of Formula 3 and at least one repeat unit of Formula 4.

In embodiments, the insertion polynorbornenes have a number average molecular weight (Mn) ranging from about 200 g/mol (oligomers, such as dimers, trimers, tetramers) to about 10,000,000 g/mol. Preferably, the insertion polynorbornenes have a Mn ranging between about 200 g/mol and about 100,000 g/mol, and most preferably between about 200 g/mol and about 10,000 g/mol.

The ratio of endo isomers in the insertion polynorbornenes varies from 0 to 100%. As explained below, the present inventors provide a route for homopolymerization of up to 100% of endo isomers, this route being usable even with a low catalyst loading.

Preferred insertion polynorbornenes are those produced by vinyl homo- or co-polymerization of the preferred monomers described above.

In embodiments, preferred insertion polynorbornenes are polydicyclopentadiene (PDCPD) and polynorbornene vinyl (PNBEVinyl):

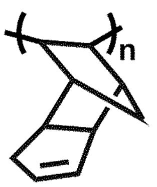

, and

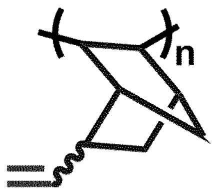

(homopolymers).

As explained above, the non-cyclic double bond in these insertion polynorbornenes can be used as a handle to insert functional groups useful in thermoset resins. For example, for epoxy resins, oxirane groups can be inserted via epoxydation as described above.

*Method of Making the Insertion Polynorbornenes and Reaction Mixtures Therefor*

A method of manufacturing insertion polynorbornene from norbornene monomers will now be described.

This method can be used with all of the above functional norbornene monomers and with any and all subsets thereof. A description of these monomers will not be repeated here, reference is made to all of the monomers and insertion polynorbornene described above. This method can also be used to polymerize norbornene itself (i.e.

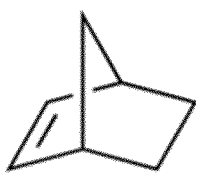

). In this section, all of these monomers will be referred to as "norbornene monomers".

The norbornene monomers can be polymerized upon contact with a variety of catalysts through a catalytic (Ziegler type) polymerization. The method of manufacturing an insertion polynorbornene thus comprises the step of contacting a norbornene monomer with a catalyst, and optionally a solvent if the monomer is not liquid, thereby producing a catalytic polymerization reaction mixture comprising and thereby catalytically polymerizing the norbornene monomer into the insertion polynorbornene.

Indeed, when the monomer is a liquid at the reaction temperature, the polymerization can be performed without solvent.

The norbornene monomers can be endo norbornene monomers, exo norbornene monomers or a mixture of endo and exo norbornene monomers.

Although numerous catalysts can be used for this reaction, the most active catalysts are Ni and Pd based catalysts. Non-limiting examples of such catalysts include $PdCl_2$, $NiCl_2$, $Pd(C_6H_5CN)_2Cl_2$, $Pd(Ph_3P)_2Cl_2$, $Pd(NCCH_3)_2Cl_2$, $(\eta^3\text{-Allyl})_2Pd(II)$, $[(1,5\text{-cyclooctadiene})(CH_3)Pd(Cl)]$, bis(acetylacetonate)Ni, allylcyclopentadienylnickel, dichloro(1,5-cyclooctadiene)palladium., $[(\eta^3$-crotyl)(cycloocta-1,5-diene)nickel]hexafluorophosphate, tetrakis(acetonitrile)palladium(II)tetrafluoroborate, $[(\eta^3$-crotyl)(cycloocta-1,5-diene)nickel] tetrakis(3,5-bis(trifluoromethyl)-phenyl)borate, [6-methoxynorbornene-2-yl-5-palladium(cyclooctadiene)]hexafluorophosphate, $[(\eta^3$-crotyl)(cycloocta-1,5-diene)palladium] hexafluorophosphate, $\eta^3,\eta^2,\eta^2$-dodeca-2(*E*),6(*E*),10(*Z*)-triene-1-ylnickel hexafluorophosphate, tetrakis(octanitrile)palladium(II) tetrafluoroborate, $[(\eta^3$-cyclooctenyl)(cycloocta-1,5-diene)nickel] tetrakis(3,5-bis(trifluoromethyl)-phenyl)borate, $\{CH_3Ni(C_2H_4)_2\}$ - $Li\{(CH_3)_2NCH_2CH_2N(CH_3)_2\}^{2+}$, bis($\eta^3$-allyl nickel trifluoroacetate), $\eta^3$, $\eta^2,\eta^2$-dodeca-2(*E*),6(*E*),10(*Z*)-triene-1-ylnickel, $\eta^3$-crotyl(cycloocta-1,5-diene)nickel, $Ni(cyclooctadiene)_2$, $Ni(allyl)_2$, bis(octanoate)Ni, bis(stearate)Ni, $[PdPh(Ph_2PCHCPhO)(Ph_3PCH_2)]$, $[PdMe(Ph_2PCHCPhO)(Ph_3PCH_2)]$, $[PdPh(Ph_2PCHCPhO)(Ph_3P)]$, $[PdMe(Ph_2PCHCPhO)(Ph_3P)]$, $[PdMe(Ph_2PCHCPhO)(Et_3P)]$, $[PdMe(Ph_2PCHCPhO)(Ph_3PNH)]$, $[PdMe(Ph_2PCHCPhO)(C_5H_5N)]$, palladium bis(dibenzylacetone) (usually called $Pd(dba)_2$),

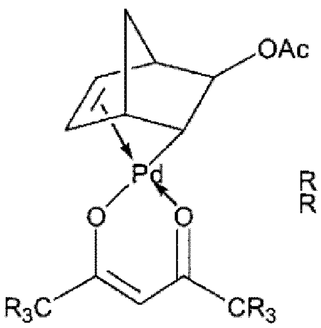

R = F
R = H

,

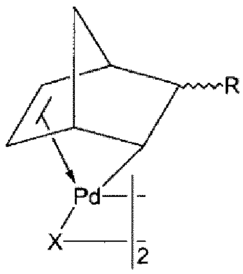

R = OMe, X = Cl
R = OMe, X = Br
R = Ph, X = I

,

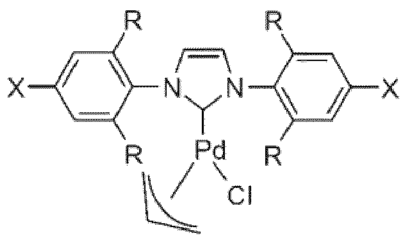

(R=methyl, X=$CH_3$) (R=methyl, X=Br)
(R=isopropyl, X=H) (R=isopropyl, X=I)
(R=isopropyl, X=Br)

,

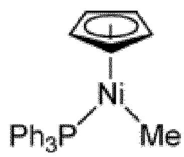

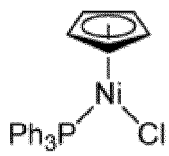

,

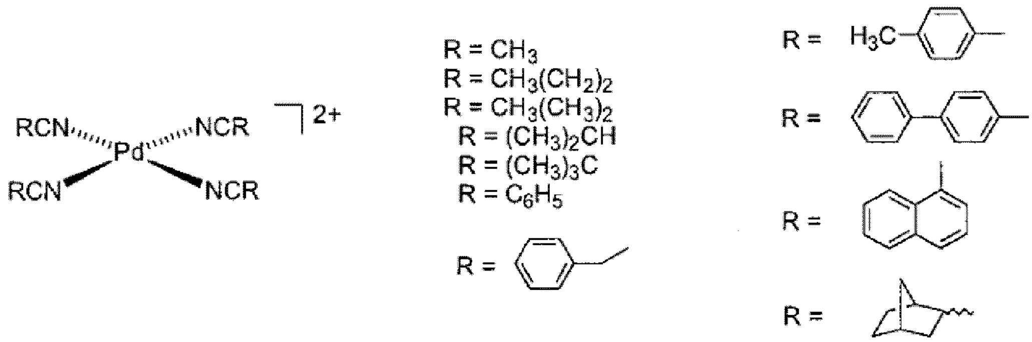

,

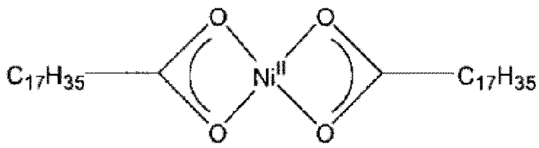

,

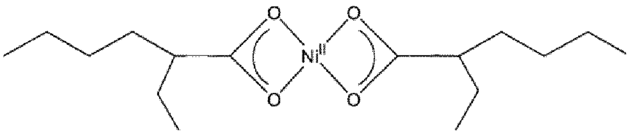

,

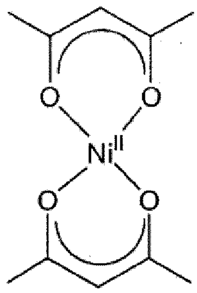

,

and

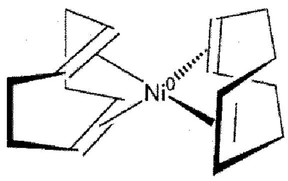

.

These catalysts may be used as is, or prepared in situ in the presence of a precursor metal complex, and eventually of cocatalysts and/or ligands.

Non-limiting examples of cocatalysts include $AgSbF_6$, $AgBF_4$, $LiBF_4$, $AgPF_6$, $TIPF_6$, $NH_4PF_6$ $AgAsF_6$, $KAsF_6$, $AgAlF_3O_3SCF_3$, $AgSbF_5SO_3F$, Ag trifluoroacetate, Ag pentafluoropropionate, Ag heptafluorobutyrate, Ag perchlorate, Ag p-toluene sulfonate, Ag tetraphenyl borates, $AlMe_3$, $AlEt_3$, MAO (methylaluminoxane), MMAO (purified methylaluminoxane), $B(C_6F_5)_3$, $Ph_3CB(C_6F_5)_4$, $PPh_3$ (triphenylphosphine), and boron trifluoride/etherate.

A preferred catalyst is the catalytic system comprising catalyst $Pd(dba)_2$ with co-catalyst $PPh_3$ and/or $AgSbF_6$.

Another preferred catalyst is:

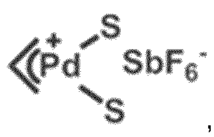

,

wherein S stands for a solvent molecule. This catalyst may be prepared in situ from catalyst palladium allyl chloride dimer $((\eta^3-C_3H_5)_2Pd_2Cl_2$, sometimes referred to as "allyl Pd" below) together with co-catalyst $AgSbF_6$.

This catalyst is able to polymerize norbornene monomers bearing polar functionalities. Other remarkable features of this catalyst are:

- It is highly active. Activities as high as $10^8$ g of PNBE per mol of Pd and per hr were obtained. This means that the cost of the Pd per kg of polymer produced is about 0.03$, which should make this catalyst economically viable.
- It polymerizes both *endo* and *exo* isomers.
- It can isomerize *endo* and *exo* isomers during the polymerization. In general, *endo* monomers deactivate the catalyst because:

    1) they form chelated species whereby both the *endo* functionality and the double bond are coordinated to the metal, and
    2) due to the steric encumbrance of the *endo* monomer, the addition of two *endo* monomers in a row is extremely slow.

  One remarkable feature of this preferred catalyst is its ability to interconvert *endo* to *exo* monomers, thus bypassing the lack of reactivity usually observed when polymerizing *endo* monomers.

Therefore, in embodiment, it deals also with a method of manufacturing an insertion polynorbornene, the method comprising the step of contacting a norbornene monomer with $(\eta^3\text{-}C_3H_5)_2Pd_2Cl_2$ and $AgSbF_6$ in a first solvent, thereby producing a catalytic polymerization reaction mixture comprising

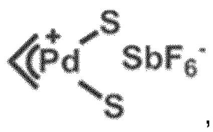,

wherein S stands a molecule of the first solvent, as a catalyst, and
thereby catalytically polymerizing the norbornene monomer into the insertion polynorbornene.

Typically for the polymerization, the solid catalyst, and if necessary a cocatalyst, are added to a solvent in a first vessel, and left to react for five minutes at room temperature. Therefore, in embodiments, the $(\eta^3\text{-}C_3H_5)_2Pd_2Cl_2$ and the $AgSbF_6$ are dissolved together in a first solvent and allowed to react together to produce a catalytic solution comprising the

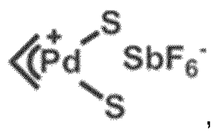,

before being contacted with the norbornene monomer.

Preferred solvents for this step are toluene, chloroform, water, dioxane, ethyl acetate, hexane, nitromethane, chlorobenzene, tetrahydrofuran, dichloromethane, tetrachloroethane, dimethylformamide, and N-methylpyrrolidinone, preferably nitromethane. Typically, the catalytic solution concentration is comprised between about 0.01 g/L and about 100 g/L, and preferably between about 0.1 g/L and about 10 g/L.

Then, in a separate vessel, the monomer is dissolved into a solvent, and a suitable amount of the catalytic solution is added to the monomer solution. Therefore, in embodiments, the norbornene monomer is dissolved in a second solvent before being contacted with the $(\eta^3\text{-}C_3H_5)_2Pd_2Cl_2$ and the $AgSbF_6$. Preferred (second) solvents to dissolve the monomer are nitromethane, chlorobenzene, dichloromethane and toluene.

In embodiments, the first and the second solvent are different from one another.

In embodiments, the first and the second solvent are identical.

The present inventors have found that that the yield of the polymerization reaction is dependent on the nature of the (first and second) solvents and monomer. When a given solvent does not provide a high yield for a given monomer, another solvent(s) should be used.

The amount of catalytic solution added to the monomer is dictated by the catalyst loading. The loading is calculated from the molar ratio of monomer to catalyst, such as for example

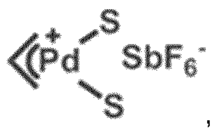,

which is typically comprised between about 100,000,000:1 and about 10:1, preferably between about 1,000,000:1 and about 1000:1.

The polymerization is then performed at a temperature ranging from about -50°C to about 200°C, preferably from room temperature to about 100°C. The duration of the reaction typically ranges from a few seconds to a week, preferably from 10 or even 5 minutes to 3 days, depending on the reactivity of the monomer. It should be noted that norbornene is significantly more reactive than functional norbornenes.

An example, of a reaction scheme is shown in Figure 2 (bottom). In this figure, the use of a combination of catalyst and a chain transfer agent allows to predetermine the molecular weight of the polymer. Therefore, in embodiments, wherein the reaction mixture further comprises a chain transfer agent. Chain transfer agents such as alpha olefins (propene, 1-butene, 1-pentene, etc.) are efficient, but other chain transfer agents could be used. In fact, it is believed that any compound bearing at least one non-cyclic double bond could act as a chain transfer agent.

Metal residues stemming from the metal catalyst (i.e. catalyst residues) can be removed once polymerization has ended. In embodiments, the method further comprises the step of removing catalyst residues from the reaction mixture.

Typically, phenyl silane is added to the reaction mixture at room temperature after polymerization ended. Thus, in embodiments, the removing step comprises adding phenyl silane to the reaction mixture to decompose the catalyst residues. The amount of phenyl silane is calculated so that the molar ratio of phenyl silane to metal catalyst, such as

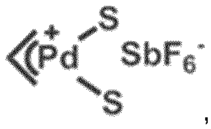,

is comprised between about 1000:1 and about 1:1, preferably between about 100:1 and about 10:1 and even 5:1.

Alternatively, hydrogen gas can be bubbled into the reaction mixture. Thus, in embodiments, the removing step comprises bubbling hydrogen gas into the reaction mixture to decompose the catalyst residues.

In any case, the solution usually turns darker, which is indicative of the catalyst decomposition.

The reaction mixture can then be centrifugated (at rates typically comprised between about 10,000 and about 500 rpm, preferably at rates between about 4,000 and about 1,000 rpm), or filtered and a solution containing the polymer is separated from the black catalyst solid residues, which contain the metal impurities. Thus, in embodiments, the removing step further comprises centrifuging or filtering the reaction mixture and separating a solution containing the insertion polynorbornene from a solid containing the catalyst residues.

Then, the polymer is typically collected from the solution by evaporating about 80% of the solvent and by adding the resulting viscous solution to a non-solvent in order to trigger polymer precipitation. Thus, in embodiments, the method further comprises the step of isolating the insertion polynorbornene from the solution by adding a non-solvent to the solution to precipitate the insertion polynorbornene, and then isolating the insertion polynorbornene from the solution. Typical examples of non-solvents are diethyl-ether, ethyl acetate, methanol, water, hexane, pentane, cyclohexane, cyclopentane, dibutyl ether, ethanol, isopropanol, methyl ether ketone, methyl tert-butyl ether, preferably ethyl acetate, diether ether, methanol and hexane. Preferably, the solid polymer can then be washed with the non-solvent, collected and dried.

Alternatively, once the polymer has reacted with phenyl silane or the hydrogen gas, it can then be collected as described above (using a non-solvent for precipitation) without prior centrifugation (i.e. together with at least part of the decomposed catalyst). Thus, in embodiments, the removing step further comprises the step of isolating the insertion polynorbornene from the reaction mixture containing the decomposed catalyst residues by adding a non-solvent to the reaction mixture to precipitate the insertion polynorbornene, and then isolating the insertion polynorbornene together with at least part of the decomposed catalyst residues from the reaction mixture.

To complete the removal of the catalyst residues, the isolated, and preferably dried, polymer can then be solubilized in a (third) solvent such as water, dioxane, hexane, tetrahydrofuran, dimethyl formamide, dimethyl sulfoxide, N-methyl pyrrolidinone, dichloromethane, or chloroform, preferably dimethyl formamide, dimethyl sulfoxide, or N-methyl pyrrolidinone, and then heated between about 50 and about 150°C (preferably between about 60 and about 100°C) while being stirred gently on an orbital shaker for a duration of about 5 minutes to about 48 hours (preferably about 1

hour to about 6 hours). Black catalyst residues containing metal impurities are then aggregated through this process. They can then be conveniently separated either by filtration or centrifugation. Thus, in embodiments, the removing step further comprises (as described above) solubilizing the insertion polynorbornene in a third solvent to produce a solution, heating said solution while stirring gently to agglomerate catalyst residues, and separating the agglomerated catalyst residues from the solution. Then, the insertion polynorbornene can be isolated from the solution as described above. Thus, in embodiments, the method further comprises the step of precipitating the insertion polynorbornene by adding a non-solvent to the solution and isolating the insertion polynorbornene from the solution.

Alternatively, the latter aggregation process can also be applied to polymers that have not been treated with phenyl silane in order to remove catalyst residues. Thus, in embodiments, after polymerization, the method further comprises the step of isolating the insertion polynorbornene from the reaction mixture by adding a non-solvent to the reaction mixture to precipitate the insertion polynorbornene, and then isolating the insertion polynorbornene from the reaction mixture. Then, the method may further comprises the steps of solubilizing the insertion polynorbornene in a third solvent to produce a solution, heating said solution while stirring gently to agglomerate catalyst residues, and separating the agglomerated catalyst residues from the solution. Finally, the method may further comprise the steps of precipitating the insertion polynorbornene by adding a non-solvent to the solution and isolating the insertion polynorbornene from the solution. All of these steps being as described above.

Of note, when the polymerization is performed without a solvent (the monomer being the solvent), the reaction product has the aspect of a polymeric glass, which is solubilized with a minimum of solvent, typically water, tetrahydrofuran, dimethyl formamide, dimethyl sulfoxide, N-methyl pyrrolidinone, dichloromethane, or chloroform, preferably tetrahydrofuran. Then, the viscous solution is added to a non-solvent, as described above.

In another aspect, there is provided a reaction mixture in which the above method is carried out. Thus, in embodiments, it relates to a reaction mixture comprising, in a solvent, a norbornene monomer together with

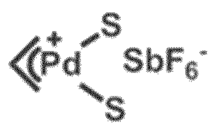

wherein S stands a solvent molecule, as a catalyst.

As described above, this reaction is useful for the catalytic polymerization of the norbornene monomer into an insertion polynorbornene. The monomer as those described at the beginning of the present section.

In embodiments, the solvent is nitromethane, chlorobenzene, tetrahydrofuran, dichloromethane, tetrachloroethane, dimethylformamide, or N-methylpyrrolidinone, preferably nitromethane

In embodiments, the molar ratio of norbornene monomer to

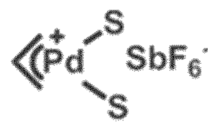

in the reaction mixture ranges from about 100,000,000:1 to about 10:1, preferably from about 1,000,000:1 to about 1000:1.

In embodiments, the reaction mixture further comprises a chain transfer agent, as described above.

In embodiments, the reaction mixture is at a temperature ranging from about -50°C to about 200°C, preferably from room temperature to about 100°C.

*Advantages of the Insertion Polynorbornenes*

In embodiments, the insertion polynorbornenes are polycyclic addition polymers comprising directly linked polycyclic repeating units without any internal backbone unsaturation. Such polymers, especially that of high molecular weights, often desirably have inherent thermoxidative stability, high glass transition temperature profiles and/or high internal rigidity.

In embodiments, due to its bicyclic structure, the insertion polynorbornenes are chemically and thermally resistant. As a comparison, pure insertion polynorbornene (without substituents) has a decomposition onset at 350°C and a Tg around 330°C. Pure insertion polynorbornene is also transparent, non-birefringent, and so far has not demonstrated any toxicity or harmful effect to the environment.

In embodiments, the above-mentioned processes for the preparation of functional insertion polynorbornenes are efficient, environmentally friendly, and/or inexpensive.

## Thermoset Resins

In another aspect, the present invention provides thermoset resins based on the above insertion polynorbornenes. A thermoset resin is a material that irreversibly cures through crosslinking of functional groups therein. The thermoset resins of the invention comprise a reactive compound bearing at least two functional groups F (identical or different from one another) per molecule and a hardener bearing at least two functional groups E (identical or different from one another) that react with functional groups F, per molecule,. During curing, the functional groups F react with functional groups E forming a 3D network (in the topological sense).

Curing may be induced by heat, in the presence of a catalyst or not, or irradiation. Therefore, in embodiments, the thermoset resin may also comprise a catalyst. Such catalyst is well known to the skilled person, who will know how to select it depending on the nature of the functional groups present on the reactive compound and the hardener. Non-limiting examples of catalysts include: Aluminum acetylacetonate, Aluminum lactate, Bismuth octoate, Calcium octoate, Cerium naphthenate, Chromium(III)2-ethylhexanoate, Cobalt octoate, Copper(II)acelylacetonate, Iron (III)acetylacetonate, Magnesium 2,4-Pentadionate, Manganese naphthenate, Nickel acetylacetonate, Stannous octoate, Ti ethyl acetoacetate chelate, Ti acetylacetonate chelate, Ti triethanolamine chelate, Zinc acetate, Zinc acetylacetonate, Zinc di-2-ethylhexyldithio-phosphate, Zinc nitrate, Zinc octoate, Zirconium 6-methylhexanedione, Zirconium octoate, Zirconium(IV) trifluoroacetylacetone, 2-Ethylimidazole, 2-Methylimidazole, 2-ethyl-4-methylimidazole, (2-hydroxypropyl) imidazole, 1-(2-cyanoethyl)-2-ethyl-4-Methylimidazole, Amine ADMA-10, Phosphonium salt, 2-Ethylhexylamine, Bis(2-ethylhexyl)amine, Tetrabulyl phosphonium bromide, Proton sponge, Dodecyldimethylamine, N,N-Dimethylbenzylamine, DBU/Octanoic acid, Tetramethyl guanidine, Benzyltrimethyl ammonium bromide, Benzyltrimethyl ammonium hydroxide, Tetrabutyl ammonium hydroxide, 2,4,6-Tri(dimethylaminomethyl) phenol, bis(2-Dimethylaminoethyl)ether, N,N-Dimethylaminopropylamine, N,N-Dimethylcyclohexylamine, N,N,N',N',N"-Pentamethyldiethylenetriamine, Triethylenediamine, Diaminobicyclooctane, N'N'-dimethylpiperazine, N,N-dimethylbenzylamine, N,N-dimethylcethylamine, N,N,N',N",N"-pentamethyl-dipropylene-triamine, Tritehylamine, Diethanolamine, 2(2-Dimethylaminoethoxy)ethanol, N-[2-(dimethylamino)ethyl]-N-methylethanolamine, Dimethylethanolamine, 3-Dimethylamino-N,N-Dimethy-Ipropionamide, N-Ethylmorpholine, Dimethylaminomethylphenolm, and 2-Ethylhexanoic acid salt of 2,4,6-Tri(dimethylaminomethyl) phenol. Radical initiators can also be used as catalysts. Non-limiting examples of radical initiators include: Benzoyl peroxide, Ditertbutyl peroxide, Dicumyl peroxide, Azobisisobutyronitrile, Hydrogen peroxide alone or in combination with Ascorbic acid or Sodium dithionite and 4,4'-Azobis(4-cyanopentanoic acid).

Preferred resins are those that are thermally curable. Thermal curing can occur, for example, at temperatures between about 20 and about 300°C depending on the exact nature of the reactive compound and hardener and on their relative ratios to the functional groups, the pairing of functional groups E and F can be, for example, as follows.

| Functional Group F on the Reactive Compound | Functional Group E on the Hardener |
|---|---|
| Oxirane | -OH,<br>-SH,<br>$-NH_2$,<br>-NHR, and/or<br>-COOH |
| Anhydride | -OH,<br>-SH,<br>$-NH_2$,<br>-NHR, and/or<br>-COOH |
| $-NH_2$<br>-NHR | Oxirane,<br>-COOH,<br>Isocyanate,<br>Unsaturated carbonyl group,<br>Ester, and/or<br>Anhydride |

(continued)

| Functional Group F on the Reactive Compound | Functional Group E on the Hardener |
|---|---|
| -COOH | -OH,<br>Oxirane,<br>-SH,<br>$-NH_2$, and/or<br>-NHR |
| -SH | -COOH,<br>Isocyanate,<br>Ester,<br>Oxirane,<br>Anhydride, and/or<br>Double bond (C=C) |
| Ester | -OH,<br>-SH,<br>$-NH_2$, and/or<br>-NHR |
| -OH | -COOH,<br>Oxirane,<br>Anhydride,<br>Isocyanate, and/or<br>Ester |
| Isocyanate | -OH,<br>Ester,<br>$-NH_2$, and/or<br>-NHR |
| Azide | Terminal alkyne |
| Halogen | -OH,<br>-SH,<br>$-NH_2$, and/or<br>-NHR |
| Double bond (C=C) | -SH,<br>Double bond (C=C) |
| Triple bond (C≡C) | Azide |

wherein R is a linear or branched (preferably $C_{1-20}$) alkyl, and wherein the halogen is preferably bromine, chlorine or fluorine.

It relates to a kit comprising the reactive compound and the hardener; each provided separately. This kit may also comprise instructions to mix the reactive compound and the hardener and then cure the resulting mixture to produce a cured thermoset resin.

It also relates to a mixture of the reactive compound and the hardener (uncured). In embodiments, this mixture can be provided in a kit that further comprises instructions to cure the mixture to produce a cured thermoset resin.

The present invention also relates to a cured thermoset resin comprising the reactive compound cross-linked with the hardener in a 3D network.

In all of the above embodiments of the thermoset resins, at least one of the following conditions is met:

Mode A. (not part of the invention) the reactive compound is an insertion polynorbornene as described above, the insertion polynorbornene comprising at least two functional groups F per chain, or

Mode B. (according the invention) the hardener is an insertion polynorbornene as described above, the insertion polynorbornene comprising at least two functional groups E per chain.

These Modes A and B will be further discussed below.

As can be seen above, the insertion polynorbornene comprises at least two functional groups F or E per chain. These functional groups will usually be found in one or more of $R^1$ to $R^4$. These functional groups can be the same or different. These functional groups can be located on a single repeat unit in the insertion polynorbornene, but are preferably located in distinct repeat units. These distinct repeat units can be identical or different from one another. The insertion polynorbornene can also comprise further different monomer units of various natures such as those presented in the above sections. In other words, the insertion polynorbornene can be a copolymer or a homopolymer.

Preferred repeat units comprising functional groups E or F are those listed in the sections entitled *"Monomers Comprising Oxirane Functional Groups", "Monomers Comprising Functional Groups that React with Oxirane Functional Groups",* and *"Monomers Comprising Functional Groups E or F'* above.

In more specific embodiments of Modes A and B, both of the above conditions are met in a single resin. Such embodiments can be conceived of as hybrid modes. They include cases where the reactive compound is an insertion polynorbornene as in Mode A and the hardener is another insertion polynorbornene as in Mode B.

Such embodiments also include cases where the reactive compound and the hardener are a single insertion polynorbornene, this insertion polynorbornene being as described above and being a copolymer comprising simultaneously at least two functional groups F (similarly to Mode A) and at least two functional group E (similarly to Mode B).

Further such embodiments also include cases where the reactive compound and the hardener are the same insertion polynorbornene, this insertion polynorbornene being as described above and comprising at least two oxirane functional groups. Oxirane groups can indeed thermally ring open into ethyl alcohol functionalities, which can react with other oxirane groups (thus acting as hardeners).

All of such hybrid embodiments are covered by the invention. However, Modes A and B above are preferred.

When the hardener or the reactive compound is not an insertion polynorbornene according to the invention, it can be any hardener or reactive compound (either small molecules or polymers) known to be useful in the art.

Resins operating according to mode A are shown in Figure 3. These resins are based on the crosslinking of:

- a reactive compound (filled blobs in Figure 3) that is an insertion polynorbornene comprising at least two functional groups F per chain with
- a hardener (empty blobs in Figure 3) comprising at least two functional groups E per hardener molecules.

In Figure 3, G is the functionality that results from the reaction of functional group F with functional group E.

In preferred embodiments, the repeat units comprising functional groups F are those listed in the sections entitled *"Monomers Comprising Functional Groups E or F".* Further, the nature of functional groups E on the hardener will depend on the nature of the functional groups F as described above. Non-limiting examples hardeners include:

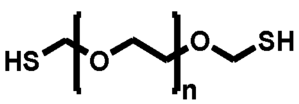, 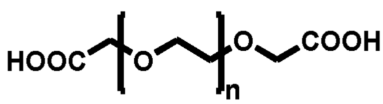, 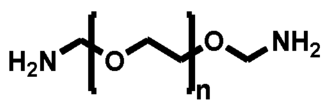, 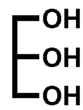,

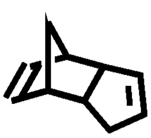, 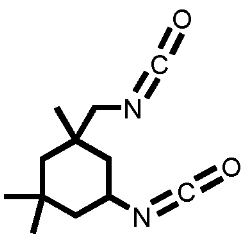, 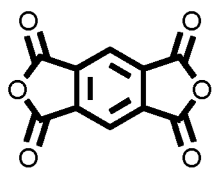, 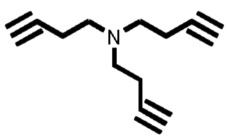,

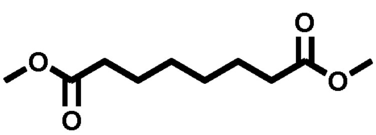, 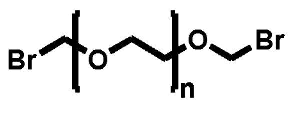, and 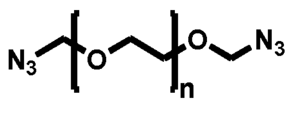.

*Epoxy Resins*

Preferred thermoset resins are thermoset epoxy resins. In such resins, the reactive compound bears at least two oxirane functional groups and the hardener comprises at least two functional groups (identical or different from one

another) that react with the oxirane functional groups. As stated above, preferred functional groups that react with oxirane functional groups are -OH, -SH, $-NH_2$, -NHR, and -COOH, wherein R is as defined above.

*Epoxy Resins Mode A*

In embodiments, the epoxy resin operates according to Mode A, which is schematized Figure 4. Operation in Mode A is based on the crosslinking of:

- a reactive compound (filled blobs in Figure 4) that is an insertion polynorbornene comprising at least two oxirane functions groups per chain with
- a hardener (empty blobs in Figure 4) comprises at least two functional groups that react with oxirane functional groups per hardener molecules.

Preferred insertion polynorbornenes are those comprising the repeat units shown in the section entitled *"Monomers Comprising Oxirane Functional Groups"* above.

The hardener may be any such hardener used in the fabrication of conventional epoxy resins. The two or more functional groups that react with oxirane functional groups can be the same or different.

Non-limiting examples of hardeners with -OH functional groups include:

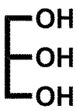, 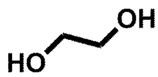, 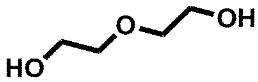, 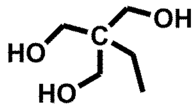, 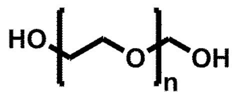,

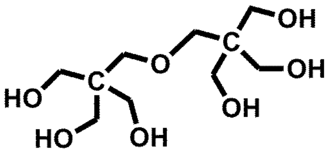, 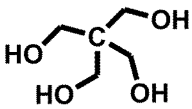, and 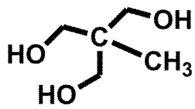.

Non-limiting examples of hardeners with $-NH_2$ functional groups include:

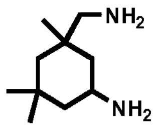, 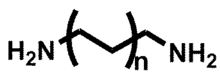, 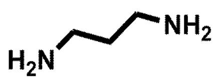,

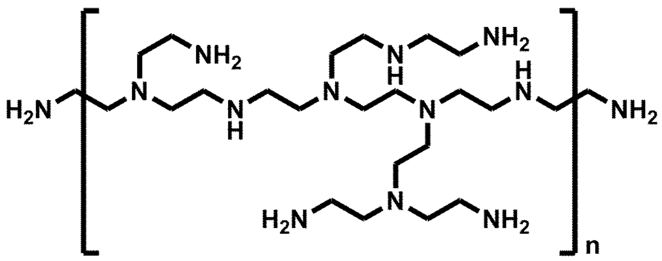, 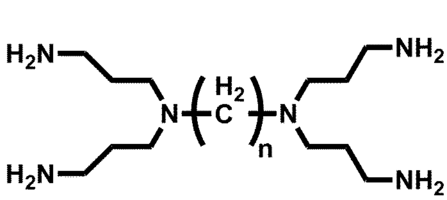,

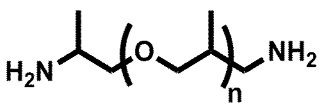, 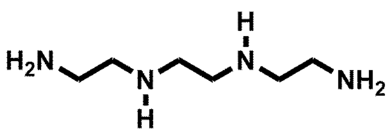, 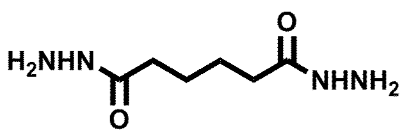,

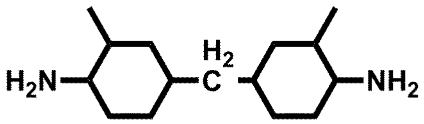, 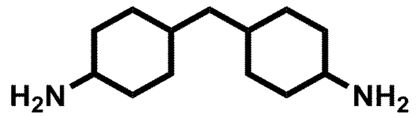

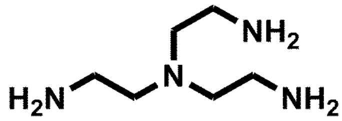, 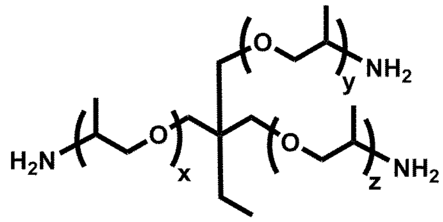,

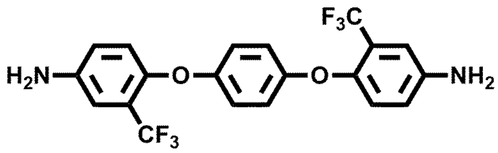, 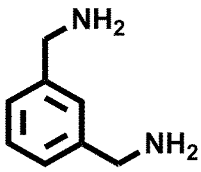, 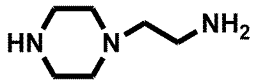,

and

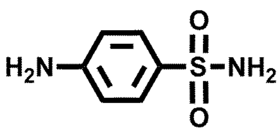,

wherein n, x, y and z are independently integers ranging from 1 to 10,000, preferably from 1 to 100, and more preferably from1 to 20.

Non-limiting examples of hardeners with -COOH functional groups include:

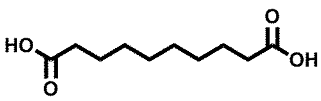, 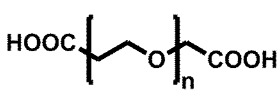, 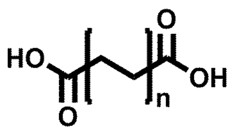, and 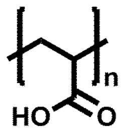,

wherein n is an integer ranging from 1 to 10,000, preferably from 1 to 100, and more preferably from 1 to 20.

As such, the above epoxy resins are advantageously free of bisphenols. However, if desired, a bisphenol-based hardener can be used. Non-limiting examples of such hardeners include bisphenol A, AP, AF, B, BP, C, E, F, G, M, S, P, PH, TMC, and Z, bisphenol A bis(2,3-dihydroxypropyl) ether, 4-aminophenyl sulfone, 4,4'-oxydianiline, 4,4'-diaminodiphenylmethane, and 3-aminophenyl sulfone.

*Epoxy Resins Mode B*

In embodiments, the epoxy resin operates according to Mode B, which is schematized Figure 5. Operation in Mode B is based on the crosslinking of:

- a reactive compound (empty blobs in Figure 5) bearing at least two oxirane functional groups per molecule with
- a hardener (filled blobs in Figure 5) that is an insertion polynorbornene comprising at least two functional groups that react with oxirane functional groups per chain.

Preferred insertion polynorbornenes are those comprising the repeat units shown in the section entitled *"Monomers Comprising Functional Groups that React with Oxirane Functional Groups"* above.

The reactive compound may be any such reactive compound used in the fabrication of conventional epoxy resins. Non-limiting examples of reactive compounds include:

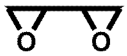, 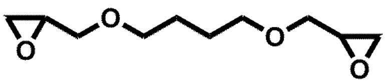, 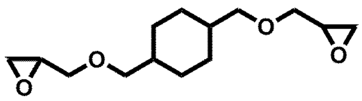, 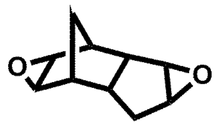,

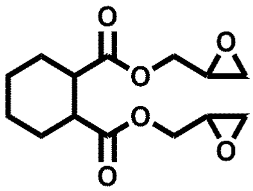, 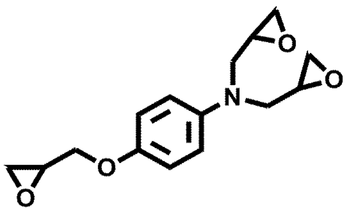, 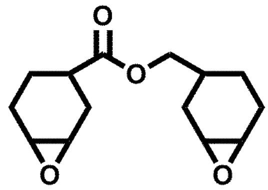, 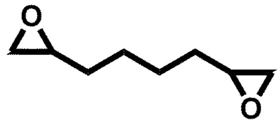,

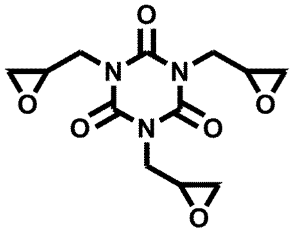, 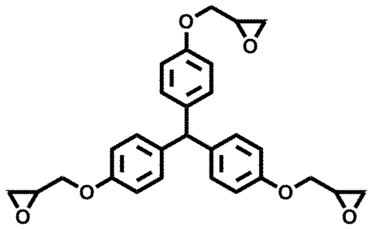, 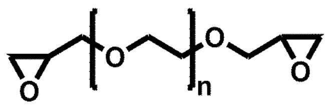,

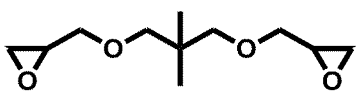, 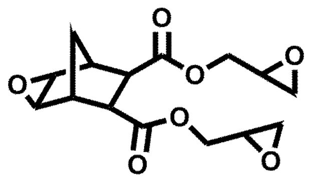, 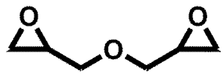,

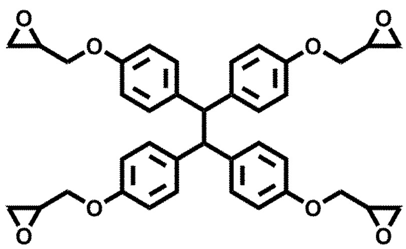, 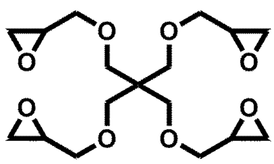, 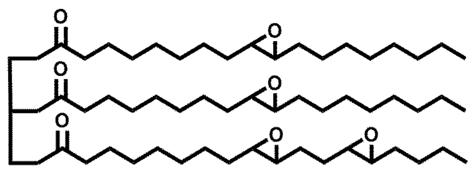,

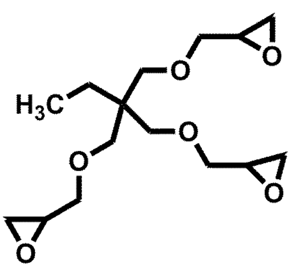, 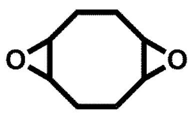, 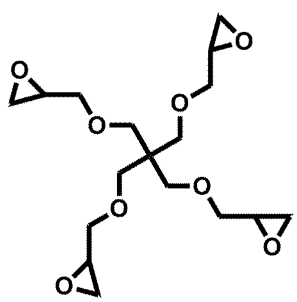, 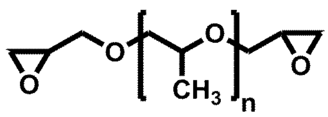,

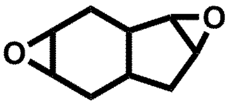, 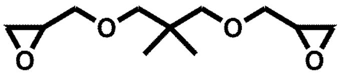, 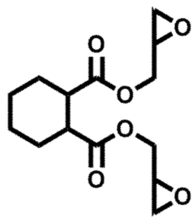,

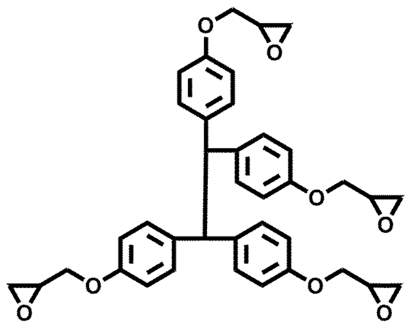, 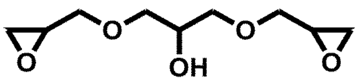, 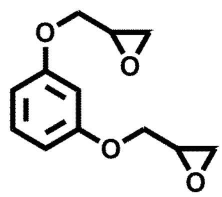,

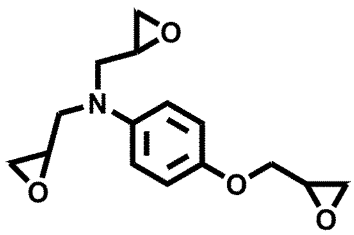, 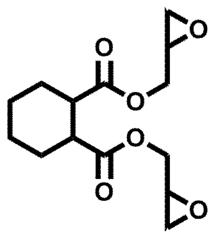, 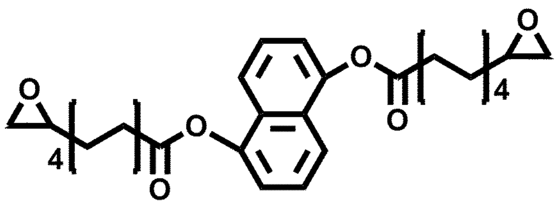,

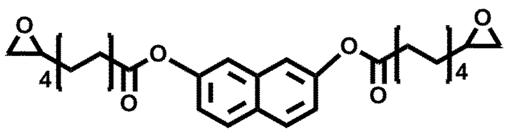 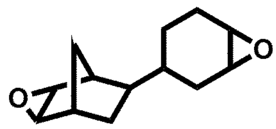, 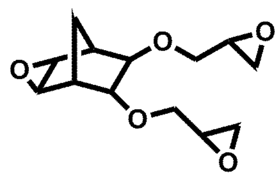,

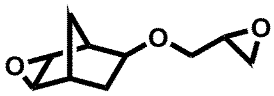, and 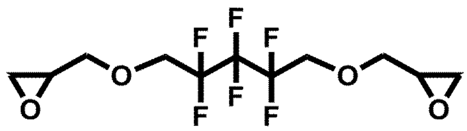.

As such, the above epoxy resins are advantageously free of bisphenols. However, if desired, a bisphenol-based reactive compound can be used. Non-limiting examples of such compounds include diglycidyl bisphenol A (DGEBA), bisphenol A diglycidyl ether brominated, bisphenol A propoxylate diglycidyl ether, diglycidyl bisphenol F, and other diglycidyl ethers of common bisphenols.

*Formulation of the Thermoset Resins*

As with conventional thermoset resins, the thermoset resins of the invention can be used in blends with other thermosets, with thermoplastic polymers and/or elastomeric polymers, with fibers (such as carbon fibers, glass fibers, polyaramid fibers, carbon nanotubes, including single wall carbon nanotubes (SWNT), or other nanotubes) as well as with nanoparticles and/or microparticles.

They can also be formulated with various additives and fillers in order to achieve desired processing properties or final properties as well known in the art. Exemplary additives include curing catalysts, antioxidants, viscosity modifiers, processing aids, releasing agents, flame retardants, dyes, pigments, and UV-stabilizers.

However, in embodiments, it is an advantage of the thermoset resins of the invention that they do not need to

be so formulated to present desirable end-properties (reference is made to the Examples below). In other words, the thermoset resins can be free of additives and fillers.

*Properties, Uses and Advantages of the Thermoset Resins*

In embodiments, the thermoset resins, especially the thermoset epoxy resins, once cured, have high glass transition temperatures (Tg). For example, in embodiments, the resins have a Tg that ranges between about 100°C and about 400°C, preferably between about 150°C and about 350°C, and most preferably above about 200°C. Reference is made to Example 4.

A high Tg is desirable as it is known to correlate with desirable end-properties such as resistance, stability, and higher mechanical properties at elevated temperature. Without being limited by theory, it is believed that this can be at least partly due to the presence of rigid-rod molecules (the insertion polynorbornenes). Therefore, in embodiments, the thermoset resin has a high thermooxidative, chemical, and/or heat resistance and/or a high UV stability.

In embodiments, the thermoset resin has a high rigidity. Again, reference is made to Example 4.

In fact, in embodiments, the thermoset resins, especially the thermoset epoxy resins, can have performances comparable or better than conventional epoxy resins.

As disclosed above, in preferred embodiments, the thermoset resins are free from bisphenol compounds.

The thermoset resins of the invention are expected to be useful in many of the same applications as conventional thermoset resins. Reference is made to the "Background of the Invention" section for a list of these conventional applications.

Furthermore, the polynorbornene before crosslinking is easily electrospun, leading to the formation of thin continuous fibers with diameters comprised between 10 nm and 50 micrometers, and more usually between 500 nm and 10 microns. The polymer can be electrospun in the presence of a crosslinker and the fibers can be then cross-linked once electrospun. Alternatively, the fibers can be electrospun by the same way without crosslinker and be thermally crosslinked upon curing. Interestingly, heating and crosslinking does not affect the morphology of electrospun fibers.

Disclosed above are manufacture methods that, in embodiments, uses widely available/inexpensive raw materials and/or are economically viable and/or environmentally friendly.

**Definitions**

The use of the terms "a" and "an" and "the" and similar referents in the context of describing the invention (especially in the context of the following claims) are to be construed to cover both the singular and the plural, unless otherwise indicated herein or clearly contradicted by context.

The terms "comprising", "having", "including", and "containing" are to be construed as open-ended terms (i.e., meaning "including, but not limited to") unless otherwise noted.

Recitation of ranges of values herein are merely intended to serve as a shorthand method of referring individually to each separate value falling within the range, unless otherwise indicated herein, and each separate value is incorporated into the specification as if it were individually recited herein. All subsets of values within the ranges are also incorporated into the specification as if they were individually recited herein.

Similarly, herein a general chemical structure with various substituents and various radicals enumerated for these substituents is intended to serve as a shorthand method of referring individually to each and every molecule obtained by the combination of any of the radicals for any of the substituents. Each individual molecule is incorporated into the specification as if it were individually recited herein. Further, all subsets of molecules within the general chemical structures are also incorporated into the specification as if they were individually recited herein.

All methods described herein can be performed in any suitable order unless otherwise indicated herein or otherwise clearly contradicted by context.

The use of any and all examples, or exemplary language (e.g., "such as") provided herein, is intended merely to better illuminate the invention and does not pose a limitation on the scope of the invention unless otherwise claimed.

No language in the specification should be construed as indicating any non-claimed element as essential to the practice of the invention.

Herein, the term "about" has its ordinary meaning. In embodiments, it may mean plus or minus 10% or plus or minus 5% of the numerical value qualified.

Unless otherwise defined, all technical and scientific terms used herein have the same meaning as commonly understood by one of ordinary skill in the art to which this invention belongs.

Herein, the terms "alkyl", "alkylene", "alkenyl", "alkenylene", "alkynyl", "alkynylene" and their derivatives (such as alkoxy, alkyleneoxy, etc.) have their ordinary meaning in the art. It is to be noted that, unless otherwise specified, the hydrocarbon chains of these groups can be linear or branched. Further, unless otherwise specified, these groups can contain between 1 and 20 carbon atoms, more specifically between 1 and 12 carbon atoms, between 1 and 6 carbon

atoms, between 1 and 3 carbon atoms, or contain 1 or 2 carbon atoms.

Other objects, advantages and features of the present invention will become more apparent upon reading of the following non-restrictive description of specific embodiments thereof, given by way of example only with reference to the accompanying drawings.

## DESCRIPTION OF ILLUSTRATIVE EMBODIMENT

The present invention is illustrated in further details by the following non-limiting examples.

### Example 1a - Manufacture of Poly A -100% Epox (BC246)

Poly A - 100% epox, a polymer prepared from NBE-vinyl that is fully epoxidated, and its synthesis scheme are shown in Figure 6. Note that this polymer is referred to as "polyNBE-epoxy" in this figure.

Poly(NBE-vinyl) was prepared from NBE-vinyl using either a palladium catalyst or a nickel catalyst. Complete epoxidation of poly(NBE-vinyl) was carried out using either meta-chloro perbenzoic acid (mCPBA) or an $H_2O_2$/Acid mixture. As can be seen below, all these reagents allowed obtaining the desired product.

*Preparation of poly(NBE-vinyl)*

*Palladium catalyst*

A 50 mL round bottom flask located in a nitrogen filled glove box was loaded with 60 mg of allyl palladium chloride dimer (allyl Pd), 138 mg of silver hexafluoroantimonate ($AgSbF_6$) and 15 mL of nitromethane. The mixture was stirred magnetically at room temperature for 10 minutes. Then, 20 g of 5-vinyl-2-norbornene (NBE-vinyl, mixture of *endo* and exo) was added. The mixture was heated at 50°C for 15 hours. The resulting solution was removed from the glove box and precipitated with 400 mL of methanol. The mixture was centrifugated (3500 rpm for 5 minutes) in order to remove excess supernatant, and the solid was collected by filtration over fritted glass filter. The polymer (Poly(NBE-vinyl)) was dried in a vacuum oven (100°C, 2 hours). Yield: 15g (75%)

*Nickel catalyst*

A 50 mL round bottom flask located in a nitrogen filled glove box was loaded with 10 mg of $NiCl_2$, 23 mg of silver hexafluoroantimonate ($AgSbF_6$) and 10 g of chlorobenzene. The mixture was stirred magnetically at room temperature for 10 minutes. Then, 4 g of 5-vinyl-2-norbornene (mixture of *endo* and exo) was added. The reaction was left for 48 hours at 70°C. The resulting viscous solution was removed from the glove box and precipitated with 100 mL of acetone. The powder was collected by filtration then the polymer was dried in a vacuum oven (100°C, 2 hours). Yield: 2.5g (63%)

*Epoxidation*

*m-CPBA*

In a 250 mL round bottom flask, 4g of poly(NBE-vinyl) were solubilized in 60 g of chloroform. The solution was cooled in an ice-bath, then 8g of meta-chloro perbenzoic acid (mCPBA) were added. The round bottom flask was then equipped with a refrigerant. The temperature was slowly raised to room temperature over 6 hours, and left at room temperature for 6 additional hours. The solution was centrifugated (3500 rpm for 5 minutes) and the yellow supernatant was separated from the white solid. The yellow supernatant was added to a separatory funnel, and deionized water (60 mL) was added. After vigourous mixing, both layers were separated, and the organic layer was again washed with water (60 mL) twice. The chloroform solution was added to 400 mL of acetone, and a white powder was precipitated, which was collected by filtration. The polymer was dried by vacuum suction. Yield: 3.1g (77%) - Residual amount of double bonds $\leq$ 1% (as measured by NMR)

*$H_2O_2$/Acid*

In a 500ml round bottom flask, 16g of poly(NBE-vinyl) were solubilized in 150ml of DCM. Then successively 20g of formic acid, 2.5g of acetic acid and 30g of $H_2O_2$ were added slowly. The mixture was left for 24h at reflux. The solution was centrifuged (3500 rpm for 10 minutes), the supernatant (mixture of aqueous solution and a gel) was removed and the yellow liquid at the bottom (chloroform containing PolyNBE-epoxy) is separated, dry over $MgSO_4$ then filtrated.

This organic solution is then concentrated to obtain a viscous solution which is precipitated with 600ml of diethyl ether to obtain a white powder which was collected by filtration. The polymer was dried by vacuum suction at room temperature. Yield: 13g (81%) - Residual amount of double bonds = 1% (as measured by NMR).

**Example 1b - Manufacture of Poly A -100% Epox by Another Method**

The above polymer was also prepared as follows. This synthesis scheme is also shown in Figure 6.

*Polymerization of NBE-vinyl with $Pd(dba)_2$*

In a round bottom flask, 480mg of bis(dibenzylideneacetone)palladium(0), 286mg of $AgSbF_6$, 219mg of triphenylphosphine are solubilized in 100g of toluene at 70°C. Then, 100g of 5-vinyl-2-norbornene were added under vigorous stirring and heated at 70°C for 24h. A black viscous solution was obtained. The polymer was precipitated with 350 mL of methanol and washed 4 times with methanol. Then the grey powder was filtered and dried under vacuum at 50°C overnight. Yield: 98 g of polymer.

*Epoxidation of polyNBE-vinyl*

In a 2.5L round bottom flask, 90g of polymer were solubilized in 1.1L of dichloromethane. Then successively 28g of acetic acid, 168g of formic acid and 435g of $H_2O_2$ (30% v:v in water) were added under vigorous stirring at room temperature, and stirred for 18h. During the reaction the solution turned yellow and a white supernatant foam was formed. At the end of the reaction the solution was centrifuged and the orange limpid solution was collected and was separated from the solid. The solid was washed with dichloromethane and the dichloromethane solutions were combined. The combined solution was dried over $MgSO_4$, filtered and concentrated with a rotary evaporator until a viscous solution was obtained. The polymer was precipitated and washed 4 times with acetone. The white powder was filtered and dried overnight under vacuum at 40°C. Yield: 65%.

**Example 2 - Manufacture of Poly A - 87% Epox (BC 261)**

This polymer is similar to the polymers of Examples 1a and 1b, but has a smaller degree of epoxidation. It was synthesized as follows.

*Preparation of poly(NBE-vinyl)*

A 100 mL round bottom flask located in a nitrogen filled glove box was loaded with 120 mg of allyl palladium chloride dimer (allyl Pd), 260 mg of silver hexafluoroantimonate ($AgSbF_6$) and 10 g of nitromethane. The mixture was stirred magnetically at room temperature for 10 minutes. Then, 25 g of 5-vinyl-2-norbornene (mixture of *endo* and *exo*) was added. The mixture was heated at 50°C. The reaction was initially very exothermic. The reaction was left for 12 hours at 50°C. The resulting solution was removed from the glove box and THF (50 mL) was added to the viscous solution in order to decrease the viscosity. The mixture was precipitated with 600 mL of methanol. The mixture was centrifuged (3500 rpm for 5 minutes) in order to remove excess supernatant, and the solid was collected by filtration over fritted glass filter. The polymer was dried in a vacuum oven (100°C, 2 hours). Yield: 23g (92%)

*Epoxidation*

In a 500 mL round bottom flask, 20g of poly(NBE-vinyl) were solubilized in 300 g of chloroform. The solution was cooled in an ice-bath, then 30g of meta-chloro perbenzoic acid (mCPBA) were added. The round bottom flask was then equipped with a refrigerant. The temperature was slowly raised to room temperature over 3 hours, and left at room temperature for 5 additional hours. Then 10g of mCPBA was added, and the reaction was left at room temperature for 15 hours. The solution was centrifugated (3500 rpm for 5 minutes) and the yellow supernatant was separated from the white solid. The yellow supernatant was added to a separatory funnel, and deionized water (60 mL) was added. After vigourous mixing, both layers were separated, and the organic layer was again washed with water (60 mL) twice. The chloroform solution was added to 400 mL of acetone, and a white powder was precipitated, which was collected by filtration. The polymer was dried by vacuum suction. Yield: 12g (60%) - Residual amount of double bonds = 13% (as measured by NMR).

**Example 3 - Manufacture of Poly B**

Poly B, a polymer prepared from NBE-COOH, and its synthesis scheme are shown in Figure 7. Note that this polymer is referred to as "polyNBE-COOH" in this figure.

The reaction was performed under inert atmosphere. In a 50 mL round bottom flask, 53 mg of allyl palladium chloride dimer (allyl Pd) and 121 mg of silver hexafluoroantimonate (AgSbF6) were added to 30 g of nitromethane. The yellow solution was stirred for 10 minutes. Then, 20 g of NBE-COOH (80% *endo)* was added to the mixture, and the reaction was left for 1 hour at room temperature, and then was heated for 3 hours at 50°C. Using a rotary evaporator, approx. 25g of nitromethane was evaporated, and tetrahydrofuran (50 mL) was added to dissolve the polymer. The solution was added to 500 mL of diethyl ether (hexane could also be used) and a grey powder precipitated. It was separated by filtration over filter paper, and the polymer was dried in vacuum at 100°C for three hours. Yield : 15g (75%)

**Example 4 - Manufacture of Poly C**

Poly C and its synthesis scheme are shown in Figure 8.

In a 250ml round bottom flask equipped with a condenser, 10g of PolyB were solubilized in 100g of dioxane at 100°C. A solution containing 10g of ethanolamine and 30g of dioxane was added dropwise over 30min under vigorous stirring. After the addition, the resulting suspension was kept at 100°C under stirring for 1hour. It was cooled down and centrifuged and the white precipitate was collected and washed 5 times with acetone. The precipitate was then filtered and dried under vacuum at 60°C overnight, leading the polymer Poly C in higher than 80% yield. The resulting polymer was found to be highly soluble in water.

**Example 5 - Manufacture of PolyNBE($CO_2$Me) with NBE($CO_2$Me) 73% *endo***

PolyNBE($CO_2$Me) and its synthesis scheme are shown in Figure 9.

The monomer (73% *endo)* was prepared as follows. 269g (3.13 mol, 1.15eq) of methyl acrylate were mixed with 2.1g of hydroquinone (0.019 mol, 0.007eq) and diluted with 100ml of diethyl ether. This solution was cooled down on an iced bath, and freshly cracked cyclopentadiene (180g, 2.73 mol, 1eq) was added dropwise over 60 minutes. When the addition was complete, the reaction was stirred under reflux for 12h. Then diethyl ether was evaporated and the product (a clear liquid) was collected by distillation under vacuum (bp = 110°C at 10mmHg). Yield: 349g (84%). $^1$H NMR (300MHz, $CDCl_3$) $\delta$ 6.10 (m, 1H), 6.04 (m, 0.73H), 5.85(m, 1H), 3.61(s, 1.17H), 3.53(s, 3.16H), 3.11(s, 1.01H), 2.95(s, 0.37H), 2.91-2.78(m, 2.43H), 2.14(m, 0.37H), 1.82(m, 1.50H), 1.46(m, 0.41H), 1.36(m, 2.93H) 1.21(m, 1.08H). The *endo*/*exo* ratio was determined by $^1$H NMR analysis: $\delta$ 3.61(s, 1.17H, NBE($CO_2$ME) (*exo*)), 3.53 (s, 3.16H, NBE($CO_2$ME) (*endo*))

Mon/Cata = 1 000

The polymer was prepared as follows. A stock solution of catalyst was prepared by adding allyl Pd (100mg, 273 µmol, 546 µmol of Pd, 1 eq) and $AgSbF_6$ (230mg, 669 µmol, 1.22 eq) to nitromethane (3ml, [catalyst]=182 µmol/ml). Then the solution was filtered using a 0.22µm filter to remove the AgCl precipitate. A transparent yellow catalytic solution was obtained. A vial was loaded with NBE($CO_2$Me) (1g, 6.57mmol, 1000eq). Using a microsyringe 100µL, the stock solution of **catalyst** (36µL, 6.57 µmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield: 65%.

Mon/Cata = 10 000

The polymer was prepared as follows. A stock solution of catalyst was prepared by adding allyl Pd (100mg, 273 µmol, 546 µmol of Pd, 1 eq) and $AgSbF_6$ (230mg, 669 µmol, 1.22 eq) to nitromethane (3ml, [catalyst]=182 µmol/ml). Then the solution was filtered using a 0.22µm filter to remove the AgCl precipitate. A transparent yellow catalytic solution was obtained. A vial was loaded with NBE($CO_2$Me) (1g, 6.57mmol, 10 000eq). Using a microsyringe 10µL, the stock solution of **catalyst** (3,6µL, 0.657 µmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield: 35%.

**Example 6 - Manufacture of PolyNBE($CO_2$Me) with NBE($CO_2$Me) 47% *endo***

The monomer (47% *endo)* was prepared as follows. NBE($CO_2$Me) (73% *endo)* (50g, 0.33 mol), obtained as described in Example 5, was heated at 220°C for 12 hours under a nitrogen flow. During the heat treatment the solution turned dark-orange. The solution was distilled under vacuum at high temperature to obtain a color-free liquid product containing now 47% *endo* isomer, as measured by $^1$H NMR. Yield 47.5g (95%). $^1$H NMR (300MHz, $CDCl_3$) $\delta$ 6.12 (m, 0.92H), 6.06 (m, 1.96H), 5.87(m, 1H), 3.62(s, 3.15H), 3.56(s, 2.77H), 3.14(s, 0.88H), 2.98(s, 1H), 2.91-2.85(m, 2.89H), 2.16(m, 1.06H), 1.85(m, 1.97H), 1.46(m, 1.10H), 1.35(m, 3.91H) 1.23(m, 1H). The *endo*/*exo* ratio was determined by $^1$H NMR analysis: $\delta$ 3.62(s, 3.15H, NBE($CO_2$ME) (exo)), 3.56 (s, 2.77H, NBE($CO_2$ME) (endo))

Mon/Cata = 10 000

The polymer was prepared as follows using the monomer NBE($CO_2$Me) (47% endo). A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE($CO_2$Me) (1g, 6.57mmol, 10 000eq). Using a microsyringe 10μL, the stock solution of **catalyst** (3,6μL, 0.657 μmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield: 37%.

Mon/Cata = 30 000

The polymer was prepared as follows using the monomer NBE($CO_2$Me) (47% *endo).* A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**1**]=182 μmol/ml). Then the solution was filtered using a 0.22μm filter to remove the AgCl precipitate. A transparent yellow catalytic solution was obtained. A vial was loaded with NBE($CO_2$Me) (1g, 6.57mmol, 30 000eq). Using a microsyringe 10μL, the stock solution of catalyst (1,2μL, 0.219 μmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield: 20%.

**Example 7 - Manufacture of PolyNBE($CO_2$Me)$_2$ with NBE($CO_2$Me)$_2$ 75% *endo***

PolyNBE($CO_2$Me)$_2$ and its synthesis scheme are shown in Figure 9.

The monomer (75% *endo)* was prepared as follows. Dimethyl maleate (170g, 1.18mol, 1.05eq) and water (9.1g, 0.50 mol, 0.44eq) were mixed in a round bottom flask. This solution was cooled down on an iced bath, and freshly cracked cyclopentadiene (74g, 1.12 mol, 1eq) was added dropwise over 60 minutes. The reaction was stirred under reflux for 12h. The product was distilled under vacuum to yield a color-free liquid (bp = 150°C at 5 mmHg). Yield 174g (0.83mol, 74%). $^1$H NMR (300MHz, $CDCl_3$): $\delta$ 6.19(s, 1H), 6.15(s, 0.30H), 3.60(m, 1.04H), 3.54(m, 3.04H), 3.24(s, 1.04H), 3.10(s 1.02H) 3.03(s 0.31H), 2.56(s, 0.30H) 2.06(m, 0.18H), 1.41(m, 0.71H), 1.29(m, 0.55H). The *endo*/*exo* ratio was determined by $^1$H NMR analysis: $\delta$ 3.24(s, 1.04H, NBE($CO_2$Me)$_2$ (*endo*)), 3.03 (s, 0.31H, NBE($CO_2$Me)$_2$ (exo))

Mon/Cata = 500

The polymer was prepared as follows using the monomer NBE($CO_2$Me)$_2$ (75% *endo).* A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE($CO_2$Me)$_2$ (1g, 4.76mmol, 500eq). Using a microsyringe 100μL, the stock solution of **catalyst** (52.2μL, 9.52 μmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield: 56%.

Mon/Cata = 1 000

The polymer was prepared as follows using the monomer NBE($CO_2$Me)$_2$ (75% *endo).* A stock solution of

catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with $NBE(CO_2Me)_2$ (1g, 4.76mmol, 1 000eq). Using a microsyringe 100μL, the stock solution of **catalyst** (26.1μL, 4.76 μmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield: 38%.

**Example 8 - Manufacture of Poly$NBE(CO_2Me)_2$ with $NBE(CO_2Me)_2$ 35% *endo***

The monomer (35% *endo)* was prepared as follows. $NBE(CO_2Me)_2$ (75% *endo)* (60g, 0,285mol), obtained as described in example 7, was heated at 220 °C for 12 hours under a nitrogen flow in a round-bottom flask. During the heat treatment the liquid turned dark-orange. The liquid was distilled under vacuum at high temperature to obtain a color-free liquid product containing 65% exo isomer and 35% isomer, as measured by $^1H$ NMR. Yield 50g (0.24 mol, 83%) (bp = 150°C at 5 mmHg). $^1H$ NMR (300MHz, $CDCl_3$): δ 6.17(m, 1H), 6.13(m, 1.94H), 3.57(s, 6.59), 3.52(s, 3.03H), 3.21(s, 1.09H), 3.07(s, 1.07H), 3.00(s, 2.03H), 2.54(m, 2.06H), 2.01(d, 1.07), 1.40(m, 1.65H), 1.27(d, 0.58). The endo/exo ratio was determined by $^1H$ NMR analysis: δ 3.21(s, 1.09H, $NBE(CO_2H)_2$(endo)), 2.54(s, 2.06H, $NBE(CO_2H)_2$ (exo)).

$$Mon/Cata = 1\,000$$

The polymer was prepared as follows using the monomer $NBE(CO_2Me)_2$ (35% *endo).* A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with $NBE(CO_2Me)_2$ (1g, 4.76mmol, 1 000eq). Using a microsyringe 100μL, the stock solution of **catalyst** (26.1μL, 4.76 μmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield: 65%.

**Example 9 - Manufacture of Polycarbic anhydride (PCA, polymer of CA)**

PCA and its synthesis scheme are shown in Figure 9.

The monomer was prepared as follows. Maleic anhydride (95g, 0.97mol) was added to 115g of acetyl acetate. This solution was cooled down on an iced bath, and freshly cracked cyclopentadiene (75g, 1.14 mol) was added dropwise over 60 minutes. When the addition was complete, the reaction was stirred at room temperature for 12 hours. The white precipitate formed was filtered under vacuum, washed 4 times with hexane and dried on an oven at 60°C for 12 hours. In a 250ml Schlenk flask equipped with a condenser, the white precipitate (50g) was heated at 180°C during 12 hours under a nitrogen flow. The walls of the Schlenk tube were covered with white crystals which were carefully collected. In a 250ml round bottom flask, the white crystals (8.5g, 0.052mol) were solubilised with a minimum of ethyl acetate (~15g ethyl acetate) at ~70 °C. Then the solution was cooled down at a rate of 0.1°C/min (using a programmable heater) in order to obtain pure exo crystals growing in the solution. When the solution reached room temperature, the crystals were filtered and washed with a low quantity of cold ethyl acetate. Purity greater than 98% as measured by $^1H$ NMR. Yield: 4.7g (0.028 mol, 55%). $^1H$ NMR (300MHz, $C_2D_2Cl_4$) δ 6.19(s, 1H), 3.28(s, 1H), 2.89(s, 1H), 1.53(d, 0.52H), 1.27(d, 0.51H).

The polymer PCA was prepared as follows. A stock solution of **catalyst** was prepared by adding $[PdCl(C_3H_5)]_2$ (i.e. allyl Pd, 100mg, 273 μmol, 546 μmol of Pd, 1 eq) and $AgSbF_6$ (230mg, 669 μmol, 1.22 eq) to nitromethane (10g, [**catalyst**]=54.6 μmol/g). Then the solution was filtered using a 0.22μm filter to remove the AgCl precipitate. A transparent yellow catalytic solution was obtained. A vial was loaded with CA (1g, 6.09mmol, 200 eq) and nitromethane (5.74g,) and heated at 70°C to solubilize CA. Then the vial was loaded with part of the stock solution of 1 (0.56g, 30.78 μmol, 1eq, [CA]=0.87mmol/g). The solution was heated at 70°C under vigorous stirring for 24h. The precipitated polymer in nitromethane was separated by centrifugation and was washed 5 times with ethyl acetate. It was then filtered and dried under vacuum at 80°C overnight. Yield: 83%

**Example 10 - Manufacture of Poly(NBE(CO2H)2)**

Poly($NBE(Co_2H)_2$) and its synthesis scheme are shown in Figure 9.

The monomer (100% exo) was prepared as follows. In a 250ml Schlenk flask equipped with a condenser, CA (as prepared in example 9) (20g, 0.122 mol, 1eq) were dissolved in 100g of THF and water (10g, 0.555mol, 4.5eq) was added. Then the reaction was stirred under reflux for 6h. The solvent was evaporated under vacuum to obtain white dry powder. Yield (20.9g 0.115 mol, 94%). $^1H$ NMR (300MHz, acetone d) δ 6.23(s, 1.05H), 3.02(s, 1H), 2.59(s, 1H), 2.14(d,

052H), 1.35(d, 0.55).

The polymer Poly(NBE($CO_2H$)$_2$) was prepared as follows. A stock solution of catalyst **1** was prepared by adding [PdCl($C_3H_5$)]$_2$ (100mg, 273 μmol, 546 μmol of Pd, 1 eq) and $AgSbF_6$ (230mg, 669 μmol, 1.22 eq) to nitromethane (10g, [**catalyst**]=54.6 μmol/g). Then the solution was filtered using a 0.22μm filter to remove the AgCl precipitate. A transparent yellow catalytic solution was obtained. A vial was loaded with NBE($CO_2H$)$_2$ (1g, 5.49mmol, 100 eq) and nitromethane (5.74g,) and heated at 70°C to solubilize NBE($CO_2H$)$_2$. Then, the vial was loaded with part of the stock solution of **catalyst** (1g, 54.9 μmol, 1eq,). The solution was heated at 70°C under vigorous stirring for 24h. The precipitated polymer in nitromethane was separated by centrifugation and was washed 5 times with diethyl ether. It was then filtered and dried under vacuum at 80°C overnight.

**Example 11 - Manufacture of Poly(NBE(imide))**

Poly(NBE(imide)) and its synthesis scheme are shown in Figure 9.

The monomer (35% *endo)* was prepared as follows. In a 250ml Schlenk flask equipped with a condenser, CA (35% *endo)* (30g, 0.183mol, 1eq) was dissolved in 150g of THF. This solution was cooled in an iced bath, and allyl amine (15g, 0.262mol, 1.43eq) was added dropwise over 60 minutes (reaction very exothermic). A white precipitate was immediately formed. When the addition was complete, the reaction was stirred at room temperature for 2 hours. The solution was concentrated on a rotary evaporator to yield an off-white solid. The product was distilled under vacuum to yield a color-free liquid (bp=200°C at 5 mmHg). The high temperature induces the imidation reaction conducting to formation of water which was trapped in a dry-ice trap connected to the vacuum outlet. Care was taken to monitor the column and the condenser as the product tended to crystallize and plug the column. Occasionally, the column and refrigerant walls were heated to avoid plugging. Yield: 31g (0.152mol, 83%). $^1$H NMR (300MHz, $CDCl_3$) δ 6.19 (s, 1.01H), 5.99(s, 0.54H), 5.69(m, 0.51H), 5.54(m, 0.26), 5.07(m, 1.58H), 3.98(d, 1.04H), 3.82(d, 0.58H), 3.29(m, 0.57H), 3.18 (m, 1.55H), 2.60(d, 1.00H), 1.62(m, 0.31H), 1.47(m, 0.30H), 1.39(m, 0.53H), 1.16(m, 0.53H). The *endo*/*exo* ratio was determined by $^1$H NMR analysis: δ 6.19(s, 1.01H, NBE(imide) (exo)), 5.99(s, 0.54H, NBE(imide) (endo)).

Mon/Cata = 100

The polymer was prepared as follows using the monomer NBE(imide) (35% *endo).* A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE(imide) (1g, 4.92mmol, 100eq). Using a microsyringe 100μL, the stock solution of **catalyst** (0.27mL, 49.2 μmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield : 80%

Mon/Cata = 1 000

The polymer was prepared as follows using the monomer NBE(imide) (35% *endo).* A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE(imide) (1g, 4.92mmol, 1 000eq). Using a microsyringe 100μL, the stock solution of **catalyst** (27μL, 4.92 μmol, 1eq) was added and the vial was heated at 70°C under vigorous for 24h. The polymer was precipitated by adding diethyl ether (10ml) and was washed 5 times with diethyl ether. It was then filtered and dried under vacuum at 80°C overnight. Yield : 45%

**Example 12 - Example of manufacture of Poly(NBE($CH_2Br$))**

Poly(NBE($CH_2Br$)) and its synthesis scheme are shown in Figure 9.

The monomer (86% *endo)* was prepared as follows. 30 mL of dicyclopentadiene (29.4 g, 0.22 mol, 2 eqs), 46 mL of allyl bromide (64g, 0.55 mol, 5 eqs) and 150 mg of hyroquinone were introduced in a pressurized reactor at 130 °C for 15 hours. The monomer was collected by distillation (yield: 29 g). $^1$H NMR (300 MHz, $CDCl_3$) δ 6.21 (dd, *J* = 5.8, 3.1 Hz, 1H), 6.10 (dd, *J* = 4.9, 2.9 Hz, OH), 6.00 (dd, *J* = 5.8, 2.9 Hz, 1H), 3.52 - 3.32 (m, OH), 3.21 (dd, *J* = 9.6, 6.8 Hz, 1H), 3.05 (d, *J* = 9.6 Hz, 1H), 3.02 - 2.95 (m, 1H), 2.88 (dq, *J* = 3.6, 1.8 Hz, 1H), 2.53 (dtdd, *J* = 13.0, 9.7, 5.7, 3.3 Hz, 1H), 1.95 (ddd, *J* = 11.9, 9.1, 3.8 Hz, 1H), 1.50 (dq, *J* = 8.3, 2.1 Hz, 1H), 1.31 (dt, *J* = 8.3, 1.6 Hz, 1H), 0.60 (ddd, *J* = 11.8, 4.4, 2.7 Hz, 1H).

The polymer was prepared as follows using the monomer NBE($CH_2Br$) (86% *endo).* A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE($CH_2Br$) (1g, 5.37mmol, 500eq). Using a microsyringe 100μL, the stock solution of **catalyst** (59μL, 10.74 μmol, 1eq) was added and the vial was heated at 70°C under vigorous for 24h. The polymer was precipitated by adding diethyl ether (10ml) and was washed 5 times with hexane. It was then filtered and dried under vacuum at 80°C overnight. Yield : 15%

**Example 13 - Example of manufacture of Poly(NBE($CH_2OH$))**

Poly(NBE($CH_2OH$)) and its synthesis scheme are shown in Figure 9.
The monomer (82% *endo)* was prepared as follows. 40 mL of dicyclopentadiene (39 g, 0.30 mol, 2 eqs), 34 mL of allyl alcohol (29 g, 0.5 mol, 3.5 eqs) were introduced in a pressurized reactor at 210 °C for 1 hour. The monomer was collected by distillation (yield : 21 g). $^1$H NMR$^1$H NMR (300 MHz, $CDCl_3$) δ 6.08 (dd, *J* = 5.7, 3.0 Hz, 1H), 6.02 (td, *J* = 6.2, 5.6, 3.0 Hz, 0.4 H), 5.91 (dd, *J* = 5.7, 2.9 Hz, 1H), 3.62 (dd, *J* = 10.6, 6.4 Hz, 0.4 H), 3.45 (dd, *J* = 10.6, 8.8 Hz, 0.4H), 3.31 (dd, *J* = 10.4, 6.6 Hz, 1H), 3.16 (dd, *J* = 10.3, 8.7 Hz, 2H), 2.88 (s, 1H), 2.81 - 2.63 (m, 2H), 2.24 (dtt, *J* = 13.2, 9.2, 3.9 Hz, 1H), 1.76 (ddd, *J* = 11.4, 9.2, 3.8 Hz, 1H), 1.63 - 1.51 (m, OH), 1.46 - 1.34 (m, 1H), 1.33 - 1.11 (m, 2H), 1.06 (dq, *J* = 11.6, 4.0, 3.4 Hz, 0.4H), 0.46 (ddd, *J* = 11.5, 4.5, 2.6 Hz, 1H).
The polymer was prepared as follows using the monomer NBE($CH_2OH$) (82% endo). A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE($CH_2OH$) (1g, 8.06mmol, 500eq). Using a microsyringe 100μL, the stock solution of **catalyst** (88μL, 16.12 μmol, 1eq) was added and the vial was heated at 70°C under vigorous for 24h. The polymer was precipitated by adding diethyl ether (10ml) and was washed 5 times with acetone. It was then filtered and dried under vacuum at 80°C overnight. Yield : 53%

**Example 14 - Example of manufacture of Poly(NBE(CHO))**

Poly(NBE(CHO)) and its synthesis scheme are shown in Figure 9.
The monomer was purchased from Aldrich Company. It contained 80% of endo isomer and 20% of exo isomer.

Mon/Cata = 500

The polymer was prepared as follows using the monomer NBE(CHO) (80% endo). A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE(CHO) (1g, 8.19mmol, 500eq). Using a microsyringe 100μL, the stock solution of **catalyst** (90μL, 16.38 μmol, 1eq) was added and the vial was heated at 70°C under vigorous for 24h. The polymer was precipitated by adding diethyl ether (10ml) and was washed 5 times with methanol. It was then filtered and dried under vacuum at 80°C overnight. Yield: 73%
Mon/Cata = 5 000
The polymer was prepared as follows using the monomer NBE(CHO) (80% endo). A stock solution of catalyst was prepared by adding allyl Pd (100mg, 273 μmol, 546 μmol of Pd, 1 eq) and $AgSbF_6$ (230mg, 669 μmol, 1.22 eq) to nitromethane (3ml, [**catalyst**]=182 μmol/ml). Then the solution was filtered using a 0.22μm filter to remove the AgCl precipitate. A transparent yellow catalytic solution was obtained. A vial was loaded with NBE(CHO) (1g, 8.19mmol, 5 000eq). Using a microsyringe 10μL, the stock solution of **catalyst** (9μL, 1.638 μmol, 1eq) was added and the vial was heated at 70°C under vigorous for 24h. The polymer was precipitated by adding diethyl ether (10ml) and was washed 5 times with methanol. It was then filtered and dried under vacuum at 80°C overnight. Yield: 21%

**Example 15 - Coatings**

Crosslinkers used:

- glycerol,
- glycerol diglycidyl ether (GDE),
- butanediol diglycidyl ether (BDE),
- trimethylolpropane triglycidyl ether (TPTE), and

- sebacic acid.

Catalysts used:

- 2,4,6-tris(dimethylaminomethyl)phenol (DMP-30),
- zinc nitrate hexa hydrate (ZN),
- Tetramethyl guanidine, and
- benzyl trimethylamonium hydroxide (BTH).

Coatings were prepared in clean silicon molds which were 2 inches in length, 1 inch in width and 0.4 inches in height. The polymer and 90% of the volume of the solvent (N-methyl-2-pyrrolidone (NMP) or dimethylformamide (DMF)) were mixed together until a homogeneous solution was obtained. Then, the solution was centrifuged (3500 rpm for 10 minutes) in order to remove traces of the Pd catalyst. In some cases, the dissolution of the polymer required moderate heating, but once dissolved, the solution could be used at room temperature without polymer precipitation. Then, the crosslinker and the catalyst, dissolved in the remaining 10% of solvent, were added to the polymer solution. The solution was then mixed for 4 minutes with a vortex stirrer at room temperature.

The solution was then immediately poured into the silicon mold which was then placed into the oven preheated at 110°C. The curing procedure was as indicated in the Table 1 below, which also sets out the composition of the produced coatings.

Table 1

| Coating | Polymer | Solvent | Crosslinker | Catalyst | Curing |
|---|---|---|---|---|---|
| 1 | Poly A - 100% epox (Ex. 1a) 1g | NMP 3.4g | Glycerol 0.3g | DMP-30 0.065g | 12hr@110°C 12hr@190°C |
| 2 | Poly A - 87% epox (Ex. 2) 1.45g | NMP 5.0g | Glycerol 0.5g | DMP-30 0.1g | 12hr@110°C 2hr@150°C 12hr@190°C |
| 3 | Poly A - 87% epox (Ex. 2) 1.65g | NMP 5.0g | Glycerol 0.28g | DMP-30 0.1g | 12hr@110°C 2hr@150°C 12hr@190°C |
| 4 | Poly A - 87% epox (Ex. 2) 1.10g | NMP 4.8g | Glycerol 0.75g | DMP-30 0.1g | 12hr@110°C 2hr@150°C 12hr@190°C |
| 5 | Poly B (Ex. 3) 1.4g | NMP 4.8g | GDE 0.5g | ZN 0.09g | 20hr@110°C 2hr@150°C 20hr@190°C |
| 6 | Poly B (Ex. 3) 1.1g | NMP 4.8g | GDE 0.8g | DMP-30 0.04g | 20hr@70°C 2hr@190°C |
| 7 | Poly B (Ex. 3) 1.4g | NMP 4.8g | GDE 0.5g | ZN 0.09g | 20hr@110°C 2hr@150°C 20hr@190°C |
| 8 | Poly B (Ex. 3) 1.55g | NMP 4.9g | GDE 0.38g | ZN 0.09g | 22hr@110°C 2.5hr@150°C 20hr@190°C |
| 9 | Poly B (Ex. 3) 1.4g | NMP 4.8g | TPTE 0.50g | ZN 0.1g | 22hr@110°C 2.5hr@150°C 20hr@190°C |
| 10 | Poly B (Ex. 3) | NMP | BDE | ZN | 22hr@110°C |

(continued)

| Coating | Polymer | Solvent | Crosslinker | Catalyst | Curing |
|---|---|---|---|---|---|
| | 1.4g | 4.8g | 0.50g | 0.1g | 2.5hr@150°C 20hr@190°C |
| 11 | Poly B (Ex. 3) 2.1g | DMF 7.2g | BDE 0.75g | Tetramethyl guanidine $5x10^{-4}$g | 16hr@100°C 4hr@180°C |
| 12 | Poly B (Ex. 3) 2.1g | DMF 7.2g | BDE 0.45g | Tetramethyl guanidine $5x10^{-4}$g | 4hr@100°C 3hr@130°C 3hr@180°C |
| 13 | Poly B (Ex. 3) 2.1g | DMF 3.1g | BDE 0.45g | Tetramethyl guanidine $5x10^{-4}$g | 40min@100°C 3.5hr@130°C 2hr@180°C |
| 14 | Poly A - 87% epox (Ex. 2) 1.50g | DMF 6.6g | Sebacic acid 1.1g | Tetramethyl guanidine $6x10^{-3}$g | 4hr@100°C 3hr@130°C 3hr@180°C |
| 15 | Poly A - 87% epox (Ex. 2) 1.80g | DMF 6.6g | Sebacic acid 0.8g | BTH $6x10^{-3}$g | 4hr@100°C 3hr@130°C 3hr@180°C |
| 16 | Poly A - 100% epox (Ex. 1b) 4g | THF 6g | Isophorone diamine 5g | - | 12hr@50°C 5°C/30min 50-130°C 18hr@180°C |
| 17 | Poly A - 100% epox (Ex. 1b) 2g | THF 3g | Isophorone diamine 1.25g | - | 12hr@50°C 5°C/30min 50-130°C 18hr@180°C |
| 18 | Poly A - 100% epox (Ex. 1b) 1.4g | THF 4.8g | Isophorone diamine 0.5g | - | 12hr@50°C 5°C/30min 50-130°C 18hr@180°C |

Table 2 below summarizes the properties of the produced coatings. The Tg (according to ASTM E1640) and the storage modulus at 50°C and 150°C were measured by dynamic mechanical analysis (DMA). The Tg was also measured according to ASTM D3418-03 by differential scanning calorimetry (DSC). The thermal transitions of these thermoset polymers were very weak and thus difficult to locate using this latter method (heating 10°C/min). For many samples, the Tg could not be observed. Finally, solvent uptake was measure in NMP and water. NMP uptake is expressed in weight% after 11 day immersion. Water uptake expressed in weight% after 11 day immersion

Table 2

| Coating | Tg by DMA (°C) | Storage modulus @50°C (MPa) | Storage modulus @150°C (MPa) | Tg by DSC (°C) | NMP uptake (%) | Water uptake (%) |
|---|---|---|---|---|---|---|
| 1 | 236 | 2500 | 1550 | not seen | - | 11 |
| 2 | 218 | 1654 | 966 | 249 | - | 6.6 |
| 3 | 207 | 1760 | 816 | not seen | 1.4 | 5.0 |
| 4 | ≥240 | 3115 | 1046 | not seen | 3.5 | 5.9 |
| 5 | 243 | 1075 | 712 | 211 | -1.6 | 7.9 |
| 6 | ≥140 | 1300 | 350 | not seen | -3.1 | 8.9 |
| 7 | ≥140 | 1700† | 900‡ | not seen | -1.9 | 7.1 |
| 8 | ≥240 | 2200 | 900 | 208 | -0.8 | 8.6 |
| 9 | ≥220 | 2780 | 1107 | 220 | -0.5 | 8.2 |
| 10 | ≥270 | 2509 | 1482 | 241 | -0.19 | 10.5 |
| 11 | ≥100 | 1300 | 350 | 105 | - | 6.8 |
| 12 | 73 - 200 | 2100 | 700 | 201 | - | 6.6 |
| 13 | 168 | 1300 | 400 | 168 | - | 5.6 |
| 14 | 137 | 850 | 150 | 137 | - | 3.3 |
| 15 | 150 - 244 | 1600 | 500 | 244 | - | - |
| 16 | 172 | 2900 | 700 | - | - | - |
| 17 | 223 | 2700 | 800 | notseen | - | - |
| 18 | ≥300 | 2350 | 1600 | notseen | - | - |

† at 70°C; ‡ at 140 °C
- : not measured

**Example 16 - Electrospun Fibers of Poly A -100% Epox**

In a flask, 1.8g of polyA - 100% epox (as per Example 1b above) was solubilized in 2.1g of dimethyl formamide. Immediately before electrospinning, at room temperature, 0.120g of isophorone diamine (3-aminomethyl-3,5,5-trimethylcyclohexylamine) were mixed to this polymer solution. The resulting solution was introduced in a glass syringe equipped with a 0.41mm diameter flat-ended needle. A 22 kV positive voltage was applied to the needle tip using a CZE 1000R high-voltage power supply (Spellman High Voltage Electronics) while a 2kV negative potential (Power Designs) was imposed on two parallel metallic rods to collect the elecrospun fibers. The distance between the needle tip and the collector was 5cm. The speed of injection 0.1ml/min.

The collected fibers were analysed by optical and electronic microscopy. The fibers are soluble at room temperature in an organic solvent such as dimethyl formamide, indicating that they are not crosslinked. However, if the fibers are heated at 200°C for 1 hours, the fibers become insoluble in common organic solvents such as dimethyl formamide or tetrahydrofuran, indicating that crosslinking has occurred. The diameter of the fibers, as measured by optical microscopy, is not affected by the heating/crosslinking process.

**Example 17 - Electrospun Fibers of Poly B**

In a flask, 1.2g of poly B (as per Example 3 above) was solubilized in 1.8g of dimethyl formamide. The resulting solution was introduced in a glass syringe equipped with a 0.41mm diameter flat-ended needle. A 20 kV positive voltage was applied to the needle tip using a CZE 1000R high-voltage power supply (Spellman High Voltage Electronics) while a 2kV negative potential (Power Designs) was imposed on two parallel metallic rods to collect the elecrospun fibers. The distance between the needle tip and the collector was 5cm. The speed of injection 0.001ml/min.

The collected fibers were analysed by optical and electronic microscopy. The fibers are soluble at room temperature in an organic solvent such as dimethyl formamide, indicating that they are not crosslinked. However, if the fibers are heated at 250°C for 2 hours, the fibers become insoluble in common organic solvents such as dimethyl formamide or tetrahydrofuran, indicating that crosslinking has occurred. The diameter of the fibers, as measured by optical microscopy, is not affected by the heating/crosslinking process.

**Example 18 - Electrospun Fibers of Poly C**

In a flask, 1.5g of poly C was solubilized in 1.8g of water. The resulting solution was introduced in a glass syringe equipped with a 0.41mm diameter flat-ended needle. A 22kV positive voltage was applied to the needle tip using a CZE 1000R high-voltage power supply (Spellman High Voltage Electronics) while a 2kV negative potential (Power Designs) was imposed on two parallel metallic rods to collect the elecrospun fibers. The distance between the needle tip and the collector was 5cm. The speed of injection was 0.1ml/min.

The collected fibers were analysed by optical microscopy, and shown to have an average diameter of 2 micrometer. The fibers are soluble at room temperature in water, indicating that they are not crosslinked. However, if the fibers are heated at 200°C for 15 minutes, the fibers become insoluble in water, indicating that crosslinking has occurred. The diameter of the fibers, as measured by optical microscopy, is not affected by the heating/crosslinking process.

**Example 19 - Electrospun Fibers of Poly C containing 1% Single Wall Carbon Nanotubes (SWNT)**

In a flask, 1.5g of poly C was solubilized in 1.8g of water. Then 0.015g of SWNT were added and the dark solution was sonicated for 10min. The SWNT were readily dispersed in this solution. The resulting solution was introduced in a glass syringe equipped with a 0.41mm diameter flat-ended needle. A 30kV positive voltage was applied to the needle tip using a CZE 1000R high-voltage power supply (Spellman High Voltage Electronics) while a 2kV negative potential (Power Designs) was imposed on two parallel metallic rods to collect the elecrospun fibers. The distance between the needle tip and the collector was 5cm. The speed of injection 0.3ml/min.

The collected fibers (black/grey) were analysed by optical and electronic microscopy. The fibers are soluble at room temperature in water, indicating that they are not crosslinked. However, if the fibers are heated at 200°C for 15 in, the fibers become insoluble in water, indicating that crosslinking has occurred. The diameter of the fibers, as measured by optical microscopy, is not affected by the heating/crosslinking process.

**Example 20 - Electrospun Fibers of Poly A -100% Epox with 1% of SWNT**

In a flask, 1.5g of poly A - 100% epox (as per Example 1b above) was solubilized in 3.75g of dimethyl formamide. Then 0.015g of SWNT were added and the solution was sonicated for 10min. Immediately before electrospinning, at room temperature, 0.1g of isophorone diamine (3-aminomethyl-3,5,5-trimethylcyclohexylamine) were mixed to this polymer solution. The resulting solution was introduced in a glass syringe equipped with a 0.41mm diameter flat-ended needle. A 22 kV positive voltage was applied to the needle tip using a CZE 1000R high-voltage power supply (Spellman High Voltage Electronics) while a 2kV negative potential (Power Designs) was imposed on two parallel metallic rods to collect the electrospun fibers. The distance between the needle tip and the collector was 5cm. The speed of injection 0.2ml/min.

The collected fibers (black/grey) were analysed by optical microscopy. The fibers are soluble at room temperature in an organic solvent such as dimethyl formamide, indicating that they are not crosslinked. However, if the fibers are heated at 200°C for 1 hour, the fibers become insoluble in common organic solvents such as dimethyl formamide or tetrahydrofuran, indicating that crosslinking has occurred. The diameter of the fibers, as measured by optical microscopy, is not affected by the heating/crosslinking process.

The scope of the claims should not be limited by the preferred embodiments set forth in the examples, but should be given the broadest interpretation consistent with the description as a whole.

## REFERENCES

The present description refers to a number of documents, the content of which is herein incorporated by reference in their entirety. These documents include, but are not limited to, the following:


- WO 96/37526;
- WO 2009/089145;

- WO 2012/149340;
- US 2003/0181607;
- US 2010/0210803;
- Boland, Wilhelm; Jaenicke, Lothar, Chemische Berichte, 1978, 111 (9), 3262-75;
- Recent Developments in Epoxy Resins, I Hamerton, Rapra Review Reports, Vol 8, number 7, 1996;
- Jaillet, F., Darroman, E., Ratsimihety, A., Auvergne, R., Boutevin, B., & Caillol, S. (2013). New biobased epoxy materials from cardanol. European Journal of Lipid Science and Technology, 8;
- Manthey, N. W., Cardona, F., Francucci, G., & Aravinthan, T. (2013). Thermo-mechanical properties of epoxidized hemp oil-based bioresins and biocomposites. Journal of Reinforced Plastics and Composites, 32(19), 1444-1456;
- Brocas, A.-L., Llevot, A., Mantzaridis, C., Cendejas, G., Auvergne, R., Caillol, S., Carlotti, S., Cramail, H. (2014). Epoxidized rosin acids as co-precursors for epoxy resins. Designed Monomers and Polymers, 17(4), 301-310;
- Su et al, Journal of Applied Polymer Science, 78(2), 446-451, 2000;
- Ahmed et al (Ahmed, S., Bidstrup, S. A., Kohl, P., & Ludovice, P. (1998). Stereochemical structure-property relationships in polynorbornene from simulation. Macromolecular Symposia, 133(1), 1-10;
- Buono, A., Famulari, A., Meille, S. V., Ricci, G., & Porri, L. (2011). 2,3- exo -Disyndiotactic Polynorbornene: A Crystalline Polymer with Tubular Helical Molecular Structure. Macromolecules, 44(10), 3681-3684;
- Breunig and Risse, Makromol. Chern. 193, 30 2915-2927 (1992);
- Blank, F., & Janiak, C. (2009). Metal catalysts for the vinyl/addition polymerization of norbornene. Coordination Chemistry Reviews, 253(7-8), 827-861;
- Liu, B., Li, Y., Shin, B.-G., Yoon, D. Y., Kim, I. L., Zhang, L., & Yan, W. (2007), Journal of Polymer Science Part A: Polymer Chemistry, 45(15), 3391-3399); and
- Shin, B.-G., Jang, M.-S., Yoon, D. Y., & Heitz, W. (2004). Vinyl-Type Polymerization of Norbornene Dicarboxylic Acid Dialkyl Esters. Macromolecular Rapid Communications, 25, 6.


## Claims

**1.** A thermoset resin comprising:

- at least one reactive compound bearing at least two functional groups F, identical or different from one another, per molecule,
- at least one hardener bearing at least two functional groups E, identical or different from one another, per molecule, said functional groups E being able to react with functional groups F to form a crosslink, and
- optionally a catalyst,

wherein the reactive compound is a small molecule or a polymer that is not an insertion polynorbornene and the hardener is an insertion polynorbornene comprising said at least two functional groups E,
wherein the insertion polynorbornene is a homopolymer or a copolymer comprising repeat units of Formula 3 and/or Formula 4:

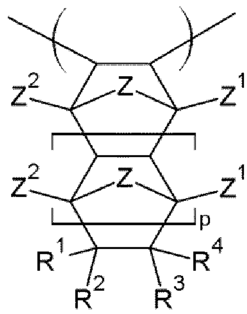

(3),

and

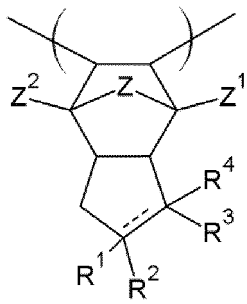

(4),

wherein:

- $Z^1$ and $Z^2$ are independently a hydrogen atom or a halogen atom, preferably a hydrogen atom;
- Z is $CR^5R^6$, O, NH, or $NR^7$, preferably $CR^5R^6$;
- $R^1$, $R^2$, $R^3$, and $R^4$ are independently a hydrogen atom or a functional substituent, with the proviso that at least one of $R^1$ to $R^4$ is a functional substituent;
- $R^5$ and $R^6$ are independently a hydrogen atom, an alkyl (preferably $C_{1-6}$ alkyl, such as methyl, ethyl, n-propyl, isopropyl, n-butyl, isobutyl, and pentyl), a halogen atom, or a (preferably $C_{1-6}$) alkyl group substituted with an OH group, preferably a hydrogen atom;
- $R^7$ is a hydrogen atom or an alkyl (preferably $C_{1-6}$ alkyl, such as methyl, ethyl, n-propyl, isopropyl, n-butyl, isobutyl, and pentyl), preferably a hydrogen atom; and
- p varies from 0 to 10, preferably 0 or 1, more preferably 0,

wherein one or more of $R^1$ to $R^4$ is independently:

- $-R^8$,
- $-(CH_2)_n-YH$,
- $-(CH_2)_n-COOH$, wherein n is 0, provided that $Z^1$ and $Z^2$ are hydrogen atoms, Z is $CH_2$ and p is 0 or 1, preferably 0,
- $-(CH_2)_n-C(Y)-YR^8$,
- $-(CH_2)_n-YR^8$,
- $-(CH_2)_n-YC(Y)R^8$,
- $-(CH_2)_n-YC(Y)-YR^8$,
- $-(CH_2)_n-C(Y)R^8$,
- $-(CH_2)_n-Y-(CH_2)_n-YH$,
- $-(CH_2)_nYR^8$, or
- $-(CH_2)_n-NHR^8$,

wherein:

- Y is O, S or Se, preferably S or O, preferably O,
- n is an integer from 0 to 20, preferably 0 to 5, preferably 1 or 2, and
- $R^8$ is:

a linear and branched (preferably $C_{1-20}$, more preferably $C_{1-10}$) alkyl,

a (preferably $C_{7-15}$) aralkyl,

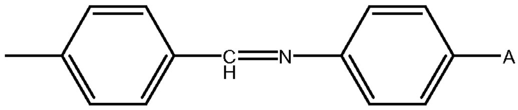
,

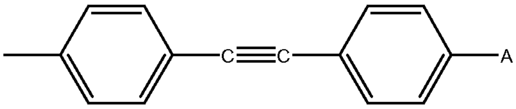
,

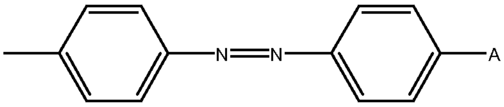
,

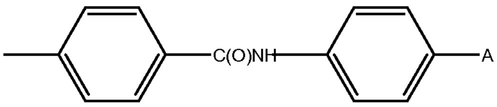
,

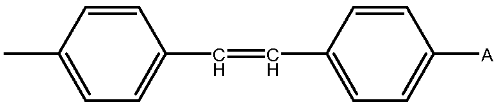
,

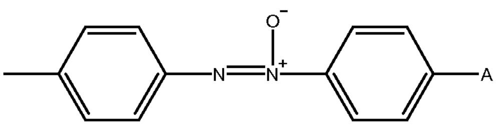
,

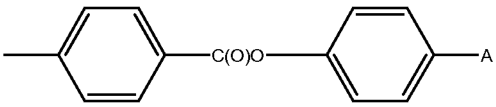
,

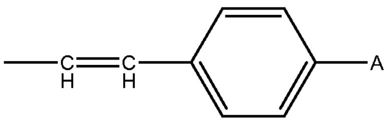
,

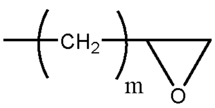
,

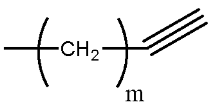
,

a (preferably $C_{6-12}$) aryl,

a linear and branched (preferably $C_{1-6}$) alkyl substituted with one or two -OH, preferably two -OH, preferably $-CH_2-CHOH-CH_2OH$

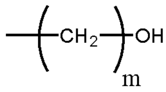
,

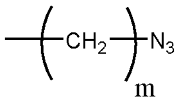
,

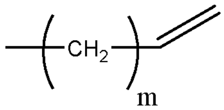
,

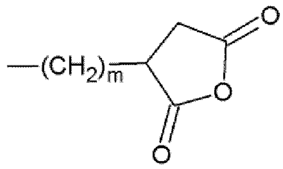
,

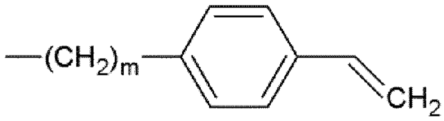
,

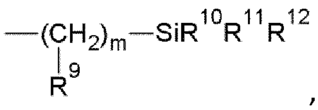
,

$-(CH_2)_m-SiR^{10}R^{11}R^{12}$,

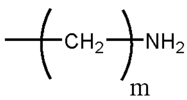
,

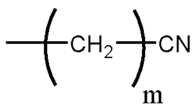
,

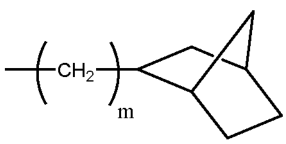
,

(continued)

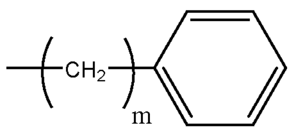

,

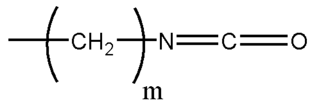

,

or

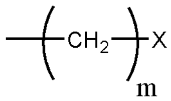

,

wherein:

A is hydrogen, $C_{z'}H_{2z'+1}$, $C_{z'}H_{2z'+1}O$, $C_{z'}H_{2z'+1}OC(O)$, or -CN, wherein z' is an integer from 1 to 12;
X is F, Cl, or Br;
m is an integer from 0 to 10;
$R^9$ is hydrogen, methyl, or ethyl; and
$R^{10}$, $R^{11}$, and $R^{12}$ independently represent bromine, chlorine, fluorine, iodine, linear or branched (preferably $C_{1-20}$) alkyl, linear or branched (preferably $C_{1-20}$) alkoxy, linear or branched (preferably $C_{1-20}$) alkyl carbonyloxy (e.g. acetoxy), linear or branched (preferably $C_{1-20}$) alkyl peroxy (e.g. t-butyl peroxy), or substituted or unsubstituted (preferably $C_{6-20}$) aryloxy.

**2.** The thermoset resin of claim 1, wherein $R^1$ and $R^2$ and/or $R^3$ and $R^4$ together form a (preferably $C_{1-10}$) alkylidenyl group.

**3.** The thermoset resin of claim 1, wherein $R^1$ and $R^3$ together with the two carbon atoms to which they are attached form a saturated hydrocarbon ring of 4 to 8 carbon atoms or an oxirane ring.

**4.** The thermoset resin of claim 1, wherein $R^1$ and $R^3$ together with the carbon atoms to which they are attached form a cyclic anhydride or a cyclic dicarboxyimide.

**5.** The thermoset resin of any one of claims 1 to 4, wherein one or more of $R^1$ to $R^4$ is independently hydroxy, hydroxyalkyl, alkoxy, alkoxyalkyl, carboxy, alkoxycarbonyl, alkycarbonyloxy, alkoxycarbonyloxy, alkylcarbonyl, or a methylene or linear polymethylene moiety terminated with an alkoxycarbonyl-, alkylcarbonyloxy-, alkoxycarbonyloxy-, alkylcarbonyl-, or hydroxyalkyloxy- group.

**6.** The thermoset resin of claim 1, wherein:

- $Z^1$ and $Z^2$ are hydrogen atoms,
- Z is $CH_2$;
- p is 0 or 1, preferably 0, and
- $R^1$ and $R^3$ together with the carbon atoms to which they are attached form a 5-membered cyclic anhydride or cyclic dicarboxyimide, or
- one or two of $R^1$ to $R^4$ , preferably $R^1$, $R^3$, $R^1$ and $R^2$, or $R^1$ and $R^3$, are independently:

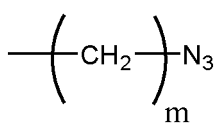

,

$-(CH_2)_n-YH$, wherein Y is S or O, preferably O, and n is preferably 0 or 1,
$-(CH_2)_n-COOR^8$ or $-(CH_2)_n-O-R^8$, wherein n is preferably 0 or 1, and $R^8$ is (preferably $C_{1-6}$) alkyl or $-CH_2-CHOH-CH_2OH$,

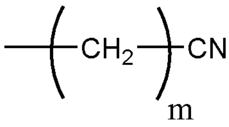

,

$-(CH_2)_n-NHR^8$, wherein $R^8$ is linear and branched (preferably $C_{1-20}$) alkyl, (preferably $C_{6-12}$) aryl, or (preferably $C_{7-15}$) aralkyl,

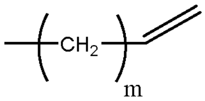

,

wherein m is preferably 1,

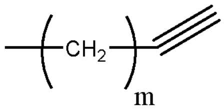

,

wherein m is preferably 1,

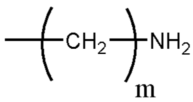

wherein m is preferably 1,
$-(CH_2)_n-COOH$, wherein n is 0,
$-OR^8$, wherein $R^8$ is (preferably $C_{1-6}$)alkyl, preferably methyl,

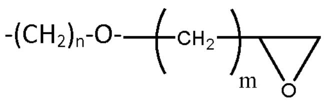

,

wherein n is preferably 0 or 1, and m is preferably 1

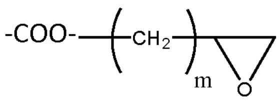

,

wherein m is preferably 1 or

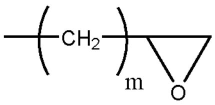

,

wherein m is preferably 0.

**7.** The thermoset resin of any one of claims 1 to 6, wherein said functional groups E and said functional groups F are as follows:

| Functional Group F | Functional Group E |
|---|---|
| Oxirane | -OH,<br>-SH,<br>$-NH_2$,<br>-NHR, and/or<br>-COOH |
| Anhydride | -OH,<br>-SH,<br>$-NH_2$,<br>-NHR, and/or<br>-COOH |
| $-NH_2$, and/or -NHR | Oxirane,<br>-COOH,<br>Isocyanate,<br>Unsaturated carbonyl group,<br>Ester, and/or<br>Anhydride |
| -COOH | -OH,<br>Oxirane,<br>-SH,<br>$-NH_2$, and/or<br>-NHR |
| -SH | -COOH,<br>Isocyanate,<br>Ester,<br>Anhydride, and/or<br>Double bond (C=C) |
| Ester | -OH,<br>-SH,<br>$-NH_2$, and/or<br>-NHR |
| -OH | -COOH,<br>Oxirane,<br>Anhydride,<br>Isocyanate, and/or<br>Ester |
| Isocyanate | -OH,<br>Ester,<br>$-NH_2$, and/or<br>-NHR |
| Azide | Terminal alkyne |
| Halogen | -OH,<br>-SH,<br>$-NH_2$, and/or<br>-NHR |
| Double bond (C=C) | -SH,<br>Double bond (C=C) |

(continued)

| Functional Group F | Functional Group E |
|---|---|
| Triple bond (C≡C) | Azide |

wherein R is a linear or branched alkyl.

**8.** The thermoset resin of any one of claims 1 to 7, wherein one of the functional groups E and F is oxirane and the other is a functional group that react with oxirane functional groups, and
wherein the functional group that react with oxirane functional groups is -OH, -SH, $-NH_2$, -NHR, or -COOH.

**9.** The thermoset resin of any one of claims 1 to 7, wherein the reactive compound comprises at least two oxirane functional groups per molecule and the hardener is an insertion polynorbornene comprising at least two functional groups that react with oxirane functional groups per chain.

**10.** The thermoset resin of claim 9, wherein the functional groups that react with oxirane functional groups are -OH, -SH, $-NH_2$, -NHR, or -COOH.

**11.** The thermoset resin of claim 9 or 10, wherein the insertion polynorbornene comprises one or more of the following repeat units:

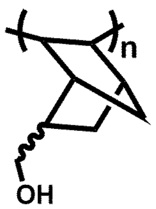 , 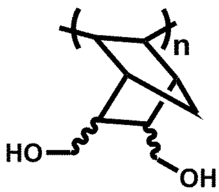 , 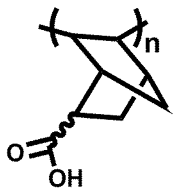 , 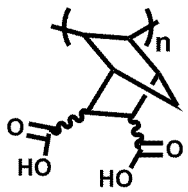 , 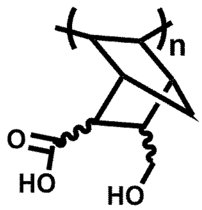 ,

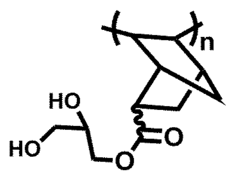 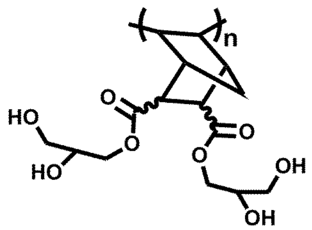 , 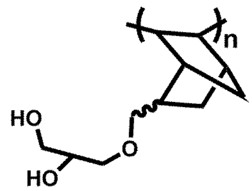 ,

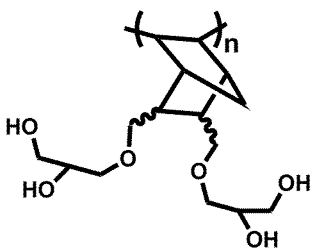 , 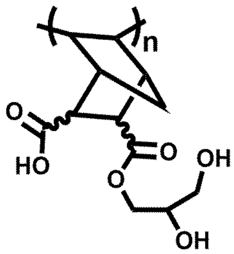 , 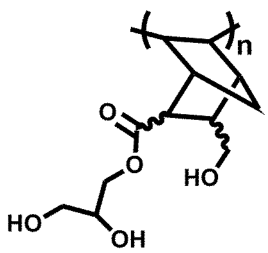 , 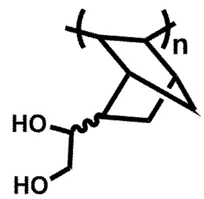

, 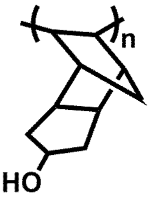 , 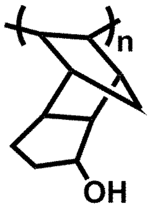 , 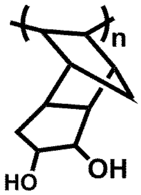 , 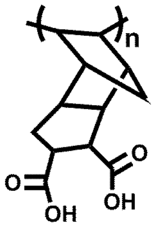 , 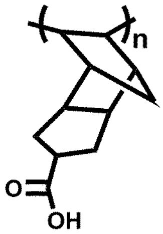 , 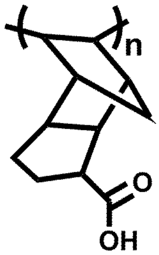 ,

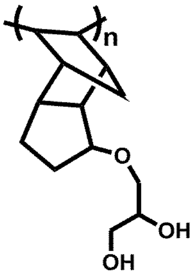 , 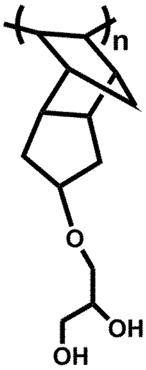 , 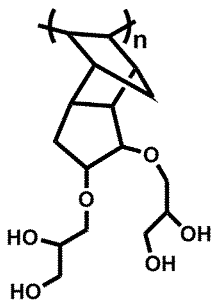 , 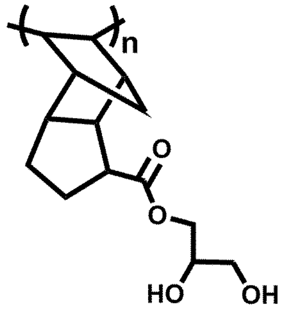 ,

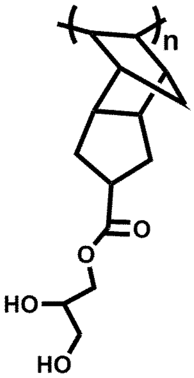 , 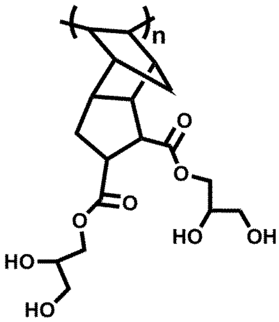 , 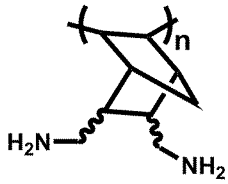 , 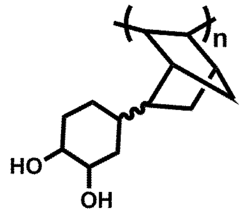 ,

and

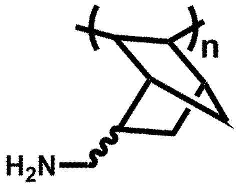 .

**12.** The thermoset resin of any one of claims 9 to 11, wherein the reactive compound is:

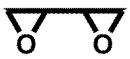 , 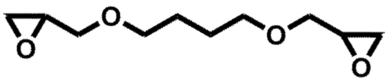 , 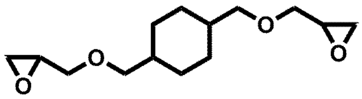 ,

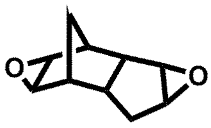 ,
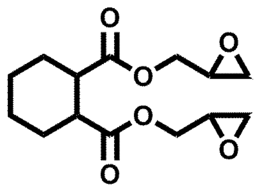 ,
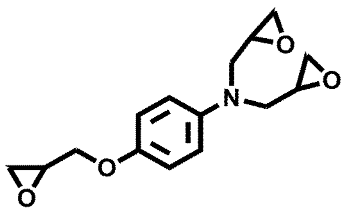 ,

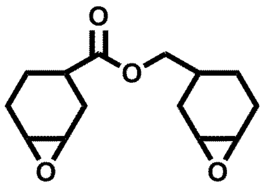 ,
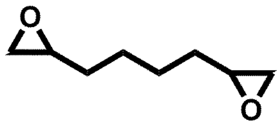 ,
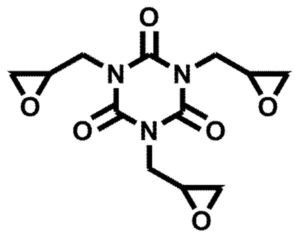 ,

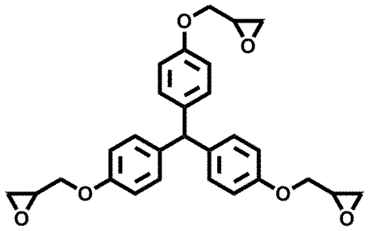 ,
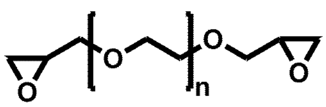 ,

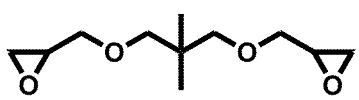 ,
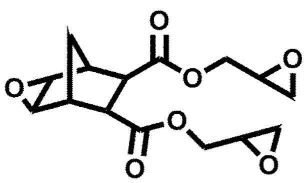 ,
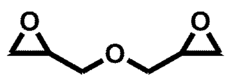 ,

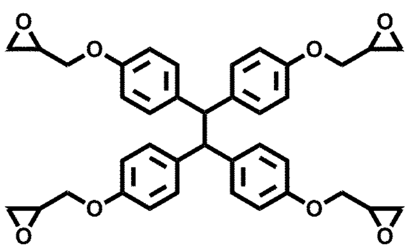 ,
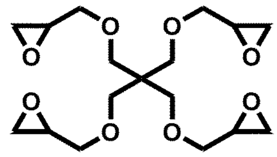 ,

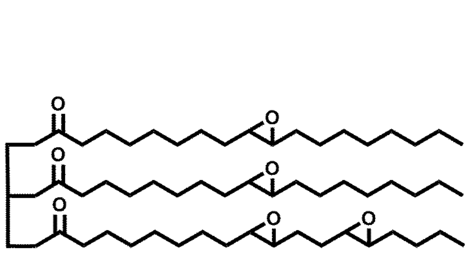 ,
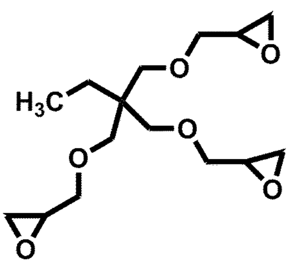 ,
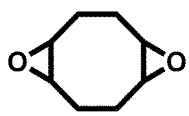 ,

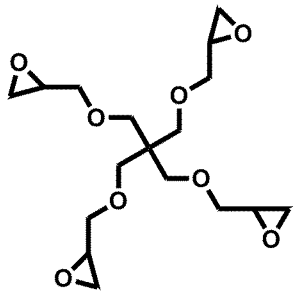,
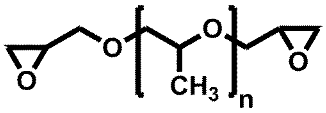,
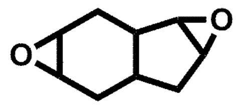,

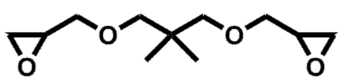,
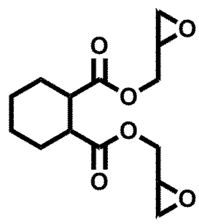,
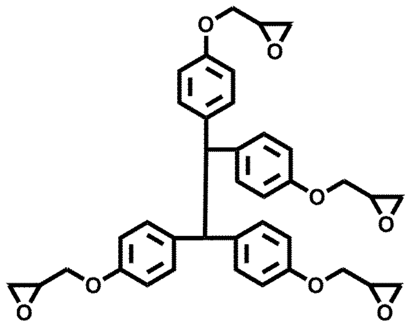,

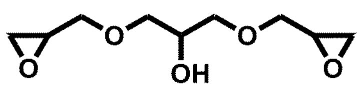,
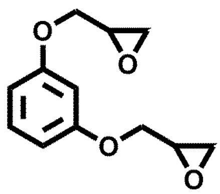,
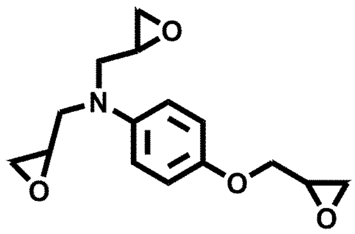,

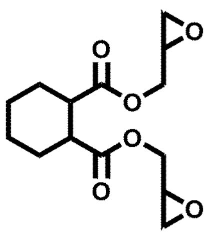.
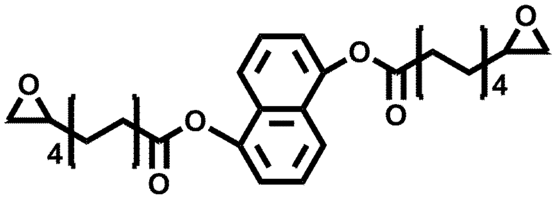

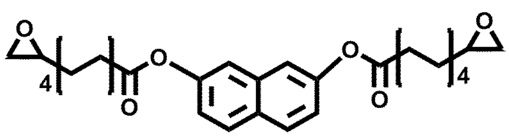,
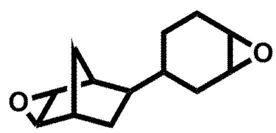,

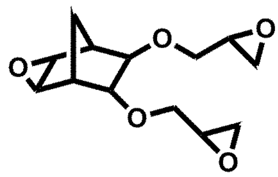,
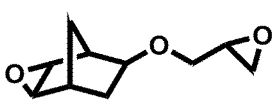,

and

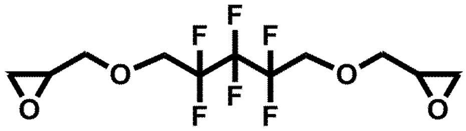
.

**13.** The thermoset resin of any one of claims 1 to 12, wherein the reactive compound and the hardener are provided as an uncured mixture.

**14.** The thermoset resin of any one of claims 1 to 12, wherein the thermoset resin is cured, the reactive compound and the hardener are crosslinked together.

**15.** The thermoset resin of claim 13, wherein the thermoset resin has a Tg ranging between about 100°C and about 400°C, preferably between about 150°C and about 350°C, and most preferably above about 200°C. measured as indicated in the specification.

**Patentansprüche**

**1.** Wärmehärtbares Harz, umfassend:

- mindestens eine reaktive Verbindung mit mindestens zwei funktionellen Gruppen F, die gleich oder verschieden voneinander sind, pro Molekül,
- mindestens einen Härter mit mindestens zwei funktionellen Gruppen E, die gleich oder verschieden voneinander sind, pro Molekül, wobei die funktionellen Gruppen E in der Lage sind mit den funktionellen Gruppen F zu reagieren, um eine Kreuzvernetzung zu bilden, und
- optional einen Katalysator,

wobei die reaktive Verbindung ein kleines Molekül oder ein Polymer ist, das kein Insertionspolynorbornen ist, und der Härter ein Insertionspolynorbornen ist, das die mindestens zwei funktionellen Gruppen E umfasst,
wobei das Insertionspolynorbornen ein Homopolymer oder ein Copolymer ist, das Wiederholungseinheiten der Formel 3 und/oder Formel 4 umfasst:

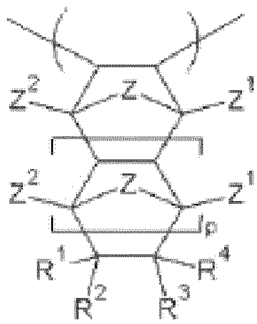
(3),

und

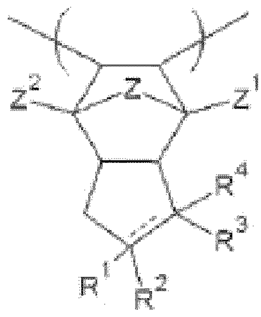

(4),

wobei:

- $Z^1$ und $Z^2$ unabhängig voneinander ein Wasserstoffatom oder ein Halogenatom sind, vorzugsweise ein Wasserstoffatom;
- Z ist $CR^5R^6$, O, NH oder $NR^7$, vorzugsweise $CR^5R^6$;
- $R^1$, $R^2$, $R^3$ und $R^4$ sind unabhängig voneinander ein Wasserstoffatom oder ein funktioneller Substituent, mit der Maßgabe, dass mindestens einer von $R^1$ bis $R^4$ ein funktioneller Substituent ist;
- $R^5$ und $R^6$ sind unabhängig voneinander ein Wasserstoffatom, ein Alkyl (vorzugsweise $C_{1-6}$-Alkyl, wie Methyl, Ethyl, n-Propyl, Isopropyl, n-Butyl, Isobutyl und Pentyl), ein Halogenatom oder eine (vorzugsweise $C_{1-6}$-) Alkylgruppe, die mit einer OH-Gruppe substituiert ist, vorzugsweise ein Wasserstoffatom;
- $R^7$ ist ein Wasserstoffatom oder ein Alkyl (vorzugsweise $C_{1-6}$-Alkyl, wie Methyl, Ethyl, n-Propyl, Isopropyl, n-Butyl, Isobutyl und Pentyl), vorzugsweise ein Wasserstoffatom; und
- p variiert von 0 bis 10, vorzugsweise 0 oder 1, weiter vorzugsweise 0, wobei eines oder mehrere von $R^1$ bis $R^4$ unabhängig voneinander sind:

  - $-R^8$,
  - $-(CH_2)_n-YH$,
  - $-(CH_2)_n-COOH$, wobei n 0 ist, vorausgesetzt, dass $Z^1$ und $Z^2$ Wasserstoffatome sind, Z $CH_2$ ist und p 0 oder 1, vorzugsweise 0, ist,
  - $-(CH_2)_n-C(Y)-YR^8$,
  - $-(CH_2)_n-YR^8$,
  - $-(CH_2)_n-YC(Y)R^8$,
  - $-(CH_2)_n-YC(Y)-YR^8$,
  - $-(CH_2)_n-C(Y)R^8$,
  - $-(CH_2)_n-Y-(CH_2)_n-YH$,
  - $-(CH_2)_nYR^8$, oder
  - $-(CH_2)_n-NHR^8$,

wobei:

- Y O, S oder Se ist, vorzugsweise S oder O, vorzugsweise O,
- n ist eine ganze Zahl von 0 bis 20, vorzugsweise 0 bis 5, vorzugsweise 1 oder 2, und
- $R^8$ ist:

ein lineares und verzweigtes (vorzugsweise $C_{1-20}$-, weiter vorzugsweise $C_{1-10}$-) Alkyl,

ein (vorzugsweise $C_{7-15}$-) Aralkyl,

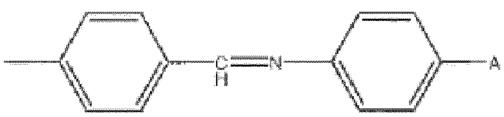

,

ein (vorzugsweise $C_{6-12}$-) Aryl,

ein lineares und verzweigtes (vorzugsweise $C_{1-6}$-) Alkyl substituiert mit einer oder zwei -OH, vorzugsweise zwei -OH, vorzugsweise $-CH_2-CHOH-CH_2OH$

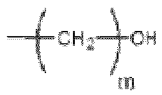

,

(fortgesetzt)

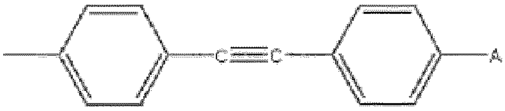,

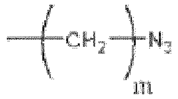,

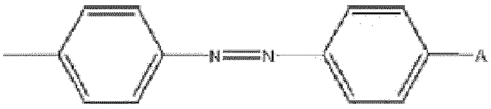,

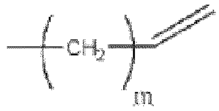,

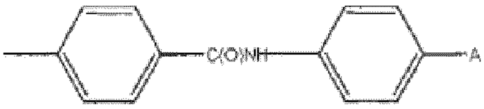,

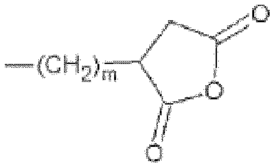,

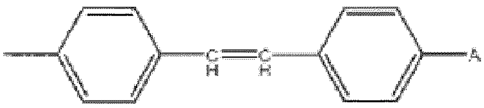,

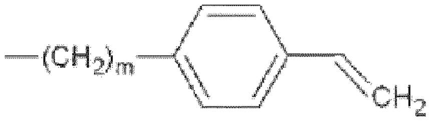,

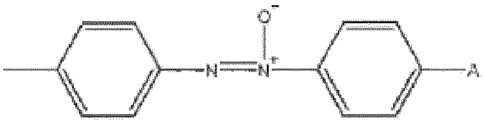,

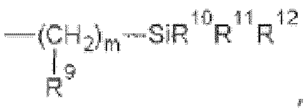,

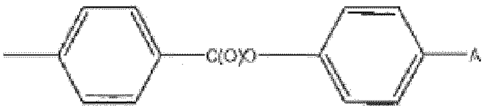,

$-(CH_2)m-SiR^{10}R^{11}R^{12}$,

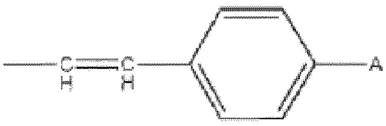,

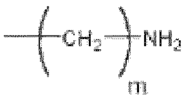,

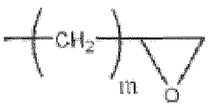,

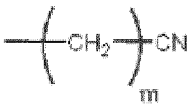,

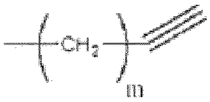,

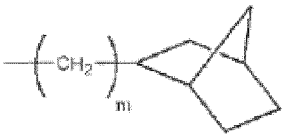,

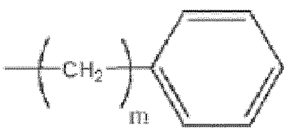,

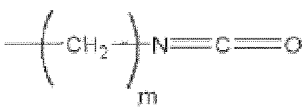, ' oder

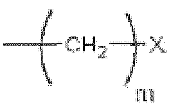

wobei:

A Wasserstoff, $C_{z'}H_{2z'+1}$, $C_{z'}H_{2z'+1}O$, $C_{z'}H_{2z'+1}OC(O)$ oder -CN ist, wobei z' eine ganze Zahl von 1 bis 12 ist;
X F, Cl oder Br ist;
m ist eine ganze Zahl von 0 bis 10;
$R^9$ Wasserstoff, Methyl oder Ethyl; und
$R^{10}$, $R^{11}$ und $R^{12}$ unabhängig voneinander Brom, Chlor, Fluor, Jod, lineares oder verzweigtes (vorzugsweise $C_{1-20}$-) Alkyl, lineares oder verzweigtes (vorzugsweise $C_{1-20}$-) Alkoxy, lineares oder verzweigtes (vorzugsweise $C_{1-20}$-) Alkylcarbonyloxy (z.B. Acetoxy), lineares oder verzweigtes (vorzugsweise $C_{1-20}$-) Alkylperoxy (z.B. t-Butylperoxy) oder substituiertes oder unsubstituiertes (vorzugsweise $C_{6-20}$-) Aryloxy darstellt.

2. Wärmehärtbares Harz nach Anspruch 1, wobei $R^1$ und $R^2$ und/oder $R^3$ und $R^4$ zusammen eine (vorzugsweise $C_{1-10}$-) Alkylidenylgruppe bilden.

3. Wärmehärtbares Harz nach Anspruch 1, wobei $R^1$ und $R^3$ zusammen mit den beiden Kohlenstoffatomen, an die sie gebunden sind, einen gesättigten Kohlenwasserstoffring mit 4 bis 8 Kohlenstoffatomen oder einen Oxiranring bilden.

4. Wärmehärtbares Harz nach Anspruch 1, wobei $R^1$ und $R^3$ zusammen mit den Kohlenstoffatomen, an die sie gebunden sind, ein cyclisches Anhydrid oder ein cyclisches Dicarboxyimid bilden.

5. Wärmehärtbares Harz nach einem der Ansprüche 1 bis 4, wobei eines oder mehrere der $R^1$ bis $R^4$ unabhängig voneinander sind Hydroxy, Hydroxyalkyl, Alkoxy, Alkoxyalkyl, Carboxy, Alkoxycarbonyl, Alkoxycarbonyloxy, Alkoxycarbonyloxy, Alkylcarbonyl, oder ein Methylen oder linearer Polymethylenrest, terminiert mit einem Alkoxycarbonyl-, Alkylcarbonyloxy-, Alkoxycarbonyloxy-, Alkylcarbonyl- oder Hydroxyalkyloxy-Gruppe.

6. Wärmehärtbares Harz nach Anspruch 1, wobei:

- $Z^1$ und $Z^2$ Wasserstoffatome sind,
- Z $CH_2$ ist;
- p 0 oder 1 ist, vorzugsweise 0, und
- $R^1$ und $R^3$ bilden zusammen mit den Kohlenstoffatomen, an die sie gebunden sind, ein 5-gliedriges cyclisches Anhydrid oder cyclisches Dicarboxyimid oder
- einer oder zwei von $R^1$ bis $R^4$, vorzugsweise $R^1$, $R^3$, $R^1$ und $R^2$, oder $R^1$ und $R^3$, sind unabhängig voneinander:

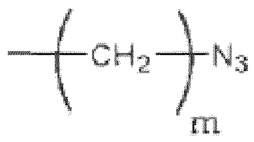
,

$-(CH_2)_n-YH$, wobei Y S oder O ist, vorzugsweise O, und n vorzugsweise 0 oder 1 ist,
$-(CH_2)_n-COOR^8$ oder $-(CH_2)_n-O-R^8$, wobei n vorzugsweise 0 oder 1 ist, und $R^8$ (vorzugsweise $C_{1-6}$-) Alkyl oder $-CH_2-CHOH-CH_2OH$ ist,

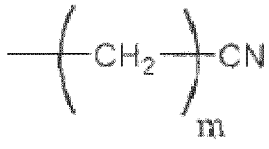
,

$-(CH_2)_n-NHR^8$, wobei $R^8$ lineares und verzweigtes (vorzugsweise $C_{1-20}$-) Alkyl, (vorzugsweise $C_{1-12}$-) Aryl oder (vorzugsweise $C_{7-15}$-) Aralkyl,

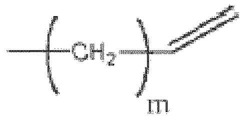
,

wobei m vorzugsweise 1 ist,

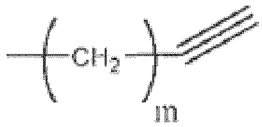
,

wobei m vorzugsweise 1 ist,

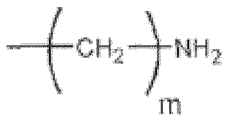
,

wobei m vorzugsweise 1 ist,
$-(CH_2)_n-COOH$, wobei n 0 ist,
$-OR^8$, wobei $R^8$ (vorzugsweise $C_{1-6}$-)Alkyl, vorzugsweise Methyl, ist,

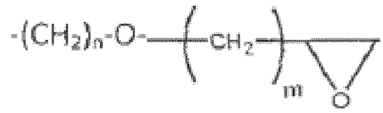
,

wobei n vorzugsweise 0 oder 1 ist und m vorzugsweise 1 ist,

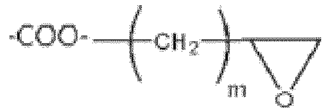
,

wobei m vorzugsweise 1 ist, oder

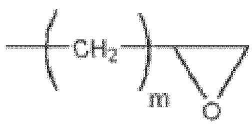
,

wobei m vorzugsweise 0 ist.

**7.** Wärmehärtbares Harz nach einem der Ansprüche 1 bis 6, wobei die funktionellen Gruppen E und die funktionellen Gruppen F wie folgt sind:

| Funktionelle Gruppe F | Funktionelle Gruppe E |
|---|---|
| Oxiran | -OH,<br>-SH,<br>$-NH_2$,<br>-NHR und/oder<br>-COOH |
| Anhydrid | -OH,<br>-SH,<br>$-NH_2$,<br>-NHR und/oder<br>-COOH |
| $-NH_2$ und/oder -NHR | Oxiran,<br>-COOH,<br>Isocyanat,<br>ungesättigte Carbonylgruppe,<br>Ester und/oder<br>Anhydrid |
| -COOH | -OH,<br>Oxiran,<br>-SH,<br>$-NH_2$ und/oder<br>-NHR |
| -SH | -COOH,<br>Isocyanat,<br>Ester,<br>Anhydrid und/oder<br>Doppelbindung (C=C) |
| Ester | -OH,<br>-SH,<br>$-NH_2$ und/oder<br>-NHR |
| -OH | -COOH,<br>Oxiran,<br>Anhydrid,<br>Isocyanat und/oder<br>Ester |
| Isocyanat | -OH,<br>-Ester,<br>$-NH_2$ und/oder<br>-NHR |
| Azid | terminales Alkin |
| Halogen | -OH,<br>-SH,<br>$-NH_2$ und/oder<br>-NHR |
| Doppelbindung (C=C) | -SH,<br>Doppelbindung (C=C) |
| Dreifachbindung (C≡C) | Azid |

wobei R ein lineares oder verzweigtes Alkyl ist.

**8.** Wärmehärtbares Harz nach einem der Ansprüche 1 bis 7, wobei eine der funktionellen Gruppen E und F Oxiran und die andere eine funktionelle Gruppe ist, die mit Oxiran-funktionellen Gruppenreagiert, und wobei die funktionelle Gruppe, die mit Oxiran-funktionellen Gruppen reagiert, -OH, -SH, $-NH_2$, -NHR oder -COOH ist.

**9.** Wärmehärtbares Harz nach einem der Ansprüche 1 bis 7, wobei die reaktive Verbindung mindestens zwei Oxiran-funktionelle Gruppen pro Molekül umfasst und der Härter ein Insertionspolynorbornen ist, das mindestens zwei funktionelle Gruppen umfasst, die mit Oxiran-funktionellen Gruppen pro Kette reagieren.

**10.** Wärmehärtbares Harz nach Anspruch 9, wobei die funktionellen Gruppen, die mit Oxiran-funktionellen Gruppen reagieren -OH, -SH, $-NH_2$, -NHR oder -COOH sind.

**11.** Wärmehärtbares Harz nach Anspruch 9 oder 10, wobei das Insertionspolynorbornen eine oder mehrere der folgenden Wiederholungseinheiten umfasst:

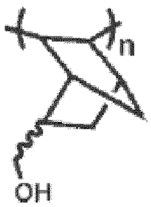 , 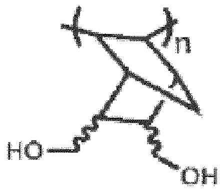 , 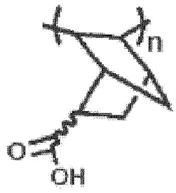 , 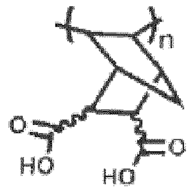 , 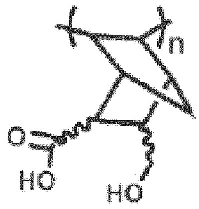 ,

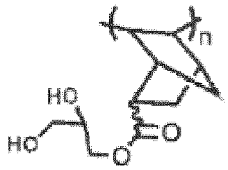 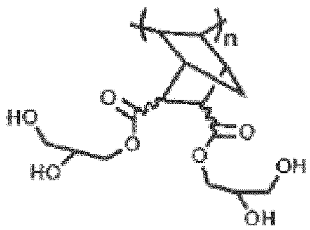 , 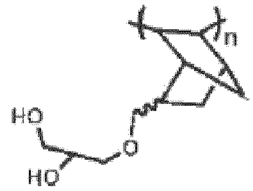 ,

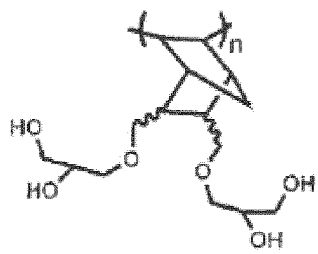 , 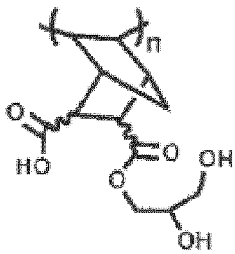 , 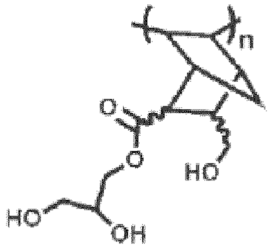 , 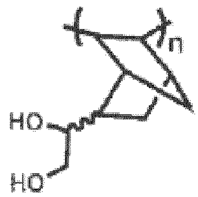

, 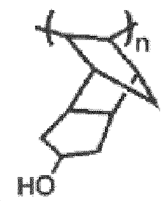 , 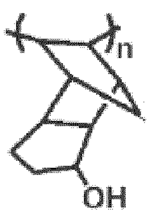 , 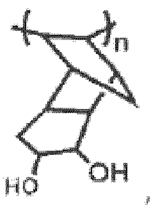 , 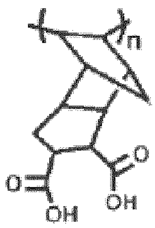 , 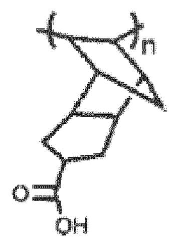 , 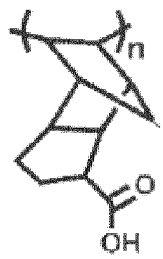 ,

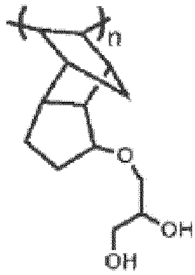,
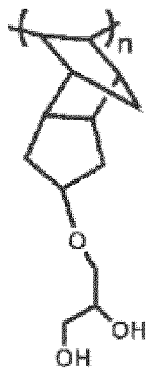,
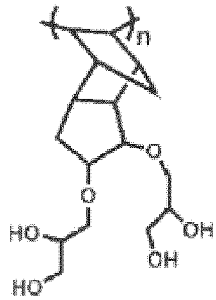,
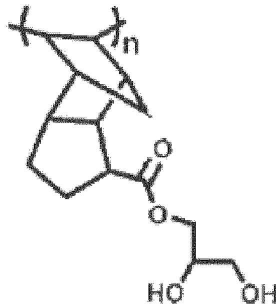,

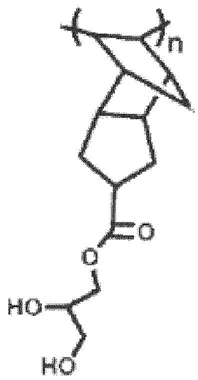,
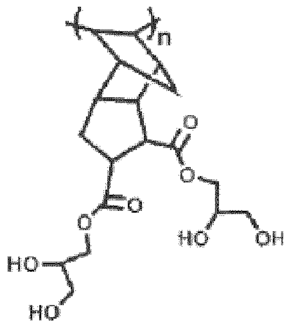,
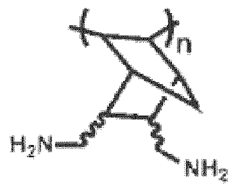,
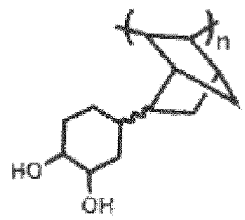,

und

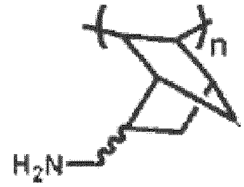.

**12.** Wärmehärtbares Harz nach einem der Ansprüche 9 bis 11, wobei die reaktive Verbindung ist:

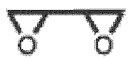,
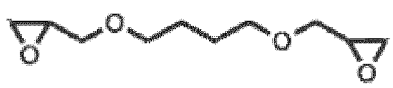,
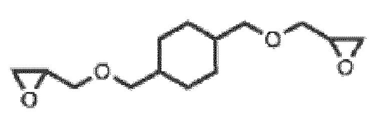,

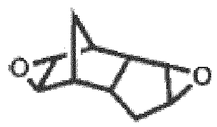,
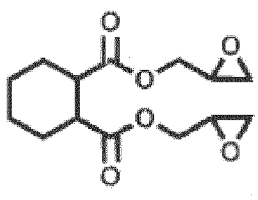,
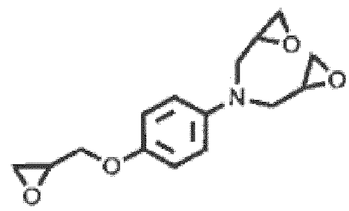,

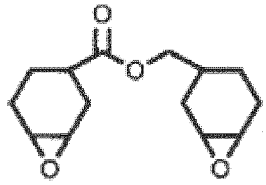 , 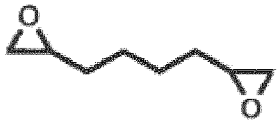 , 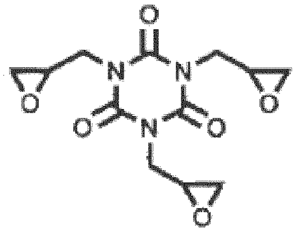 ,

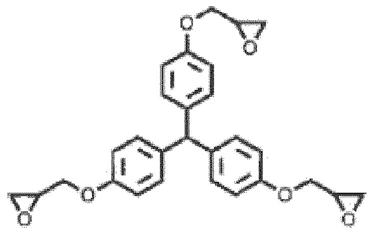 , 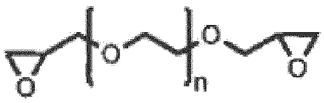 ,

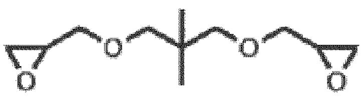 , 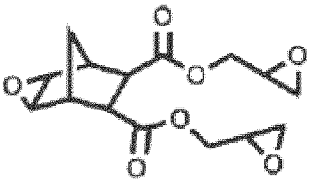 , 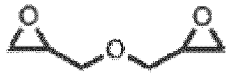 ,

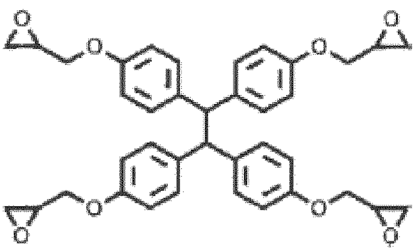 , 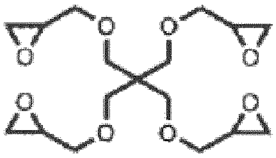 ,

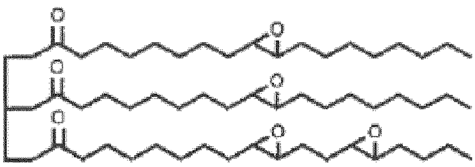 , 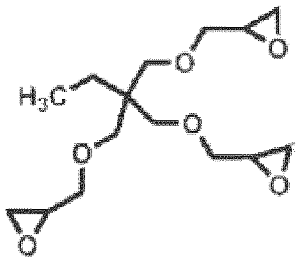 , 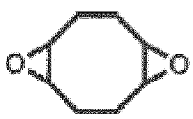 ,

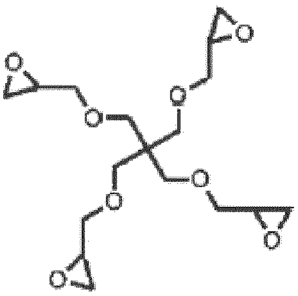 , 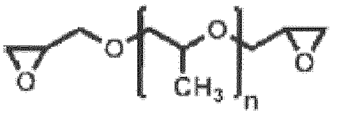 , 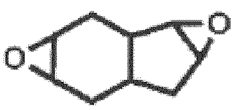 ,

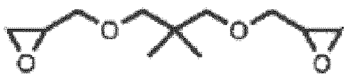,
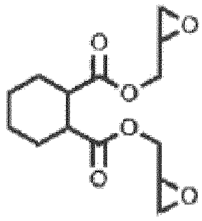,
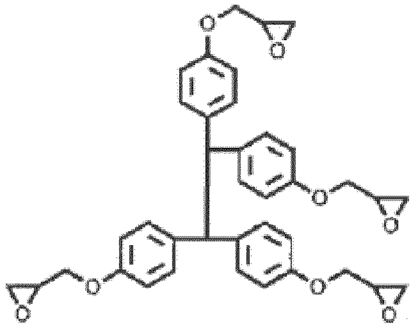,

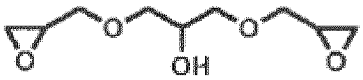,
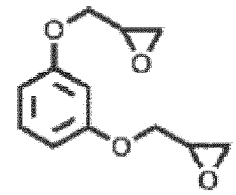,
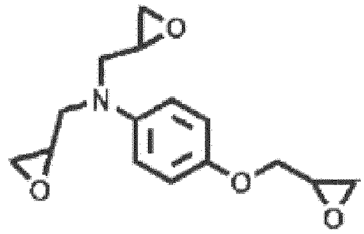,

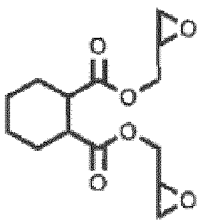.
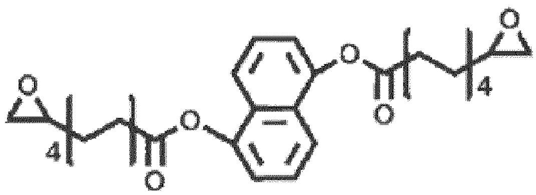

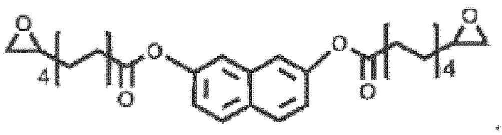.
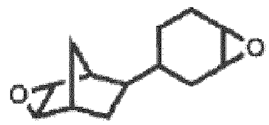.

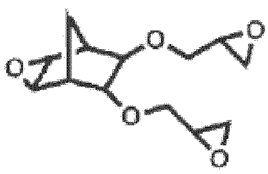,
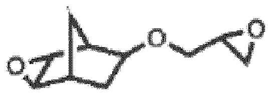,

und

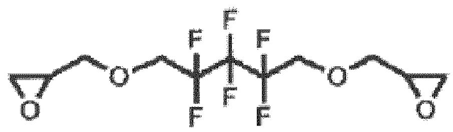.

13. Wärmehärtbares Harz nach einem der Ansprüche 1 bis 12, wobei die reaktive Verbindung und der Härter als ungehärtetes Gemisch bereitgestellt werden.

14. Wärmehärtbares Harz nach einem der Ansprüche 1 bis 12, wobei das wärmehärtbare Harz ausgehärtet wird, und die reaktive Verbindung und der Härter miteinander kreuzvernetzen.

15. Wärmehärtbares Harz nach Anspruch 13, wobei das wärmehärtbare Harz einen Tg aufweist, der in einem Bereich

von etwa 100°C und etwa 400°C, vorzugsweise zwischen etwa 150°C und etwa 350°C, und am meisten bevorzugt über etwa 200°C liegt, gemessen wie in der Beschreibung angegeben.

## Revendications

**1.** Résine thermodurcie comprenant :

- au moins un composé réactif portant au moins deux groupes fonctionnels F, identiques ou différents l'un de l'autre, par molécule,
- au moins un durcisseur portant au moins deux groupes fonctionnels E, identiques ou différents l'un de l'autre, par molécule, lesdits groupes fonctionnels E étant aptes à réagir avec les groupes fonctionnels F pour former une réticulation, et
- facultativement un catalyseur,

dans laquelle le composé réactif est une petite molécule ou un polymère qui n'est pas un polynorbornène d'insertion et le durcisseur est un polynorbornène d'insertion comprenant lesdits au moins deux groupes fonctionnels E, dans laquelle le polynorbornène d'insertion est un homopolymère ou un copolymère comprenant des motifs répétitifs de formule 3 et/ou de formule 4 :

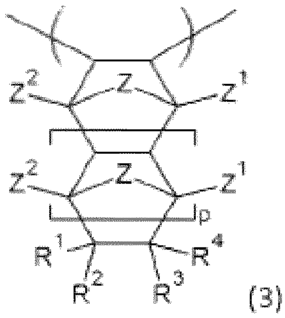

(3) ,

et

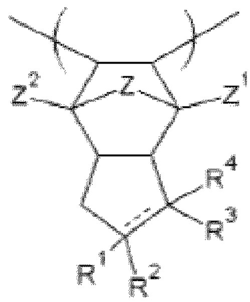

(4) ,

dans laquelle :

◦ $Z^1$ et $Z^2$ sont indépendamment un atome d'hydrogène ou un atome d'halogène, de préférence un atome d'hydrogène ;
◦ Z est $CR^5R^6$, O, NH, ou $NR^7$, de préférence $CR^5R^6$ ;
◦ $R^1$, $R^2$, $R^3$ et $R^4$ sont indépendamment un atome d'hydrogène ou un substituant fonctionnel, à condition qu'au moins l'un des $R^1$ à $R^4$ soit un substituant fonctionnel ;
◦ $R^5$ et $R^6$ sont indépendamment un atome d'hydrogène, un alkyle (de préférence alkyle en $C_{1 \text{ à } 6}$, tel que méthyle, éthyle, n-propyle, isopropyle, n-butyle, isobutyle, et pentyle), un atome d'halogène, ou un groupe alkyle (de préférence en $C_{1 \text{ à } 6}$) substitué par un groupe OH, de préférence un atome d'hydrogène ;
◦ $R^7$ est un atome d'hydrogène ou un alkyle (de préférence alkyle en $C_{1 \text{ à } 6}$, tel que méthyle, éthyle, n-propyle, isopropyle, n-butyle, isobutyle, et pentyle), de préférence un atome d'hydrogène ; et

- p varie de 0 à 10, de préférence de 0 ou 1, de manière davantage préférée de 0,

dans laquelle un ou plusieurs des $R^1$ à $R^4$ est indépendamment :

- $-R^8$,
- $-(CH_2)_n-YH$,
- $-(CH_2)_n-COOH$, dans laquelle n vaut 0, à condition que $Z^1$ et $Z^2$ soient des atomes d'hydrogène, Z soit $CH_2$, et p vaille 0 ou 1, de préférence 0,
- $-(CH_2)_n-C(Y)-YR^8$,
- $-(CH_2)_n-YR^8$,
- $-(CH_2)_n-YC(Y)R^8$,
- $-(CH_2)_n-YC(Y)-YR^8$,
- $-(CH_2)_n-C(Y)R^8$,
- $-(CH_2)_n-Y-(CH_2)_n-YH$,
- $-(CH_2)_nYR^8$, ou
- $-(CH_2)_n-NHR^8$,

dans laquelle :

- Y est O, S ou Se, de préférence S ou O, de préférence O,
- n est un entier de 0 à 20, de préférence de 0 à 5, de préférence 1 ou 2, et
- $R^8$ est : un alkyle linéaire et ramifié (de préférence en $C_{1\ à\ 20}$, de manière davantage préférée en $C_{1\ à\ 10}$), un aryle (de préférence en $C_{6\ à\ 12}$), un alkyle linéaire et ramifié (de préférence en $C_1$ à $_6$) substitué par un ou deux -OH, de préférence deux -OH, de préférence $-CH_2-CHOH-CH_2OH$, un aralkyle (de préférence en $C_{7\ à\ 15}$),

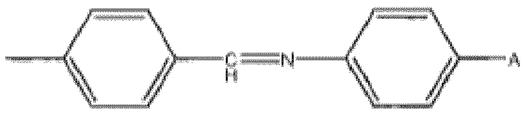 , 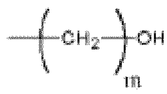 ,

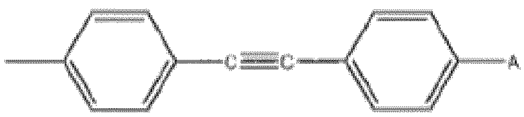 , 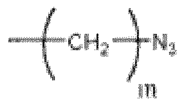 ,

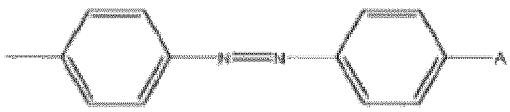 , 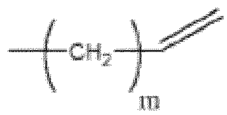 ,

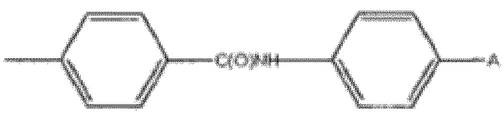 , 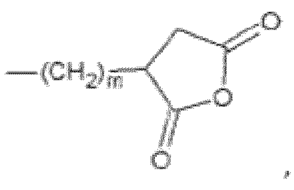 ,

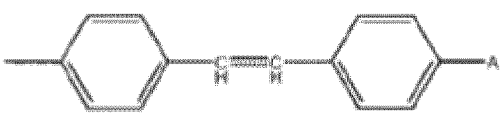 , 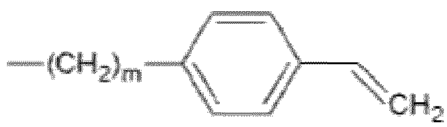 ,

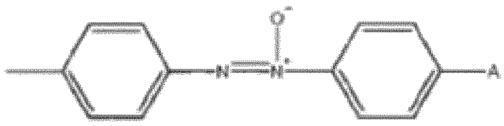,

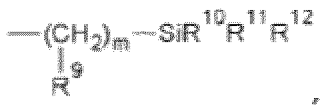,

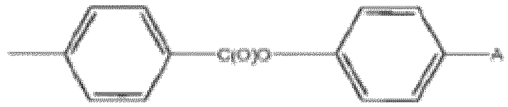,

$-(CH_2)_m-SiR^{10}R^{11}R^{12}$,

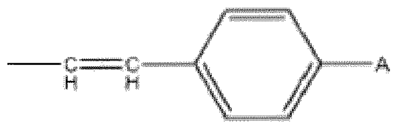,

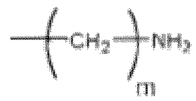,

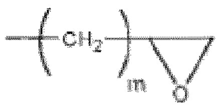,

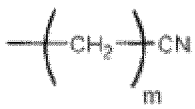,

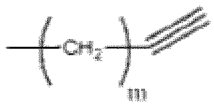,

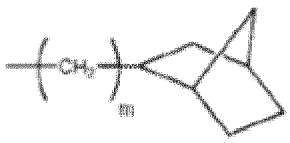,

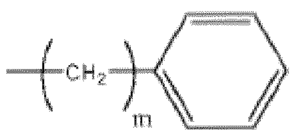,

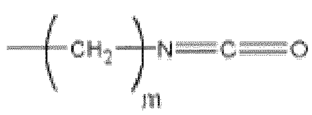,

ou

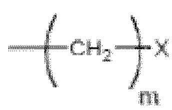,

dans laquelle :

A est hydrogène, $C_{z'}H_{2z'+1}$, $C_{z'}H_{2z'+1}O$, $C_{z'}H_{2z'+1}OC(O)$, ou -CN, dans laquelle z' est un entier de 1 à 12 ;
X est F, Cl, ou Br ;
m est un entier de 0 à 10 ;
$R^9$ est hydrogène, méthyle, ou éthyle ; et
$R^{10}$, $R^{11}$, et $R^{12}$ représentent indépendamment brome, chlore, fluor, iode, alkyle linéaire ou ramifié (de préférence en $C_{1\text{ à }20}$), alcoxy linéaire ou ramifié (de préférence en $C_{1\text{ à }20}$), alkyl carbonyloxy linéaire ou ramifié (de préférence en $C_{1\text{ à }20}$) (par exemple acétoxy), alkyl peroxy linéaire ou ramifié (de préférence en $C_{1\text{ à }20}$) (par exemple t-butyle peroxy), ou aryloxy substitué ou non substitué (de préférence en $C_{6\text{ à }20}$).

**2.** Résine thermodurcie selon la revendication 1, dans laquelle $R^1$ et $R^2$ et/ou $R^3$ et $R^4$ forment ensemble un groupe alkylidényle (de préférence en $C_1$ à $_{10}$).

**3.** Résine thermodurcie selon la revendication 1, dans laquelle $R^1$ et $R^3$ conjointement avec les deux atomes de carbone auxquels ils sont attachés forment un cycle hydrocarboné saturé de 4 à 8 atomes de carbone ou un cycle oxirane.

**4.** Résine thermodurcie selon la revendication 1, dans laquelle $R^1$ et $R^3$ conjointement avec les atomes de carbone auxquels ils sont attachés forment un anhydride cyclique ou un dicarboxyimide cyclique.

**5.** Résine thermodurcie selon l'une quelconque des revendications 1 à 4, dans laquelle un ou plusieurs de $R^1$ à $R^4$ est indépendamment hydroxy, hydroxyalkyle, alcoxy, alcoxyalkyle, carboxy, alcoxycarbonyle, alkylcarbonyloxy, alcoxycarbonyloxy, alkylcarbonyle, ou un méthylène ou une fraction linéaire polyméthylène terminée par un groupe alkoxycarbonyl-, alkylcarbonyloxy-, alcoxycarbonyloxy-, alkylcarbonyl-, ou hydroxyalkyloxy-.

**6.** Résine thermodurcie selon la revendication 1, dans laquelle :

- $Z^1$ et $Z^2$ sont des atomes d'hydrogène,
- Z est $CH_2$ ;
- p vaut 0 ou 1, de préférence 0, et
- $R^1$ et $R^3$ conjointement avec les atomes de carbone auxquels ils sont attachés forment un anhydride cyclique à 5 chaînons ou un dicarboxyimide cyclique, ou
- un ou deux des $R^1$ à $R^4$, de préférence $R^1$, $R^3$, $R^1$ et $R^2$, ou $R^1$ et $R^3$, sont indépendamment

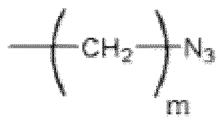

,

$-(CH_2)_n$-YH, dans lequel Y est S ou O, de préférence O, et n vaut de préférence 0 ou 1,
$-(CH_2)_n-COOR^8$ ou $-(CH_2)_n-O-R^8$, dans laquelle n vaut de préférence 0 ou 1, et $R^8$ est un alkyle (de préférence en $C_{1\ à\ 6}$) ou $-CH_2-CHOH-CH_2OH$,

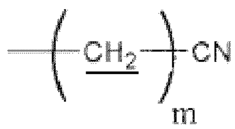

,

$-(CH_2)_n-NHR^8$, dans laquelle $R^8$ est alkyle linéaire ou ramifié (de préférence en $C_1$ à $_{20}$), aryle (de préférence en $C_{6\ à\ 12}$), ou aralkyle (de préférence en $C_{7\ à\ 15}$),

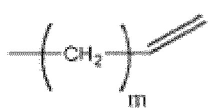

,

dans laquelle m vaut de préférence 1,

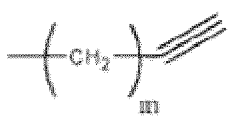

,

dans laquelle m vaut de préférence 1,

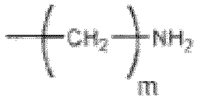

,

dans laquelle m vaut de préférence 1,
$-(CH_2)_n-COOH$, dans laquelle n vaut 0,
$-OR^8$, dans laquelle $R^8$ est un alkyle (de préférence en $C_{1 \text{ à } 6}$), de préférence méthyle,

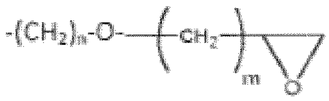

,

dans laquelle n vaut de préférence 0 ou 1, et m vaut de préférence 1,

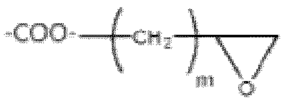

,

dans laquelle m vaut de préférence 1 ou

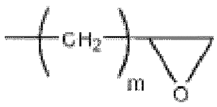

,

dans laquelle m vaut de préférence 0.

**7.** Résine thermodurcie selon l'une quelconque des revendications 1 à 6, dans laquelle lesdits groupes fonctionnels E et lesdits groupes fonctionnels F sont comme suit :

| Groupe fonctionnel F | Groupe fonctionnel E |
|---|---|
| Oxirane | -OH,<br>-SH,<br>$-NH_2$,<br>-NHR, et/ou<br>-COOH |
| Anhydride | -OH,<br>-SH,<br>$-NH_2$,<br>-NHR, et/ou<br>-COOH |
| $-NH_2$, et/ou -NHR | Oxirane,<br>-COOH,<br>Isocyanate,<br>Groupe carbonyle insaturé,<br>Ester, et/ou<br>Anhydride |

(suite)

| Groupe fonctionnel F | Groupe fonctionnel E |
|---|---|
| -COOH | -OH,<br>Oxirane,<br>-SH,<br>$-NH_2$, et/ou<br>-NHR |
| -SH | -COOH,<br>Isocyanate,<br>Ester,<br>Anhydride, et/ou<br>Double liaison (C=C) |
| Ester | -OH,<br>-SH,<br>$-NH_2$, et/ou<br>-NHR |
| -OH | -COOH,<br>Oxirane,<br>Anhydride,<br>Isocyanate, et/ou<br>Ester |
| Isocyanate | -OH,<br>Ester,<br>$-NH_2$, et/ou<br>-NHR |
| Azide | Alcyne terminal |
| Halogène | -OH,<br>-SH,<br>$-NH_2$, et/ou<br>-NHR |
| Double liaison (C=C) | -SH,<br>Double liaison (C=C) |
| Triple liaison (C≡C) | Azide |

dans laquelle R est un alkyle linéaire ou ramifié.

**8.** Résine thermodurcie selon l'une quelconque des revendications 1 à 7, dans laquelle l'un des groupes fonctionnels E et F est un oxirane et l'autre est un groupe fonctionnel qui réagit avec des groupes fonctionnels oxirane, et dans laquelle le groupe fonctionnel qui réagit avec des groupes fonctionnels oxirane est -OH, -SH, $-NH_2$, -NHR ou -COOH.

**9.** Résine thermodurcie selon l'une quelconque des revendications 1 à 7, dans laquelle le composé réactif comprend au moins deux groupes fonctionnels oxirane par molécule et le durcisseur est un polynorbornène d'insertion comprenant au moins deux groupes fonctionnels qui réagissent avec des groupes fonctionnels oxirane par chaîne.

**10.** Résine thermodurcie selon la revendication 9, dans laquelle les groupes fonctionnels qui réagissent avec des groupes fonctionnels oxirane sont -OH, -SH, $-NH_2$, -NHR ou-COOH.

**11.** Résine thermodurcie selon la revendication 9 ou 10, dans laquelle le polynorbornène d'insertion comprend un ou plusieurs des motifs répétés suivants :

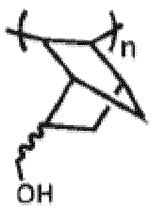, 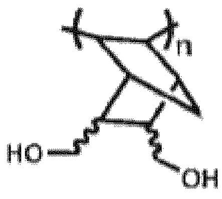, 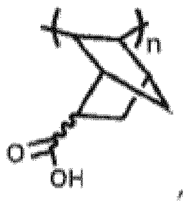, 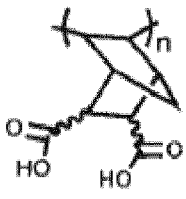, 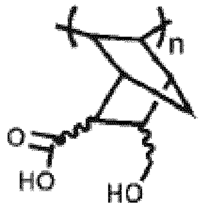,

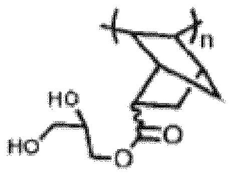 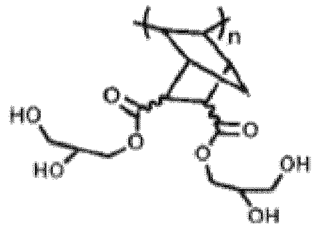, 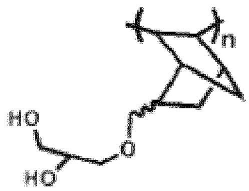,

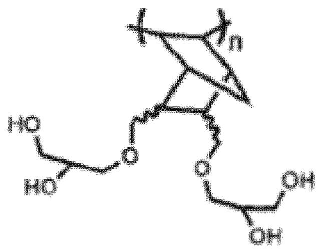, 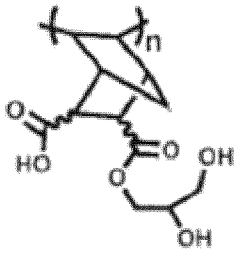, 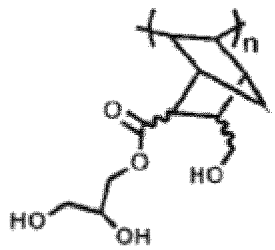, 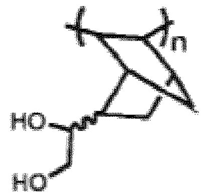

, 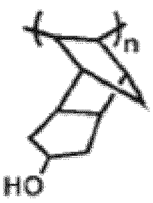, 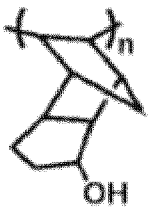, 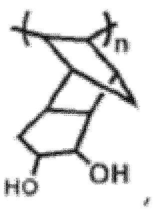, 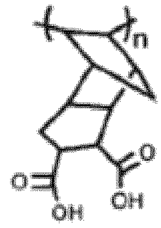, 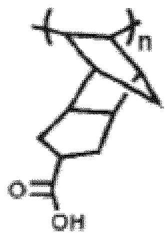, 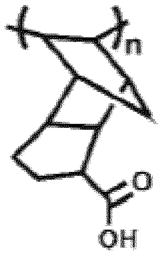,

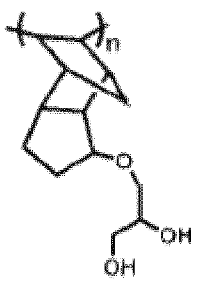, 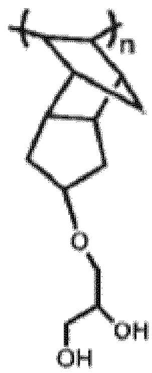, 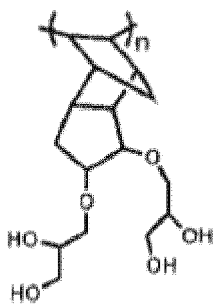, 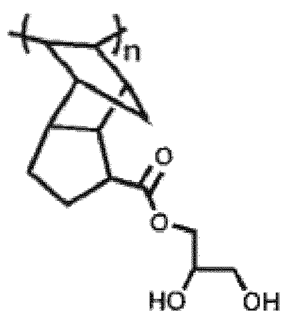,

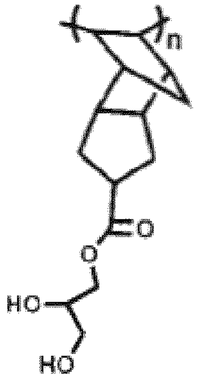, 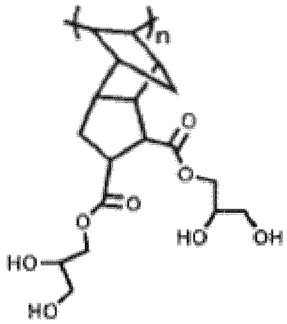, 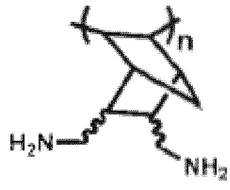, 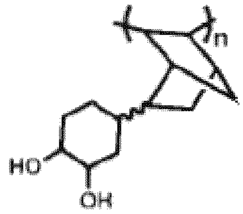,

et

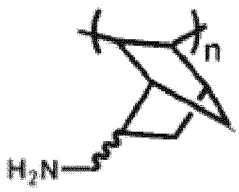.

12. Résine thermodurcie selon l'une quelconque des revendications 9 à 11, dans laquelle le composé réactif est :

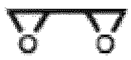, 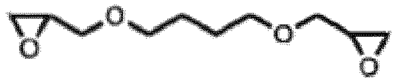, 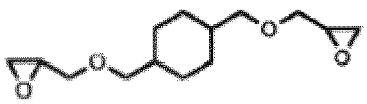,

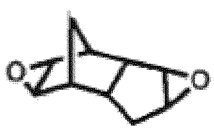, 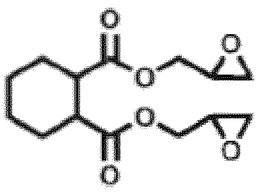, 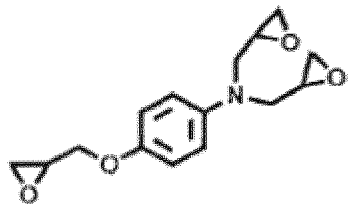,

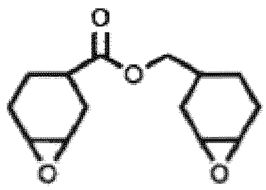, 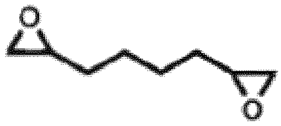, 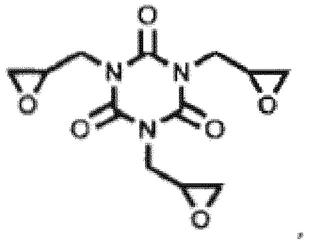,

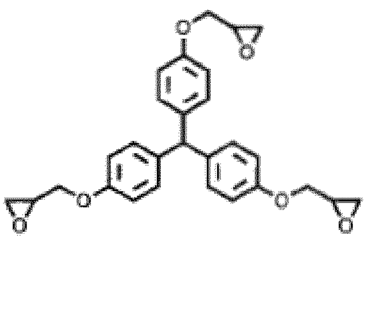, 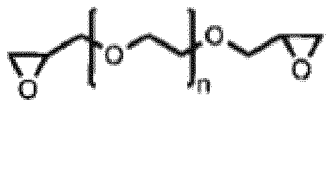,

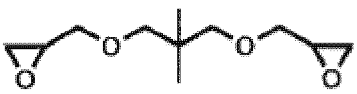,

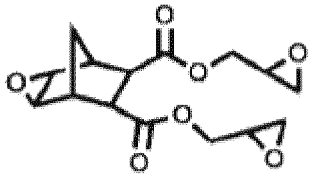,

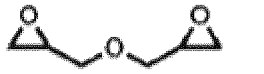,

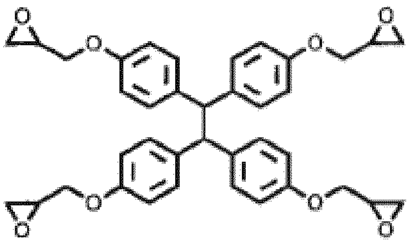,

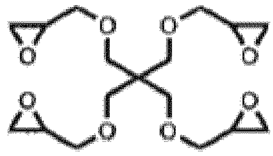,

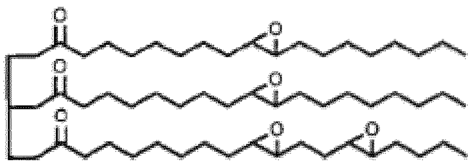,

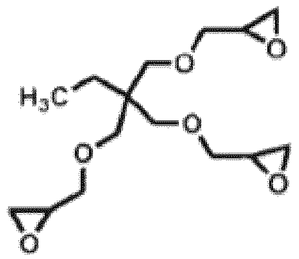,

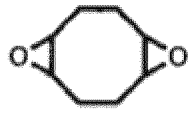,

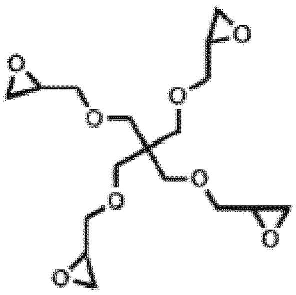,

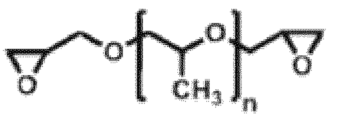,

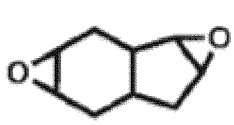,

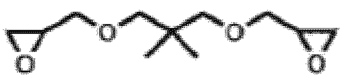,

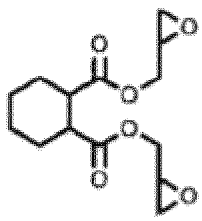,

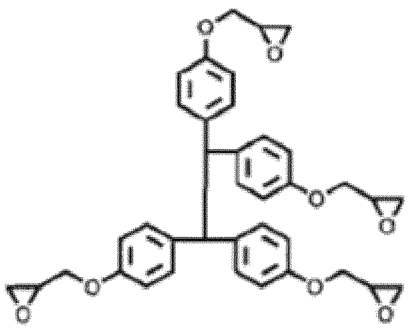,

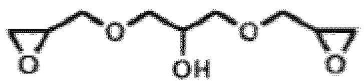,
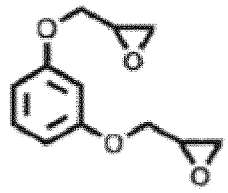,
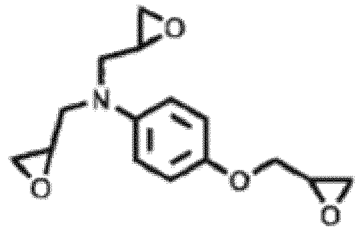,

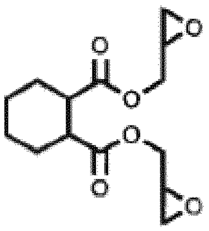,
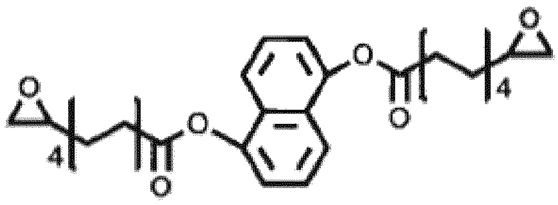

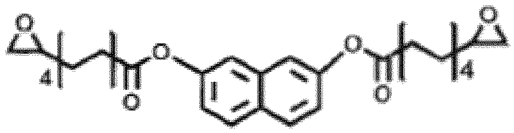,
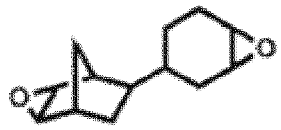,

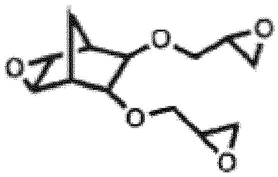,
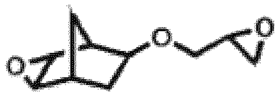,

et

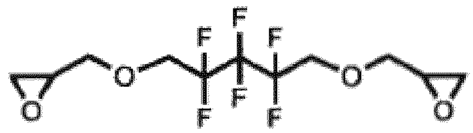.

13. Résine thermodurcie selon l'une quelconque des revendications 1 à 12, dans laquelle le composé réactif et le durcisseur sont fournis sous forme de mélange non vulcanisé.

14. Résine thermodurcie selon l'une quelconque des revendications 1 à 12, dans laquelle la résine thermodurcie est vulcanisée, le composé réactif et le durcisseur sont réticulés ensemble.

15. Résine thermodurcie selon la revendication 13, dans laquelle la résine thermodurcie a une Tg variant entre environ 100 °C et environ 400 °C, de préférence entre environ 150 °C et environ 350 °C, et de manière préférée entre toutes au-dessus d'environ 200 °C, mesuré comme indiqué dans la description.

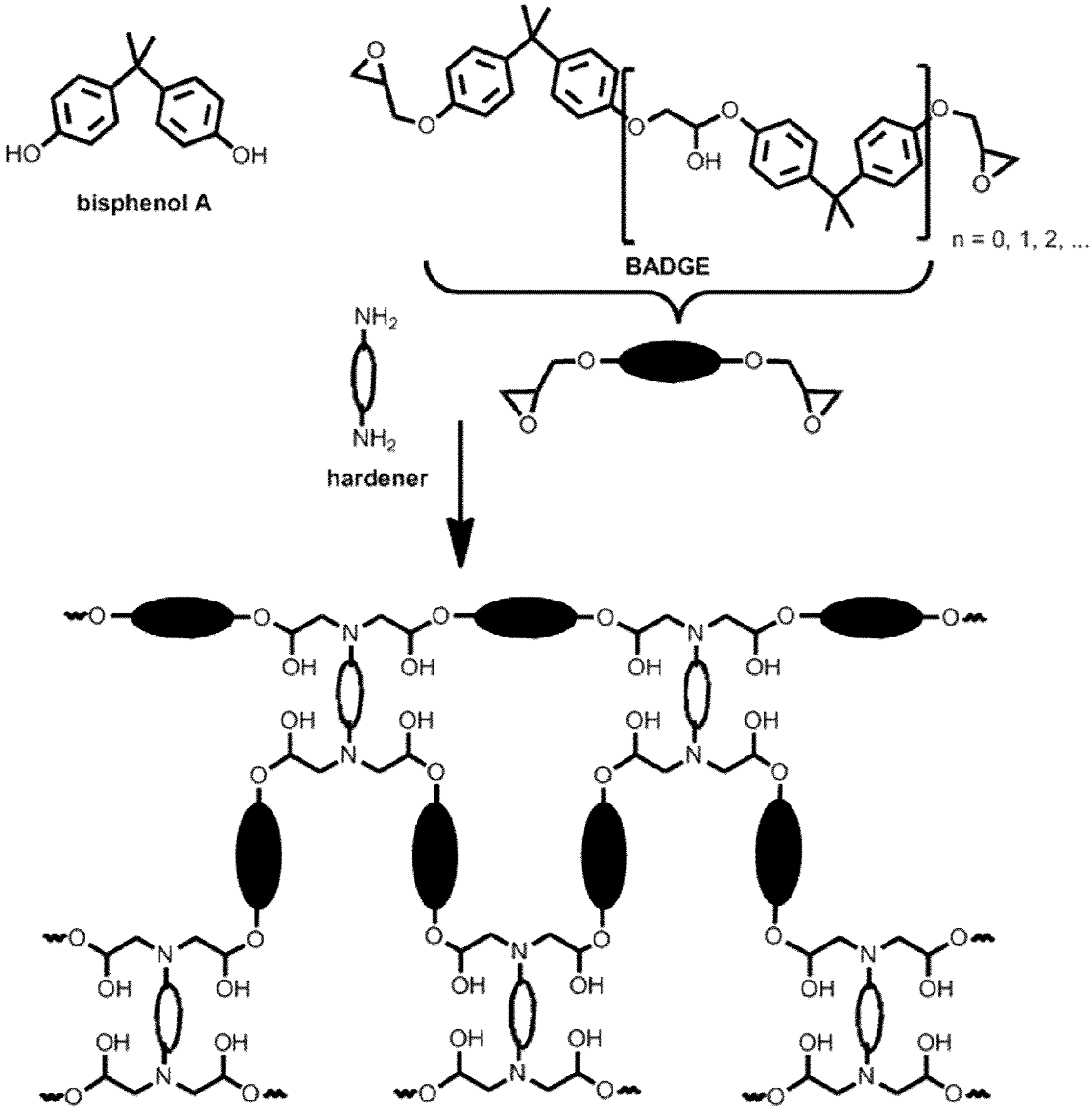


Figure 1 - PRIOR ART

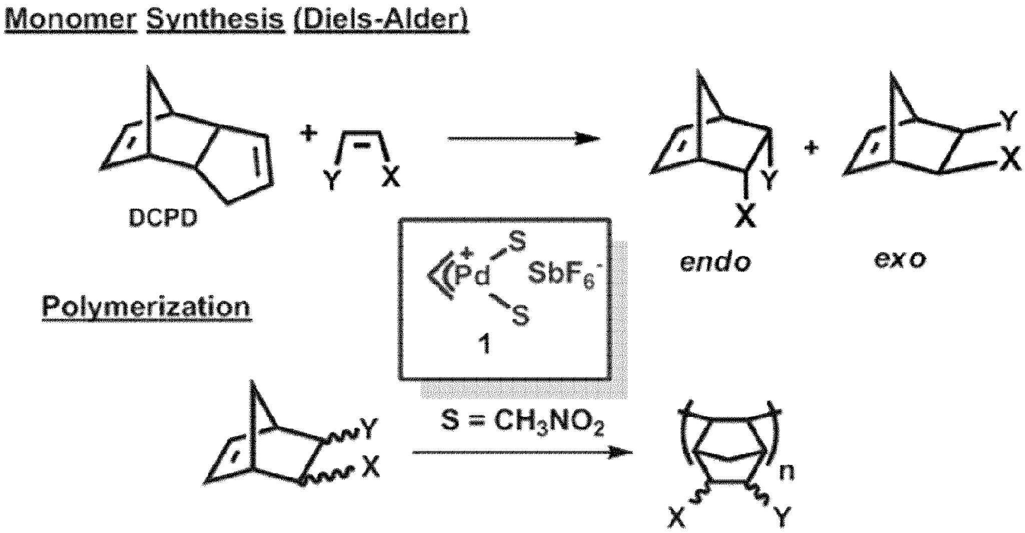
Monomer Synthesis (Diels-Alder)
DCPD
endo
exo
Polymerization
1
S = $CH_3NO_2$

Figure 2

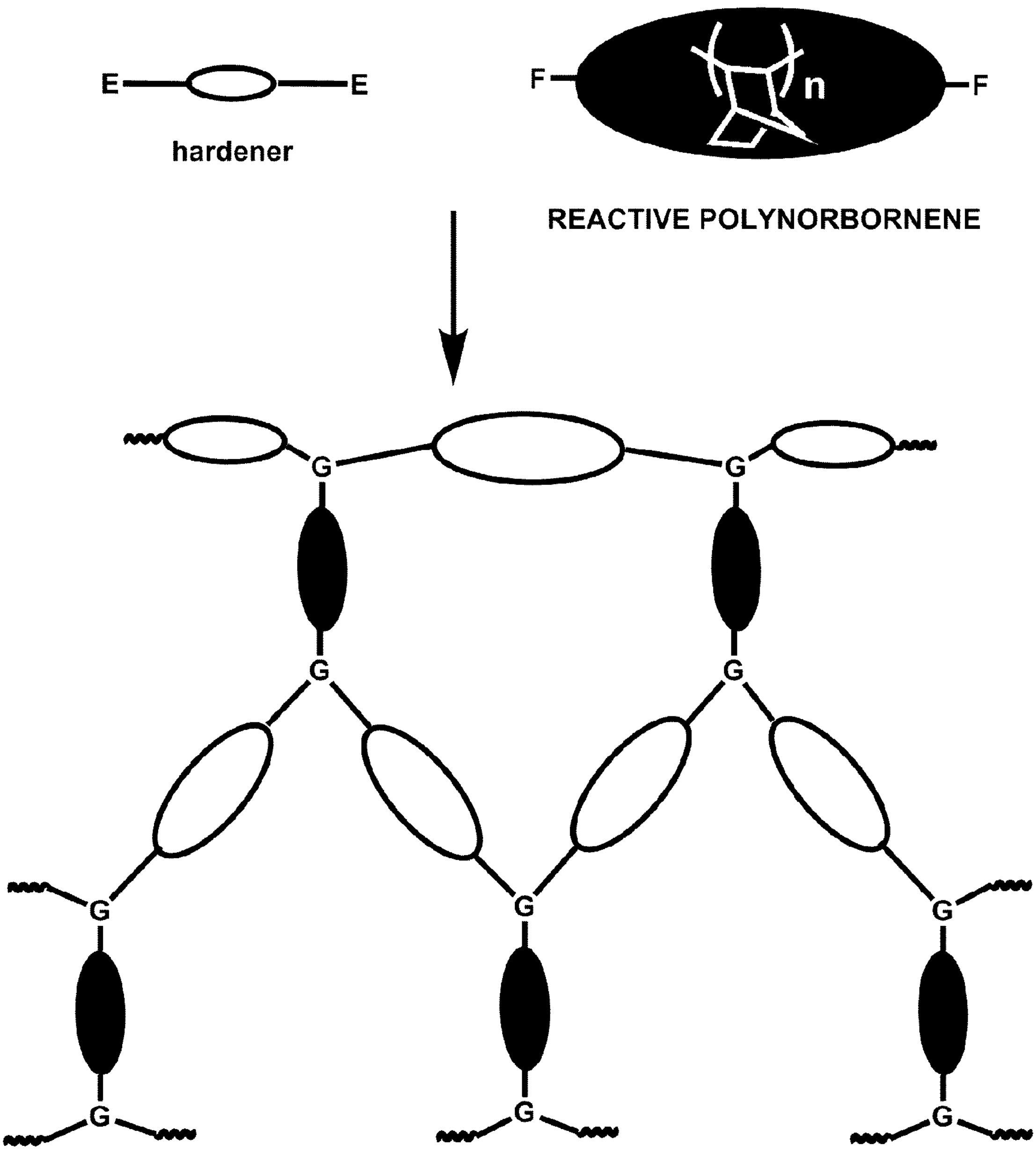


Figure 3

MODE A

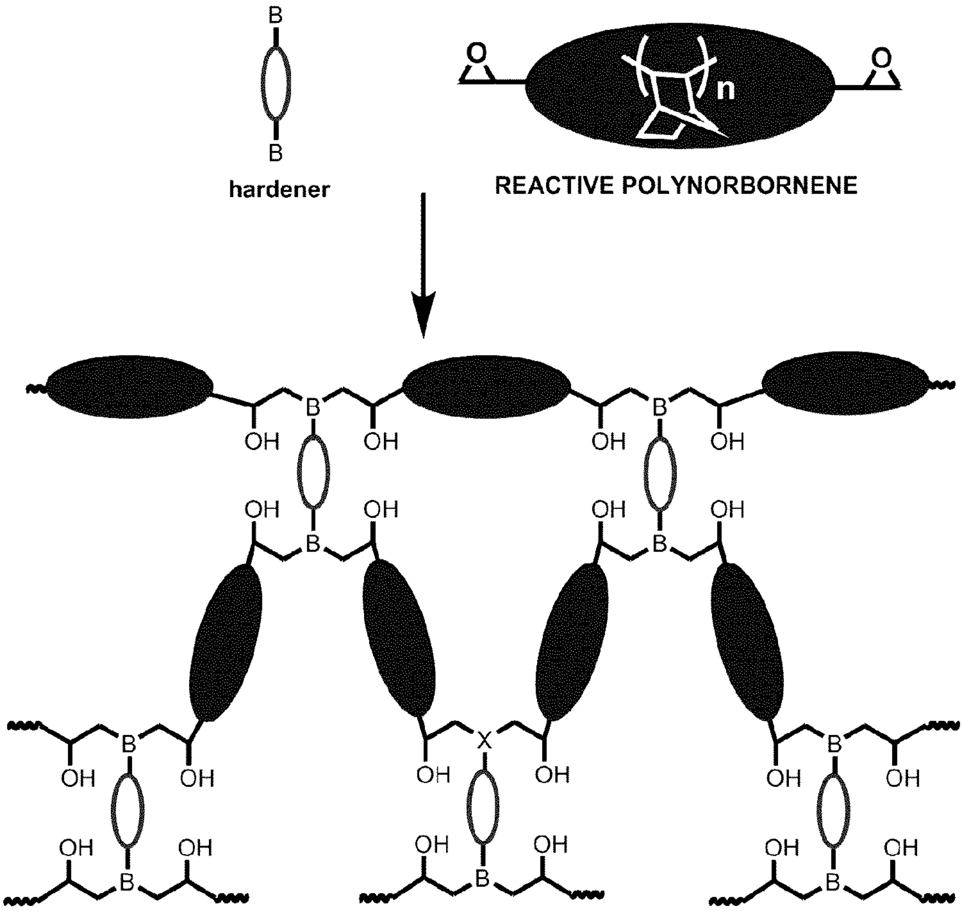

hardener

REACTIVE POLYNORBORNENE

Figure 4

MODE B

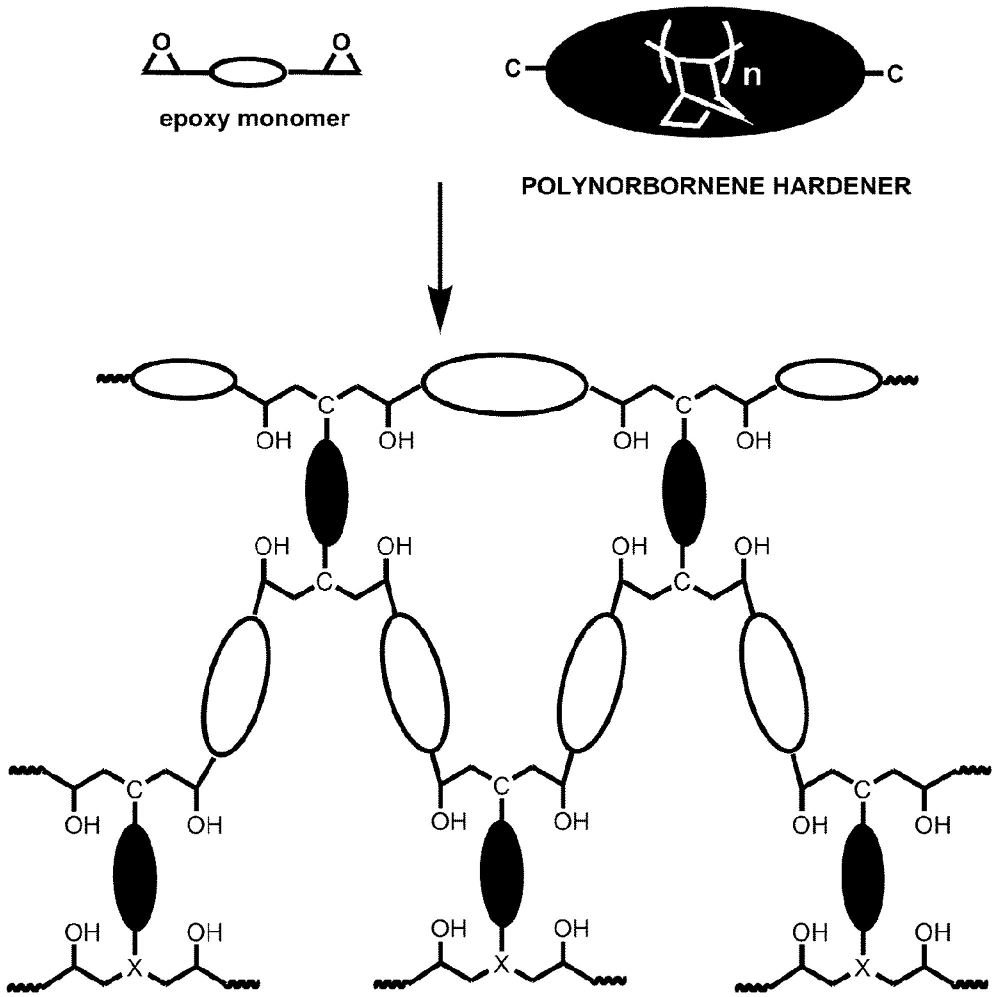


Figure 5

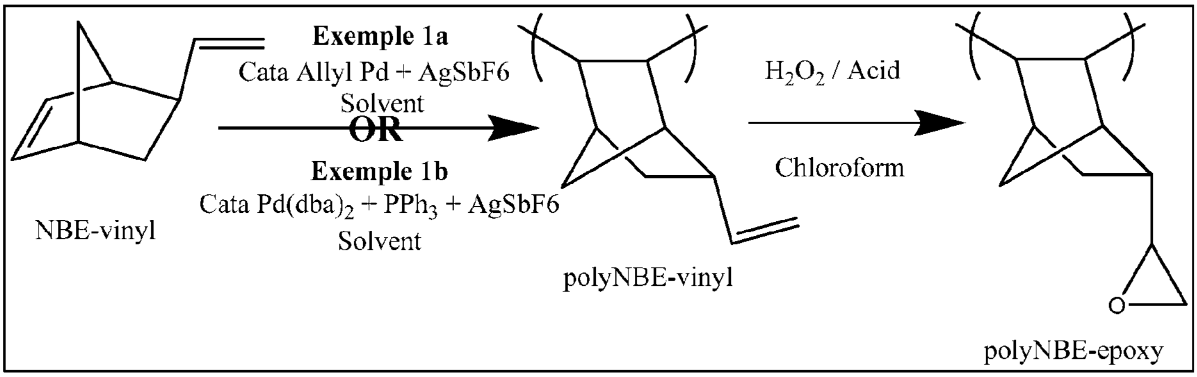


Figure 6

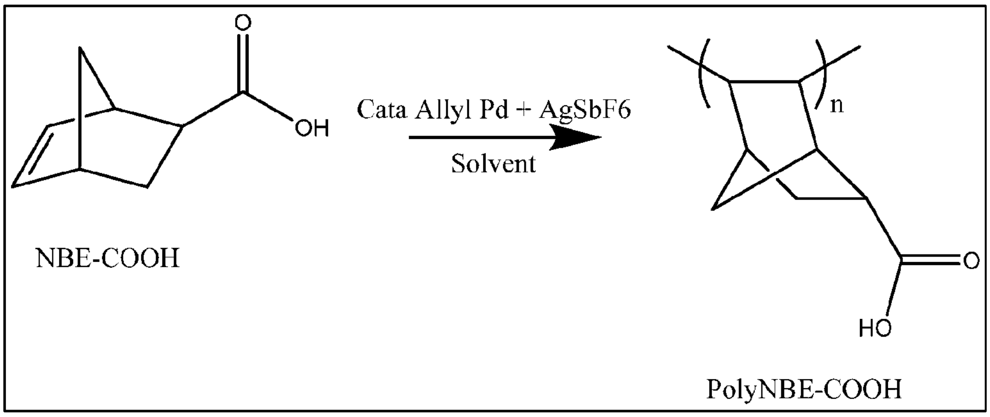


Figure 7

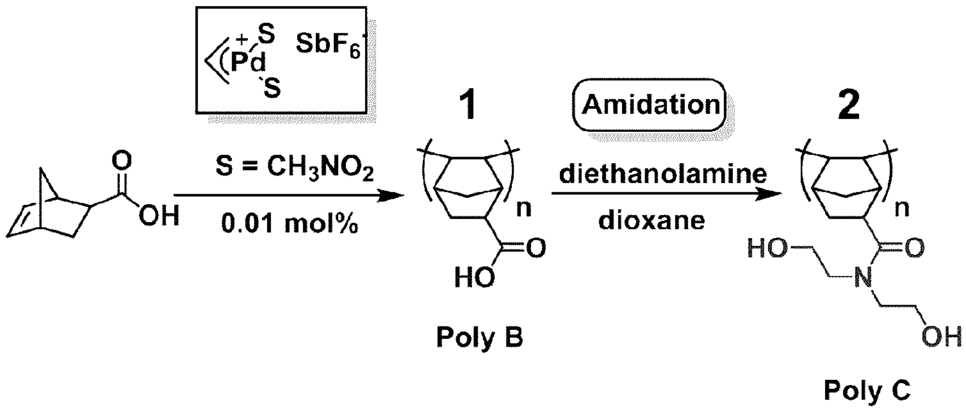


Figure 8

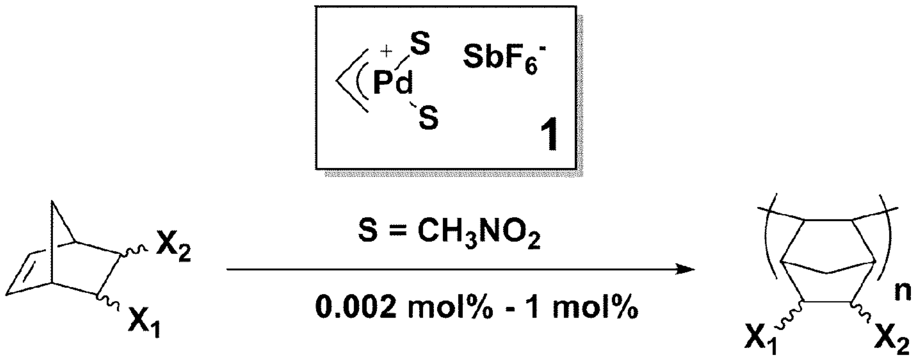


| monomer | $X_1$ | $X_2$ |
|---|---|---|
| NBE($CO_2Me$) | $CO_2Me$ | H |
| NBE($CO_2Me$)$_2$ | $CO_2Me$ | $CO_2Me$ |
| NBE($CO_2H$) | $CO_2H$ | H |
| NBE($CO_2H$)$_2$ | $CO_2H$ | $CO_2H$ |
| NBE($CH_2OH$) | $CH_2OH$ | H |
| NBE($CH_2Br$) | $CH_2Br$ | H |
| NBE(CHO) | CHO | H |

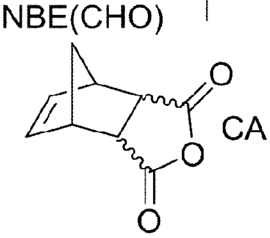
CA

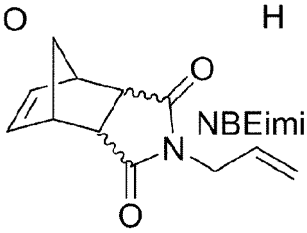
NBEimide

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61915577 A
- WO 9637526 A
- WO 2009089145 A
- WO 2012149340 A
- US 20030181607 A
- US 20100210803 A


### Non-patent literature cited in the description


- **MEHRSA RAEISZADEH.** *Patterning and Cross-linking of functionalized polynorbornene polylmers*
- **BOLAND ; WILHELM ; JAENICKE ; LOTHAR.** *Chemische Berichte,* 1978, vol. 111 (9), 3262-75
- **BOLAND, WILHELM ; JAENICKE ; LOTHAR.** *Chemische Berichte,* 1978, vol. 111 (9), 3262-75
- **I HAMERTON.** Recent Developments in Epoxy Resins. *Rapra Review Reports,* 1996, vol. 8 (7
- **JAILLET, F. ; DARROMAN, E. ; RATSIMIHETY, A. ; AUVERGNE, R. ; BOUTEVIN, B. ; CAILLOL, S.** New biobased epoxy materials from cardanol. *European Journal of Lipid Science and Technology,* 2013, vol. 8
- **MANTHEY, N. W. ; CARDONA, F. ; FRANCUCCI, G. ; ARAVINTHAN, T.** Thermo-mechanical properties of epoxidized hemp oil-based bioresins and biocomposites. *Journal of Reinforced Plastics and Composites,* 2013, vol. 32 (19), 1444-1456
- **BROCAS, A.-L. ; LLEVOT, A. ; MANTZARIDIS, C. ; CENDEJAS, G. ; AUVERGNE, R. ; CAILLOL, S. ; CARLOTTI, S. ; CRAMAIL, H.** Epoxidized rosin acids as co-precursors for epoxy resins. *Designed Monomers and Polymers,* 2014, vol. 17 (4), 301-310
- **SU et al.** *Journal of Applied Polymer Science,* 2000, vol. 78 (2), 446-451
- **AHMED, S. ; BIDSTRUP, S. A. ; KOHL, P. ; LUDOVICE, P.** Stereochemical structure-property relationships in polynorbornene from simulation. *Macromolecular Symposia,* 1998, vol. 133 (1), 1-10
- **BUONO, A. ; FAMULARI, A. ; MEILLE, S. V. ; RICCI, G. ; PORRI, L.** 2,3- exo -Disyndiotactic Polynorbornene: A Crystalline Polymer with Tubular Helical Molecular Structure. *Macromolecules,* 2011, vol. 44 (10), 3681-3684
- **BREUNIG ; RISSE.** *Makromol. Chern.,* 1992, vol. 193 (30), 2915-2927
- **BLANK, F. ; JANIAK, C.** Metal catalysts for the vinyl/addition polymerization of norbornene. *Coordination Chemistry Reviews,* 2009, vol. 253 (7-8), 827-861
- **LIU, B. ; LI, Y. ; SHIN, B.-G. ; YOON, D. Y. ; KIM, I. L. ; ZHANG, L. ; YAN, W.** *Journal of Polymer Science Part A: Polymer Chemistry,* 2007, vol. 45 (15), 3391-3399
- **SHIN, B.-G. ; JANG, M.-S. ; YOON, D. Y. ; HEITZ, W.** Vinyl-Type Polymerization of Norbornene Dicarboxylic Acid Dialkyl Esters. *Macromolecular Rapid Communications,* 2004, vol. 25, 6